Europäisches Patentamt

(19) European Patent Office

Office européen des brevets

(11) EP 0 880 246 A2

(12) EUROPEAN PATENT APPLICATION

(43) Date of publication:
25.11.1998 Bulletin 1998/48

(51) Int. Cl.⁶: H04H 1/00

(21) Application number: 98108809.9

(22) Date of filing: 14.05.1998

(84) Designated Contracting States:
AT BE CH CY DE DK ES FI FR GB GR IE IT LI LU
MC NL PT SE
Designated Extension States:
AL LT LV MK RO SI

(30) Priority: 15.05.1997 JP 125425/97
15.05.1997 JP 125426/97
16.01.1998 JP 6599/98

(71) Applicant:
Matsushita Electric Industrial Co., Ltd.
Kadoma-shi, Osaka 571-8501 (JP)

(72) Inventors:
• Matsumoto, Masaharu
Katano-shi, Osaka (JP)
• Katayama, Takashi
Katano-shi, Osaka (JP)
• Sueyoshi, Masahiro
Hirakata-shi, Osaka (JP)
• Miyasaka, Shuji
Neyagawa-shi, Osaka (JP)
• Fujita, Takeshi
Takatsuki-shi, Osaka (JP)
• Kawamura, Akihisa
Hirakata-shi, Osaka (JP)
• Ishito, Tsukuru
Ukyo-ku, Kyoto-shi, Kyoto (JP)
• Otomura, Eiji
Ibaraki-shi, Osaka (JP)
• Nakamura, Tsuyoshi
Kasuya-gun, Fukuoka-ken (JP)

(74) Representative:
Schwabe - Sandmair - Marx
Stuntzstrasse 16
81677 München (DE)

(54) **Compressed code decoding device and audio decoding device**

(57) A compressed code decoding device of the present invention includes: a decoding section for receiving a plurality of groups of blocks of compressed codes and decoding each of the blocks of compressed codes; a buffer section for storing decoded signals decoded by the decoding section; a reproduction time acquisition section for acquiring a reproduction time at which to reproduce a predetermined one of the blocks; an output section for externally outputting the decoded signals stored in the buffer section; a detection section for detecting that the predetermined block of compressed codes has been decoded and output via the output section; an addition section for, at a time when the detection section detects that the predetermined block has been output, adding a time required for reproducing the predetermined block to the reproduction time acquired by the reproduction time acquisition section so as to produce a synchronization time; a synchronization section for comparing the synchronization time produced by the addition section and a current time so as to determine whether the synchronization time is ahead of or behind the current time; a code discarding section for, if the synchronization section determines that the synchronization time is ahead of the current time, discarding either compressed codes of one of the blocks next to the predetermined block or compressed codes of one of the groups next to the group including the predetermined block; and a reproduction delay section for, if the synchronization section determines that the synchronization time is behind the current time, delaying output of either decoded signals of the compressed codes of one of the blocks next to the predetermined block or decoded signals of the compressed codes of one of the groups next to the group including the predetermined block.

FIG. 1

**Description**

BACKGROUND OF THE INVENTION

1. FIELD OF THE INVENTION:

The present invention relates to a compressed code decoding device used in AV (audio visual) equipment for decoding and reproducing compressed video signals and audio signals in synchronization with each other. The present invention also relates to an audio signal decoding device for decoding encoded audio data in multiple channels based on a standard such as MPEG 2 so as to obtain a decoded audio signal.

2. DESCRIPTION OF THE RELATED ART:

In the field of video and audio equipment, CD players and VTRs have become widespread in recent years, and thus there is an increasing demand for large screen display and reproduction of realistic images and sounds for enjoying musics and films at home. In an attempt to satisfy such a demand, media containing video and audio signals have been developed such as DVDs. Meanwhile, methods for compressing signals to be stored on such media have been developed in order to store a large amount of video and audio signals on a single medium. For example, known methods for compressing audio signals include MPEG Audio and Dolby® AC-3.

In order to obtain such compressed codes, an audio signal is divided into "blocks" each of a certain length of time, and the signal is compressed by blocks. Then, a certain number of the blocks are grouped together to form another unit called a "frame". Each frame is provided with additional data for distinguishing the frame from others in the decoding process. The decoding device typically performs a decoding process by frames.

Moreover, a number of frames are grouped together to form a "packet". Each packet contains time data for each of the frames in the packet indicating when to reproduce the decoded signal of the first block in the frame. The decoding device externally outputs a decoded signal, obtained by decoding a compressed signal of the block, in accordance with the time data. The time data is used mainly for reproducing video and audio signals in synchronization with each other.

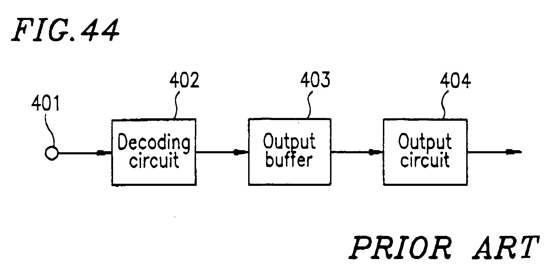

Hereinafter, a conventional device for decoding compressed codes will be described with reference to the accompanying figures. Figure **44** is a block diagram illustrating an exemplary configuration of a conventional device for decoding compressed codes.

In Figure **44**, a decoding circuit **402** receives and decodes compressed audio codes which are input by frames via an input terminal **401**. An output buffer **403** temporarily stores the decoded audio signals. An output circuit **404** externally outputs the audio signals stored in the output buffer **403**.

In such a configuration, compressed codes are first input by frames to the input terminal **401**. The codes are input by frames because frames are made distinguishable from one another as described above. The codes contained in a frame is decoded by the decoding circuit **402** using a decoding method in conformity with the used compression method so as to form an audio signal. The audio signal is temporarily stored in the output buffer **403**. When decoding of one frame is completed, the audio signals are externally output via the output circuit **404**. At this point of time, the next frame of codes is input to the input terminal **401**, decoded by the decoding circuit **402**, and then written in the output buffer **403**. Such a process is repeated for decoding the compressed codes.

However, the conventional device does not reproduce the audio signals in synchronization with other signals such as video signals and timer signals which serve as reference time for reproduction, but merely outputs the audio signals at a separate timing. There is also a problem that a storage capacity as large as one frame is required for the output buffer.

Moreover, in order to perform calculations for decoding coded signals, a memory capable of high-speed access is needed as a memory for temporarily storing coded signals to be calculated. Such type of memory is expensive, and there has been a strong demand for reducing the required storage capacity for the memory.

The necessity for such a high-speed access memory will be described in detail in connection with MPEG2, for example.

In accordance with the MPEG audio algorithm, the coding device divides an audio signal before band compression into 32 bands of sub-band signals by using a sub-band analysis filter bank. The division into the sub-band signals is performed by, for example, a 512-tap polyphase filter (PFB), in the following steps (1)-(3):

(1) perform the following calculation for 512 samples of input signal, $X_0 \ldots X_{511}$:

$$Z_i = C_i \times X_i \tag{1};$$

(2) calculate periodic addition signals $Y_i$ based on the following expression (2):

$$Y_i = \sum_{j=0}^{7} Z_{64j+i} \tag{2};$$

and

(3) calculate sub-band samples Si based on the following expression (3):

$$S_i = \sum_{k=0}^{68} Y_k \cdot \cos(2i+1)(k-16)\pi/64 \tag{3}$$

The sub-band samples Si are referred to as sub-band signals.

Moreover, at the decoding device, each time 32 sub-band samples are inverse-quantized for each channel, the 32 audio samples Si are processed by the synthesis filter bank in the following steps based on the following expressions (4)-(7):

(4) calculate Vi by frequency-shifting the 32 sub-band samples Si based on the following expression (4):

$$V_i = \sum_{k=0}^{31} S_k \cdot \cos(2i+1)(i+16)\pi/64 \tag{4}$$

(5) obtain the series Ui of 512 samples by switching the order of Vi base on the following expression (5):

$$U64i+j=V128i+j \tag{5};$$

$$U64i+32+j=V128i+96+j$$

(6) calculate Wi by multiplying the series Ui of the samples by the impulse response based on the following expression (6):

$$Wi=Ui \times Di \tag{6};$$

and

(7) obtain output signals Sj by periodic addition as in the following expression (7):

$$S_j = \sum_{i=0}^{15} W_{32i+j} \tag{7}.$$

In the above calculation process, the data Vi and Ui are referred to as sub-band synthesis filter data while the output signal Sj is referred to as PCM data.

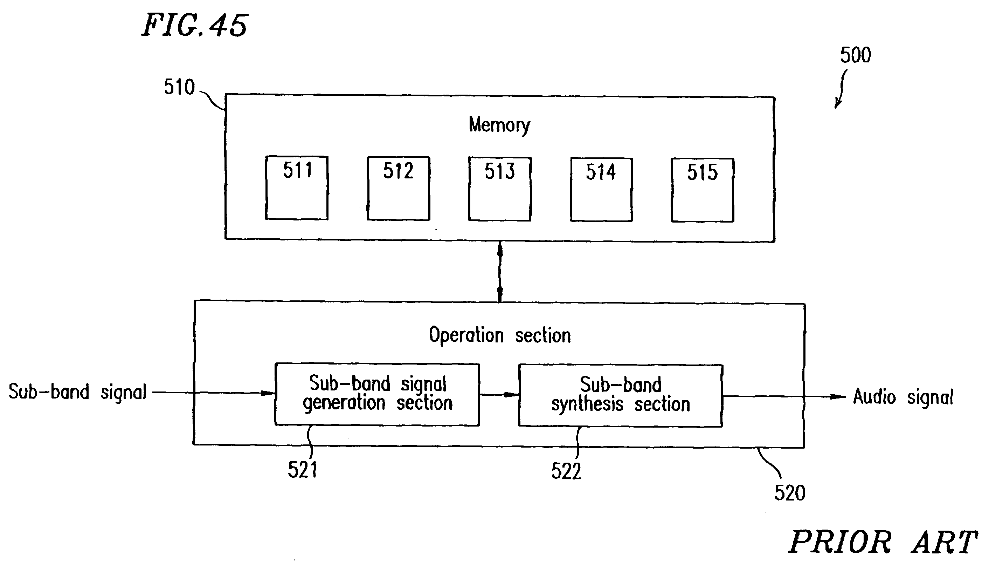

The decoding process based on the expressions (4)-(7) is performed by a conventional decoding device **500** as illustrated in Figure **45**.

The decoding device **500** includes a memory section **510** and an operation section **520**. The operation section **520** includes a sub-band signal generation section **521** and a sub-band synthesis section **522**, and decodes n channels of input coded signals into respective sub-band signals and performs sub-band synthesis filter operation for the sub-band signals for each channel so as to generate and output audio signals. The memory section **510** is formed of a high-speed access memory such as an SRAM and includes memory areas **511** to **514** for storing the sub-band synthesis filter data and a memory area **515** for storing the sub-band signals.

The decoding device having such a configuration operates as follows. When the coded signals are first input to the operation section **520**, the sub-band signal generation section **521** decodes the coded signals into sub-band signals

3

and temporarily stores the sub-band signals in the memory area **515**. Then, the sub-band synthesis section **522** reads the sub-band signals from the memory area **515** and performs sub-band synthesis filter operation for the sub-band signals, so as to generate and output audio signals.

The sub-band synthesis filter data in the memory areas **511** to **514** is partially updated by the sub-band synthesis filter data generated from the sub-band signals in the memory area **515**. Accordingly, the operation section **520** needs to read the sub-band synthesis filter data from the memory section **510** when performing the sub-band synthesis filter operation and write again the sub-band synthesis filter data to the memory section **510** after the operation.

The memory section **510** needs to be a memory capable of high-speed access. In the case where the decoding device **500** corresponds to multiple channels, e.g., four channels, the memory section **510** needs to have four memory areas **511** to **514** so as to store sub-band synthesis filter data for the four channels.

A high-speed access memory such as an SRAM used for the memory section **510** needs to have a sufficiently large memory capacity to retain the sub-band synthesis filter data for at least four channels, for example, in order to perform real-time reproduction of four-channel data. Such a memory, which is generally expensive, significantly increases the cost of the audio decoding devices.

## SUMMARY OF THE INVENTION

According to one aspect of this invention, a compressed code decoding device includes: a decoding section for receiving a plurality of groups of blocks of compressed codes and decoding each of the blocks of compressed codes; a buffer section for storing decoded signals decoded by the decoding section; a reproduction time acquisition section for acquiring a reproduction time at which to reproduce a predetermined one of the blocks; an output section for externally outputting the decoded signals stored in the buffer section; a detection section for detecting that the predetermined block of compressed codes has been decoded and output via the output section; an addition section for, at a time when the detection section detects that the predetermined block has been output, adding a time required for reproducing the predetermined block to the reproduction time acquired by the reproduction time acquisition section so as to produce a synchronization time; a synchronization section for comparing the synchronization time produced by the addition section and a current time so as to determine whether the synchronization time is ahead of or behind the current time; a code discarding section for, if the synchronization section determines that the synchronization time is ahead of the current time, discarding either compressed codes of one of the blocks next to the predetermined block or compressed codes of one of the groups next to the group including the predetermined block; and a reproduction delay section for, if the synchronization section determines that the synchronization time is behind the current time, delaying output of either decoded signals of the compressed codes of one of the blocks next to the predetermined block or decoded signals of the compressed codes of one of the groups next to the group including the predetermined block.

In one embodiment of the invention, the synchronization section includes a timer for timing a clock and compares the synchronisation time with an output from the timer as the current time.

In another embodiment of the invention, the synchronization section compares the synchronization time with a video reproduction time as the current time, the video reproduction time being provided to a video signal which is reproduced in synchronization with the decoded signal.

In still another embodiment of the invention, the synchronization section compares the synchronization time with a reference reproduction time as the current time, the reference reproduction time being provided to a code other than the decoded signal.

In still another embodiment of the invention, the synchronization section compares the synchronization time with the current time by determining whether the synchronization time is ahead of or behind the current time based on whether a value obtained by subtracting the current time from the synchronization time is greater than a predetermined threshold value.

According to another aspect of this invention, a compressed code decoding device includes: a decoding section for receiving a plurality of groups of blocks of compressed codes and decoding each of the blocks of compressed codes; a buffer section for storing decoded signals decoded by the decoding section; a reproduction time acquisition section for acquiring a reproduction time at which to reproduce a predetermined one of the blocks; an output section for externally outputting the decoded signals stored in the buffer section; a detection section for detecting that the predetermined block of compressed codes has been decoded and output via the output section; a time setting section for externally setting a start time and a finish time of a gap provided between two outputs of decoded signals; an addition section for, at a time when the detection section detects that the predetermined block has been output, adding a time required for reproducing the predetermined block to the reproduction time acquired by the reproduction time acquisition section so as to produce a first synchronization time; a time detection section for determining whether the start time set by the time setting section is between the first synchronization time produced by the addition section and a second synchronization time, the second synchronization time being obtained by adding a time required for reproducing one block of compressed codes to the first synchronization time; a gap-based reproduction delay section for delaying, if the start time is between the first synchronization time and the second synchronization time, until the finish time of the gap, output of either the compressed codes of the predetermined block or the compressed codes of one of the groups including the predetermined block.

According to still another aspect of this invention, a compressed code decoding device includes: a decoding section for receiving a plurality of groups of blocks of compressed codes and decoding each of the blocks of compressed codes; first and second memory sections for alternately storing blocks of the decoded signals from the decoding section; an output section for externally outputting the decoded signals stored in the first and second memory sections; a block detection section for detecting that each of the blocks of compressed codes has been decoded and externally output via the output section; a state section for indicating whether a decoded signal being currently output by the output section is from the first memory section or from the second memory section; a write control section for, at a time when the output of each of the blocks is detected by the block detection section, controlling a write operation of the block so that the block is written to one of the first memory section and the second memory section which is not indicated by the state section and alternately switching between read and write operations of the first and second memory sections.

In one embodiment of the invention, the write control section controls the write operation so that the decoded signals from a first and second ones of the blocks are respectively written to the first and second memory sections, while the decoded signals from a third one of the blocks are written to one of the first memory section and the second memory section which is not indicated by the state section.

According to still another aspect of this invention, an audio decoding device for decoding $N_A$ (where $N_A>1$) channels of audio signals by a sub-band synthesis operation using sub-band synthesis filter data and sub-band signal data is provided. The device includes: a first memory section for scoring $M_A$ (where $M_A<N_A$) channels of the sub-band synthesis filter data and the sub-band signal data used for the sub-band synthesis operation; a second memory section for storing at least some of $N_A$ channels of sub-band signal data and $N_A$ channels of sub-band synthesis filter data; an operation section for receiving encoded audio data and decoding the encoded audio data into sub-band signal data, performing a sub-band synthesis filter operation using the data stored in the first memory section so as to output $M_A$ channels of decoded audio data, and requesting to switch positions of new sub-band synthesis filter data calculated by the sub-band synthesis filter operation and next sub-band synthesis filter data required; and a data transfer section for, based on the request from the operation section, switching, by $M_A$ channels, the sub-band synthesis filter data and the sub-band signal data in the first memory section and the second memory section.

In one embodiment of the invention, the first memory section includes a first memory area for storing a channel of sub-band synthesis filter data and sub-band signal data and a second memory area for storing another channel of sub-band synthesis filter data and sub-band signal data. The operation section transfers a j'th channel of data stored in the second memory section to the second memory area in the first memory section when performing a sub-band synthesis filter operation for an i'th channel (where: $i=1$ to $N_A$; $j=1$ to $N_A$; and $j\neq i$) using the data stored in the first memory area in the first memory section, while transferring a k'th channel of data stored in the second memory section to the first memory area in the first memory section when performing a sub-band synthesis filter operation for a j'th channel (where: $k=1$ to $N_A$; $k\neq i$; and $k\neq j$) using the data stored in the second memory area in the first memory section, thereby performing in parallel a data transfer operation and a sub-band synthesis filter operation.

In another embodiment of the invention, the operation section includes a continuous transfer instruction section for instructing, when instructing a data transfer operation between the first memory section and the second memory section, a plurality of data transfer operations with a single issuance of instruction.

In still another embodiment of the invention, the operation section includes a virtual address allocation section for providing virtual addresses following an actual address at a termination point of the memory area in the first memory section which stores the sub-band synthesis filter data, allocating a start point of the virtual addresses to a predetermined actual address in the memory area, and sequentially allocating other ones of the virtual addresses to actual addresses.

In still another embodiment of the invention, the first memory section includes, in addition to the first memory area and the second memory area, a third memory area for storing data not limited to use with the sub-band synthesis operation. The operation section includes a sub-band signal transfer section for, when a number of channels of input encoded audio data is three or greater, copying or transferring at least some of the sub-band signals for a particular channel stored in the first memory section to a particular area in the first memory section.

In still another embodiment of the invention, the operation section includes a sub-band signal addition/subtraction section for performing addition and subtraction of the sub-band signals, in parallel with a transfer operation for the sub-band synthesis filter data from the second memory section to the first memory section after the encoded audio data has been input and decoded into sub-band signal data.

In still another embodiment of the invention, the operation section includes an interleave section for taking samples of decoded data decoded by the sub-band synthesis operation, one sample from each of the channels, and rearranging the samples in a predetermined order, in parallel with a transfer operation for the sub-band synthesis filter data from the first memory section to the second memory section after a sub-band synthesis operation for a final channel has been completed.

In still another embodiment of the invention, the interleave section includes an interleave division section for dividing an interleeve operation into r steps (where r≥2).

In still another embodiment of the invention, the interleave section includes an interleave storage area selection section for selecting a data storage area in the first memory section to be used for an interleave operation depending on whether a number of channels to be decoded by the sub-band synthesis operation is even or odd.

In still another embodiment of the invention, the continuous transfer instruction section includes a specific data transfer completion detection indication section for indicating detected completion of a p'th transfer operation out of q (where: q>1; and 1≤p<q) data transfer operations performed between the first memory section and the second memory section.

In still another embodiment of the invention, the data transfer section includes a specific data transfer completion detection transmission section for detecting completion of a p'th transfer operation out of q data transfer operations performed between the first memory section and the second memory section as instructed by the continuous transfer instruction section and for transmitting to the operation section the detected completion of the p'th transfer operation.

In still another embodiment of the invention, the operation section includes a specific data transfer completion detection section for detecting completion of a p'th transfer operation out of q data transfer operations performed between the first memory section and the second memory section as instructed by the continuous transfer instruction section. The operation section performs an s'th one of the r (where: r≥2; and 2≤s≤r) steps of the interleave operation after the specific data transfer completion detection section detects completion of a data transfer operation for a specific area.

In still another embodiment of the invention, the continuous transfer instruction section includes a PCM data transfer instruction section for instructing a transfer operation of at least one channel of decoded PCM data between the first memory section and the second memory section when a number of channels of input decoded data decoded by the sub-band synthesis operation is t (where t≥3). The PCM data transfer instruction section temporarily transfers PCM data, for which the sub-band synthesis operation has been performed, from the first memory section to the second memory section and retransfers PCM data which has been transferred to the second memory section to the first memory section in parallel with a sub-band synthesis operation for a final channel.

In still another embodiment of the invention, the continuous transfer instruction section includes a PCM data storage area selection section for selecting a storage area in the first memory section to be used for a transfer operation of PCM data from the second memory section to the first memory section performed in parallel with a sub-band synthesis operation for a final channel depending on whether a number of channels of input decoded data decoded by the sub-band synthesis operation is even or odd.

In still another embodiment of the invention, the operation section includes a division decoding section for dividing decoding processes from sub-band signal generation to output signal generation, or decoding processes from sub-band synthesis to output signal generation, so as to equally divide a number of audio output signal samples per frame into y blocks. Herein, $a=b \times c \times y$, where a denotes the number of audio output signal samples per frame for each channel of encoded audio signals, b denotes a number of sub-bands of the encoded audio signals, and c denotes a number of samples to be generated while processing one block.

According to still another aspect of this invention, an audio decoding device for decoding $N_A$ (where $N_A > 1$) channels of audio signals by a sub-band synthesis operation using sub-band synthesis filter data and sub-band signal data is provided. The device includes: a first memory section for storing at least one channel of the sub-band synthesis filter data and the sub-band signal data used for the sub-band synthesis operation; a second memory section for storing sub-band signal data and $N_A$ channels of sub-band synthesis filter data; an operation section for receiving encoded audio data and decoding the encoded audio data into sub-band signal data, performing a sub-band synthesis filter operation using the data stored in the first memory section so as to output one channel of decoded audio data, and requesting to switch positions of new sub-band synthesis filter data calculated by the sub-band synthesis filter operation and next sub-band synthesis filter data required; and a data transfer section for, based on the request from the operation section, switching, by one channel, the sub-band synthesis filter data and the sub-band signal data in the first memory section and the second memory section.

Thus, the invention described herein makes possible the advantages of: (1) providing a compressed code decoding device for decoding and outputting compressed codes of audio signals in synchronization with timer and video signals by using a buffer of a relatively small memory capacity; and (2) providing an audio decoding device with improved capability of processing audio signals of a band division coding system by using both a high-speed access memory and a memory whose access speed is relatively low (e.g., a DRAM) for a memory section, thereby minimizing the cost of the memory used for decoding coded signals.

These and other advantages of the present invention will become apparent to those skilled in the art upon reading and understanding the following detailed description with reference to the accompanying figures.

BRIEF DESCRIPTION OF THE DRAWINGS

Figure **1** is a block diagram illustrating a compressed code decoding device according to Example 1 of the present invention.

Figure **2** is a diagram illustrating a configuration of data input to the device illustrated in Figure 1.

Figure **3** is a block diagram illustrating a compressed code decoding device according to Example 2 of the present invention.

Figure **4** is a diagram illustrating a configuration of data input to the device illustrated in Figure **3**.

Figure **5** is a block diagram illustrating a compressed code decoding device according to Example 3 of the present invention.

Figure **6** is a diagram illustrating a configuration of data input to the device illustrated in Figure **5**.

Figure **7** is a block diagram illustrating a configuration of a buffer in the devise illustrated in Figure **5**.

Figure **8** is a block diagram illustrating an audio decoding device according to Example 4 of the present invention.

Figure **9** is a diagram illustrating an arrangement of sub-band synthesis filter data and its change over time (No. 1).

Figure **10** is a diagram illustrating an arrangement of sub-band synthesis filter data and its change over time (No. 2).

Figure **11** is a diagram illustrating an arrangement of sub-band synthesis filter data and its change over time (No. 3).

Figure **12** is a diagram illustrating correspondence between virtual address areas and actual address areas.

Figure **13** is a timing chart (No. 1) for data transmission in the audio decoding device according to Example 4 of the present invention.

Figure **14** is a timing chart (No. 2) for data transmission in the audio decoding device according to Example 4 of the present invention.

Figure **15** is a timing chart (No. 3) for data transmission in the audio decoding device according to Example 4 of the present invention.

Figure **16** is a timing chart (No. 4) for data transmission in the audio decoding device according to Example 4 of the present invention.

Figure **17** is a timing chart (No. 5) for data transmission in the audio decoding device according to Example 4 of the present invention.

Figure **18** is a timing chart (No. 6) for data transmission in the audio decoding device according to Example 4 of the present invention.

Figure **19** is a block diagram illustrating an audio decoding device according to Example 5 of the present invention.

Figure **20** is a block diagram illustrating an operation section in the device illustrated in Figure **19**.

Figure **21** is a timing chart (No. 1) for data transmission in the audio decoding device according to Example 5 of the present invention.

Figure **22** is a timing chart (No. 2) for data transmission in the audio decoding device according to Example 5 of the present invention.

Figure **23** is a timing chart (No. 3) for data transmission in the audio decoding device according to Example 5 of the present invention.

Figure **24** is a timing chart (No. 4) for data transmission in the audio decoding device according to Example 5 of the present invention.

Figure **25** is a timing chart (No. 5) for data transmission in the audio decoding device according to Example 5 of the present invention.

Figure **26** is a timing chart (No. 6) for data transmission in the audio decoding device according to Example 5 of the present invention.

Figure **27** is a timing chart (No. 7) for data transmission in the audio decoding device according to Example 5 of the present invention.

Figure **28** is a timing chart (No. 8) for data transmission in the audio decoding device according to Example 5 of the present invention.

Figure **29** is a timing chart (No. 9) for data transmission in the audio decoding device according to Example 5 of the present invention.

Figure **30** is a timing chart (No. 10) for data transmission in the audio decoding device according to Example 5 of the present invention.

Figure **31** is a timing chart (No. 11) for data transmission in the audio decoding device according to Example 5 of the present invention.

Figure **32** is a timing chart (No. 12) for data transmission in the audio decoding device according to Example 5 of the present invention.

Figure **33** is a timing chart (No. 1) for data transmission in the audio decoding device according to Example 6 of the present invention.

Figure **34** is a timing chart (No. 2) for data transmission in the audio decoding device according to Example 6 of the present invention.

Figure **35** is a timing chart (No. 3) for data transmission in the audio decoding device according to Example 6 of the present invention.

Figure **36** is a timing chart (No. 4) for data transmission in the audio decoding device according to Example 6 of the present invention.

Figure **37** is a timing chart (No. 5) for data transmission in the audio decoding device according to Example 6 of the present invention.

Figure **38** is a timing chart (No. 6) for data transmission in the audio decoding device according to Example 6 of the present invention.

Figure **39** is a timing chart (No. 7) for data transmission in the audio decoding device according to Example 6 of the present invention.

Figure **40** is a timing chart (No. 8) for data transmission in the audio decoding device according to Example 6 of the present invention.

Figure **41** is a timing chart (No. 9) for data transmission in the audio decoding device according to Example 6 of the present invention.

Figure **42** is a timing chart (No. 10) for data transmission in the audio decoding device according to Example 6 of the present invention.

Figure **43** is a timing chart (No. 11) for data transmission in the audio decoding device according to Example 6 of the present invention.

Figure **44** is a block diagram illustrating an exemplary configuration of a conventional compressed code decoding device.

Figure **45** is a block diagram illustrating an exemplary configuration of a conventional audio decoding device.

DESCRIPTION OF THE PREFERRED EMBODIMENTS

Examples 1-3 described hereinafter each provide a compressed code decoding device which realizes the advantage (1) of providing a compressed code decoding device for decoding and outputting compressed codes of audio signals in synchronization with timer and video signals by using a buffer of a relatively small memory capacity.

Examples 4-6 each provide an audio decoding device which realizes the advantage (2) of providing an audio decoding device with improved capability of processing audio signals of a band division coding system by using both a high-speed access memory and a memory whose access speed is relatively low (e.g., a DRAM) for a memory section, thereby minimizing the cost of the memory used for decoding coded signals.

Example 1

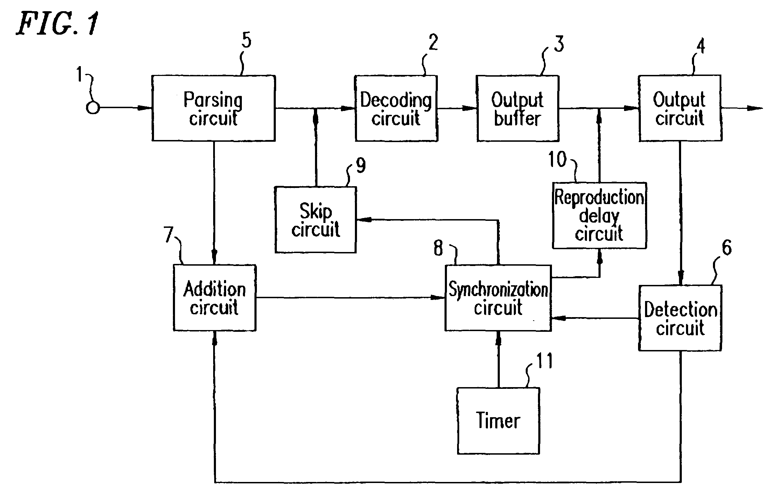

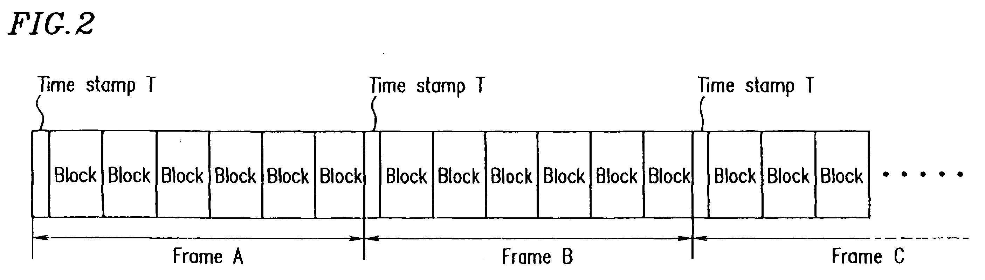

Hereinafter, Example 1 of the present invention will be described with reference to the accompanying figures. Figure **1** is a block diagram illustrating a configuration of the compressed code decoding device according to Example 1 of the present invention. Figure **2** is a diagram illustrating an exemplary configuration of grouped compressed audio codes input to the compressed code decoding device illustrated in Figure **1**.

As is apparent from Figure **2**, the compressed audio codes are grouped in blocks. The blocks are further grouped in frames, e.g., frames A, B, C, .... Each frame includes a time stamp T indicating a reproduction time at the beginning of the frame, followed by compressed codes for the frame. The time stamp T indicates a reproduction time when to decode a first block of compressed codes in the frame so as to reproduce audio signals.

A plurality of frames of compressed codes form a packet, and the compressed codes are transferred by packets. Thus, blocks of compressed codes are grouped in frames and packets.

Frames as illustrated in Figure **2** are input to the compressed code decoding device illustrated in Figure **1** via an input terminal **1**. A parsing circuit **5**, for each input frame, reads the time stamp T at the beginning thereof, thereby obtaining the reproduction time T0. Thus, the parsing circuit **5** acquires the time when the first block of coded signals in the first frame is output.

A decoding circuit **2** decodes each block of compressed codes in the frame so as to output audio signals. An output buffer **3** temporarily stores at least two blocks of audio signals. An output circuit **4** externally outputs the audio signals read out from the output buffer **3**.

A detection circuit **6** detects that all of the audio signals corresponding to the first block of the current frame have been externally output via the output circuit **4**. An addition circuit **7**, in response to the detection output from the detection circuit **6**, calculates the time interval from when the first block is input until the audio signals corresponding to the first block have been completely output, i.e., time $\alpha$ required for reproducing the audio signals of the first block, and then adds the time $\alpha$ to the reproduction time T0 obtained by the parsing circuit **5**, thereby obtaining the synchronization time (T0+$\alpha$). A timer 11 times the clock and outputs the current time R1.

A synchronization circuit **8** compares between the synchronization time (T0+$\alpha$) obtained by the addition circuit **7** and the current time R1 timed by the timer **11**, and determines that the reproduction of audio signals is behind the schedule if the synchronization time (T0+$\alpha$) is greater than the current time R1, while it determines that the reproduction is ahead of schedule if the synchronization time (T0+$\alpha$) is less than the current time R1.

That is, the timer **11** and the synchronization circuit **8** are used for comparison between the synchronization time (T0+$\alpha$) and the current time R1 so as to determine whether the synchronization time (T0+$\alpha$) is ahead of the current time R1.

A skip circuit **9** discards the next frame of compressed codes when the synchronization circuit **8** indicates "behind" (i.e., T0+$\alpha$ < R1) while it does nothing when the synchronization circuit **8** indicates "ahead" (i.e., T0+$\alpha$ > R1). A reproduction delay circuit **10**, when the synchronization circuit **8** outputs "ahead" (i.e., T0+$\alpha$ > R1), delays the time when the second next block of audio signals is output via the output circuit **4** by the amount of time the synchronization time (T0+$\alpha$) is ahead of the current time R1. This adjustment of time is performed by the reproduction delay circuit **10** controlling the output time of the output buffer **3**.

Next, the operation of the compressed code decoding device according to the present example will be described in more detail.

First, a stream of packets of codes is input via the input terminal **1**. Each packet includes a plurality of frames, while each frame includes a plurality of blocks.

The parsing circuit **5** extracts the header information of the first frame and obtains the reproduction time T0 therefrom at which to output the audio signals corresponding to the first block. Moreover, the decoding circuit **2** receives from the parsing circuit **5** blocks of compressed codes in the first frame, and decodes the compressed codes by blocks go as to output audio signals.

The first block of audio signals decoded by the decoding circuit **2** is temporarily stored in the output buffer **3**. When all of the audio signals in the single block have been ready, the block of audio signals is externally output via the output circuit **4**. When the output circuit **4** begins to output the first block of audio signals, the second block of audio signals in turn begins to be written in the output buffer **3**. Then, successively after the first block of audio signals has been completely output, the second block of audio signals is output.

The addition circuit **7**, in response to the detection output from the detection circuit **6**, calculates the time $\alpha$ required for reproducing and outputting the first block of audio signals, and then adds the output time $\alpha$ of the first block to the time T0 obtained by the parsing circuit **5**, thereby obtaining the synchronization time (T0+$\alpha$). The synchronization circuit **8** obtains the difference between the synchronization time (T0+$\alpha$) and the time R1 from the timer **11**, and determines whether the difference (T0+$\alpha$)-R1 is greater than the predetermined value TH.

When the difference (T0+$\alpha$)-R1 is greater than the predetermined value TH, and thus the following expression (8):

$$(T0+\alpha)\text{-}R1 > TH \tag{8}$$

is satisfied, the synchronization time (T0+$\alpha$) is determined to be ahead of the current time R1.

When the difference (T0+$\alpha$)-R1 is less than the predetermined value TH, and thus the following expression (9):

$$(T0+\alpha)\text{-}R1 < TH \tag{9}$$

is satisfied, the synchronization time (T0+$\alpha$) is determined to be behind the current time R1.

When the determination result of the synchronization circuit **8** satisfies the above expression (8), the skip circuit **9** discards the second frame of compressed codes when it is input from the parsing circuit **5** to the decoding circuit **2**. The skip circuit **9** does nothing when the above expression (9) is satisfied.

Moreover, when the determination result of the synchronization circuit **8** satisfies the above expression (9), the reproduction delay circuit **10** outputs the third block of audio signals in the first frame at a time delayed by the amount of delay (i.e., the difference (T0+$\alpha$)-R1). The reproduction delay circuit **10** does nothing when the above expression (8) is satisfied.

The above-described control allows for audio signals to be output in accordance with the reproduction time provided to the frame. By providing a decoding device for decoding compressed video codes with a configuration as that of the compressed code decoding device of the present example, audio and video codes can be reproduced by the respective devices in synchronization with each other. In such a case, reproduction time data is provided to the video codes such that the video codes are in synchronization with the audio codes, while the video decoding device uses the same type of timer as the timer **11** or shares the timer **11**.

According to the present example, only a capacity as large as two blocks is required for the output buffer **3**, thereby allowing for reduction of the amount of data to be stored.

In the above example, the detection circuit **6** detects that the audio signals corresponding to the first block have been externally output. The block is not limited to the first block, but may be any other one of the blocks. However, note

that the time $\alpha$ for the block which is added by the addition circuit **7** has to correspond to the number of the block.

In particular, when the number of blocks for which the completion of output is detected by the detection circuit **6** is n, the value of $\alpha$ which is added by the addition circuit **7** is as follows:

$$\alpha = (\text{output completion time for one block of audio signals}) \times n.$$

Moreover, the reproduction time T0 read out by the parsing circuit **5** is the reproduction time for a frame which follows the current frame being decoded. Therefore, similar effects can be realized even when a negative value in accordance with the block number is taken for the time $\alpha$ for the block which is added by the addition circuit **7**. Thus, when the number of blocks for which the completion of output is detected by the detection circuit **6** is n, the value of $\alpha$ which is added by the addition circuit **7** is as follows:

$$\alpha = -(\text{output completion time for one block of audio signals}) \times (6-n).$$

Example 2

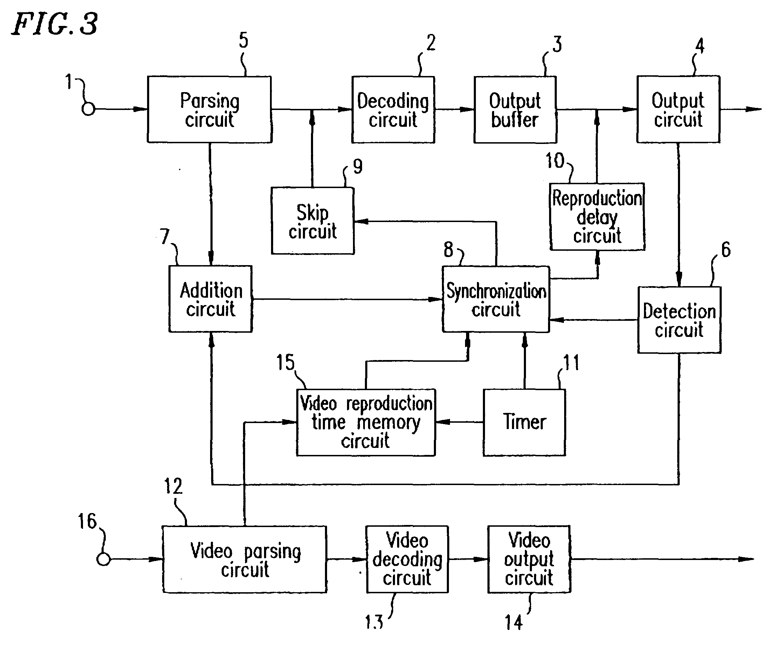

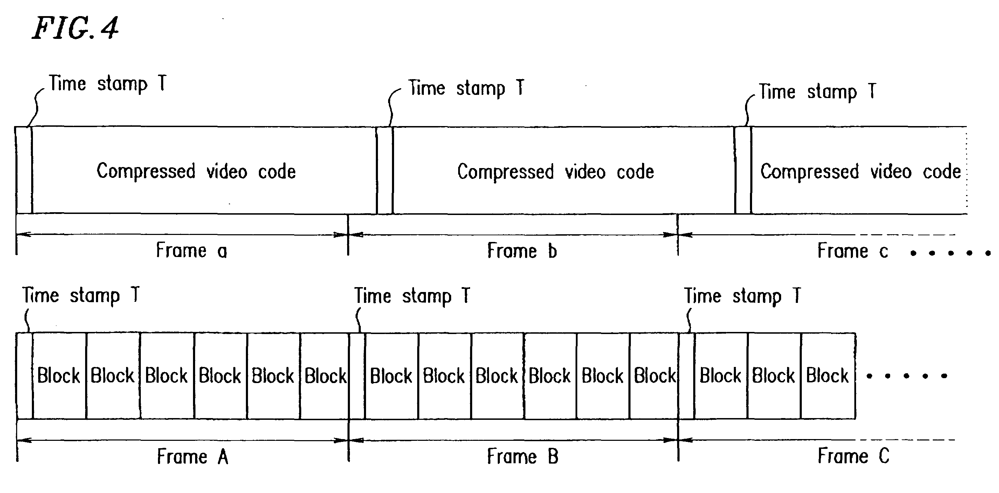

Hereinafter, a compressed code decoding device according to Example 2 of the present invention will be described with reference to the accompanying figures. Figure **3** is a block diagram illustrating a configuration of the compressed code decoding device of Example 2. Figure **4** is a diagram illustrating an exemplary configuration of grouped compressed audio codes input to the compressed code decoding device illustrated in Figure **3**.

In the device of the present example, it is assumed that the compressed audio codes and the compressed video codes are transmitted in parallel, as illustrated in Figure **4**, and the respective reproduction times of the frames A, B, C, ..., of compressed audio codes are synchronized with the respective reproduction times of the frames a, b, c, ..., of compressed video codes.

As compared to the device of Figure **1**, the compressed code decoding device illustrated in Figure **3** is additionally provided with a video parsing circuit **12**, a video decoding circuit **13**, a video output circuit **14**, a video reproduction time memory circuit **15** and a video input terminal **16**.

The elements such as the decoding circuit **2**, the output buffer **3**, the output circuit **4**, the parsing circuit **5**, the detection circuit **6**, the addition circuit **7**, the skip circuit **9**, the reproduction delay circuit **10** and the timer **11** function as those in the device of Figure **1**.

The compressed video codes are decoded by the video decoding circuit **13** and externally output via the video output circuit **14**.

As in the case of compressed audio codes, compressed video codes grouped in frames are input to the video parsing circuit **12**, which obtains, from the beginning of each frame, the reproduction time V0 at which the video signals are reproduced. The video reproduction time memory circuit **15** obtains and stores the difference (V0-R1) between the video reproduction time V0 and the current time R1 from the timer **11**. The video decoding circuit **13** receives and decodes the compressed video codes. The video output circuit **14** externally outputs the decoded video signals.

In such a configuration, the video parsing circuit **12** obtains the video reproduction time V0 for when the frame should be reproduced. The video reproduction time memory circuit **15** obtains and stores the difference (V0-R2) between the video reproduction time V0 and the time R2 from the timer **11**.

When detection circuit **6** detects that the first block of audio signals has been completely output, the synchronization circuit **8** adds the time (V0-R2) stored in the video reproduction time memory circuit **15** to the time R1 from the timer **11**, thereby obtaining the time TV (=V0- R2+R1) , and further obtains the difference (T0+$\alpha$)-TV between the time TV and the synchronization time (T0+$\alpha$) obtained by the addition circuit **7**.

Based on the above difference (T0+$\alpha$)-TV, the synchronization circuit 8 determines whether the reproduction of the audio signals is ahead of or behind the schedule.

When the value (T0+$\alpha$)-TV is greater than the predetermined value TH, and thus

$$(T0+\alpha)-TV > TH \tag{10}$$

is satisfied, the synchronization time (T0+$\alpha$) is determined to be ahead of the current time R1.

When the (T0+$\alpha$)-TV is less than the predetermined value TH, and thus

$$(T0+\alpha)-TV < TH \tag{11}$$

is satisfied, the synchronization time (T0+$\alpha$) is determined to be behind the current time R1.

Note that it is assumed herein that the time required for the decoding of the compressed video codes by the video decoding circuit **13** is 0, while the video reproduction time V0 represents the time at which the video signal is output from the video output circuit 14.

In the present example, compressed video codes are input to the video input terminal **16**. However, also when other compressed codes including a reference reproduction time, instead of the compressed video codes, is input along with the compressed audio codes, the present invention can be used to reproduce the compressed audio codes and the other compressed codes in synchronization with each other. The only difference would be the use of the reference reproduction time instead of the video reproduction time V0.

Example 3

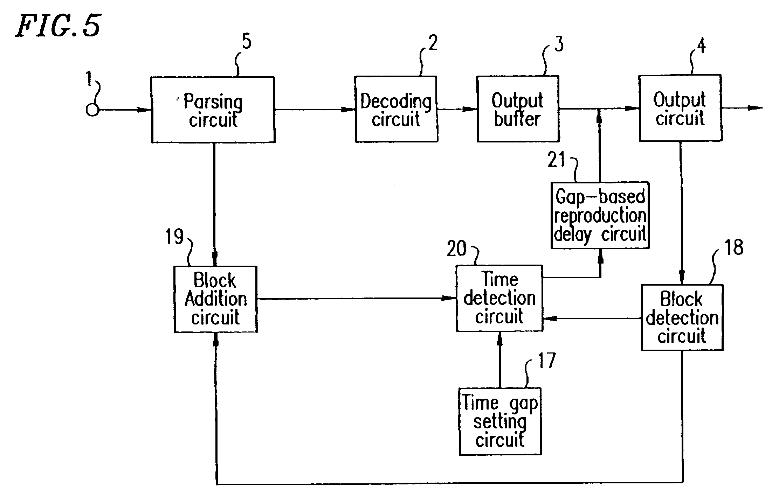

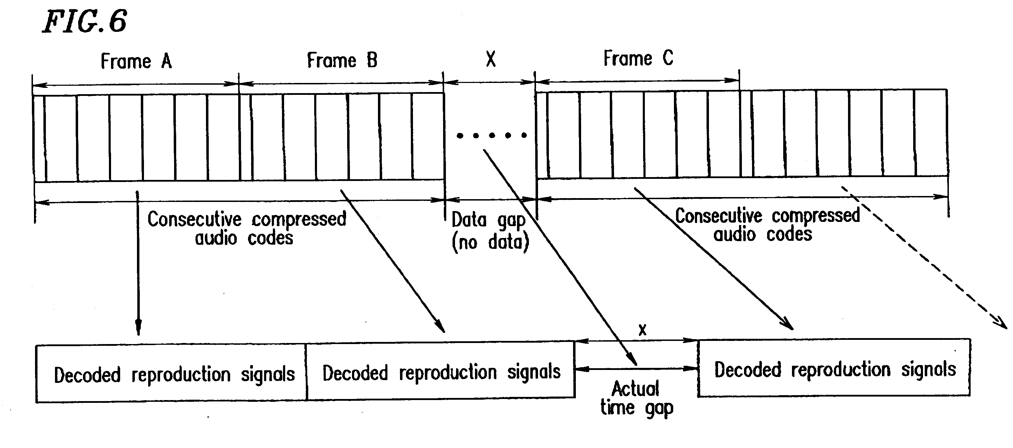

Hereinafter, a compressed code decoding device according to Example 2 of the present invention will be described with reference to the accompanying figures. Figure **5** is a block diagram illustrating a configuration of the compressed code decoding device of Example 3. Figure **6** is a diagram illustrating an exemplary configuration of grouped compressed audio codes input to the compressed code decoding device illustrated in Figure **5**.

As illustrated in Figure **6**, it is assumed in the present example that a blank period X with no frame exists at predetermined intervals in a series of frames being transmitted. The device of the present example detects the blank period X and reproduces the next frame C after waiting for a length of time corresponding to the blank period X. For example, when compressed audio codes and compressed video codes are transmitted in parallel, since the compressed video codes contain a larger amount of information than the compressed audio codes (and thus the code length thereof is greater), there occurs the blank period X between two frames of compressed audio codes. Thus, it is necessary to reproduce the next frame C after waiting for the time x corresponding to the blank period X.

As compared to the device of Figure 1, the compressed code decoding device illustrated in Figure **5** is additionally provided with a time gap setting circuit **17**, a block detection circuit **18**, a block addition circuit **19**, a time detection circuit **20** and a gap-based reproduction delay circuit **21**.

The elements such as the decoding circuit **2**, the output buffer **3** and the output circuit **4** function as those in the device of Figure **1**.

Start time Ts and finish time Tf of a gap (corresponding to the start and finish of the period x) are externally provided to, and set in, the time gap setting circuit **17**. The block detection circuit **18** detects that a block of audio signals has been completely output from the output circuit **4**.

The parsing circuit **5** obtains, from the first frame, the reproduction time T0 of the first block in the first frame, and provides the reproduction time T0 to the block addition circuit **19**. Each time the block detection circuit **18** detects that a block of audio signals has been completely output, the block addition circuit **19** obtains the time $\beta$ required for reproducing the block, adds the time $\beta$ to the reproduction time T0, and further adds, to the sum, the time $\alpha$ required for reproducing the first block, thereby obtaining time $(T0+\alpha+\beta)$.

The time detection circuit **20** detects whether the gap start time Ts set in the time gap setting circuit **17** is between the time $(T0+\alpha+\beta)$ obtained by the block addition circuit **19** and the time $(T0+2\alpha+\beta)$ obtained by further adding the time $\alpha$ for the first block. When the time detection circuit **20** detects the gap start time Ts, the time at which the second next block is output via the output circuit **4** is delayed by the gap-based reproduction delay circuit **21** until the gap finish time Tf.

For example, when a length of time in a range between $(T0+\alpha+\beta)$ and $(T0+2\alpha+\beta)$ has passed since the reproduction time T0 of the first block in the first frame in the packet, the time at which to output the first block in the first frame in the next packet is delayed until the gap finish time Tf. In this way, the period of time x is inserted in the reproduced audio signals.

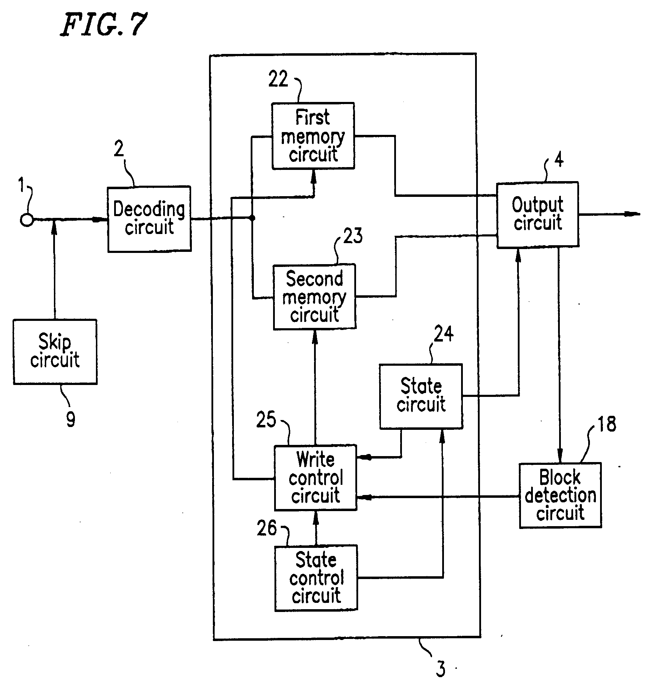

Figure **7** is a block diagram illustrating a configuration of the output buffer **3** in the device illustrated in Figure **5**. The output buffer **3** includes a first memory circuit **22**, a second memory circuit **23**, a state circuit **24**, a write control circuit **25** and a state control circuit **26**.

The first and second memory circuits **22** and **23** store the decoding results of the decoding circuit **2**. The state circuit **24** indicates whether the audio signal being externally output is from the first memory circuit **22** or from the second memory circuit **23**. The write control circuit **25** performs control such that the audio signal decoded by the decoding circuit **2** is written to one of the first and second memory circuits **22** and **23** which is not being indicated by the state circuit **24**.

Each time the block detection circuit **18** detects that a block of audio signals has been completely output, the state control circuit **26** switches from one to another of the memory circuit which stores the audio signal from the output circuit **4** and the memory circuit to which the write control circuit **25** writes the decoded result. At the time when the block detection circuit **18** detects that a block of audio signals has been completely output, the write control circuit **25** and the state control circuit **26** control the write operation of the block of audio signals to the memory circuit which is not being indicated by the state control circuit **26**, while switching between the read and write operations for the first and second memory circuits.

In such a configuration, the write control circuit **25** writes the decoded result of the first block to the first memory circuit **22** immediately after the decoding, and writes the decoded result of the second block to the second memory circuit **23** immediately after the decoding. Then, once all of the decoded results are written to the first memory circuit **22**, the output circuit **4** begins to externally output the signals. The above-described write operation is continued for the decoded results of the third and subsequent blocks.

In practice, each of the above-described examples is implemented employing discrete ICs, a DSP (Digital signal processor) or a CPU.

The above-described compressed code decoding devices of Examples 1 to 3 provide the following effects.

The need for a large capacity memory for storing frames or packets of signals is eliminated, whereby it is possible to reduce the circuit scale of AV reproduction equipment, and also to decode and reproduce compressed audio codes in synchronization with a timer or video images.

Example 4

An audio decoding device of Example 4 receives coded signals for multi-channels of the layer **2** of MPEG2 (the number of channels $N_A$ is four in this example) and decodes the coded signals into an audio signal. The layer **2** of MPEG2 is described in detail in ISO/IEC 11172-3:1993 and 13818-3:1996.

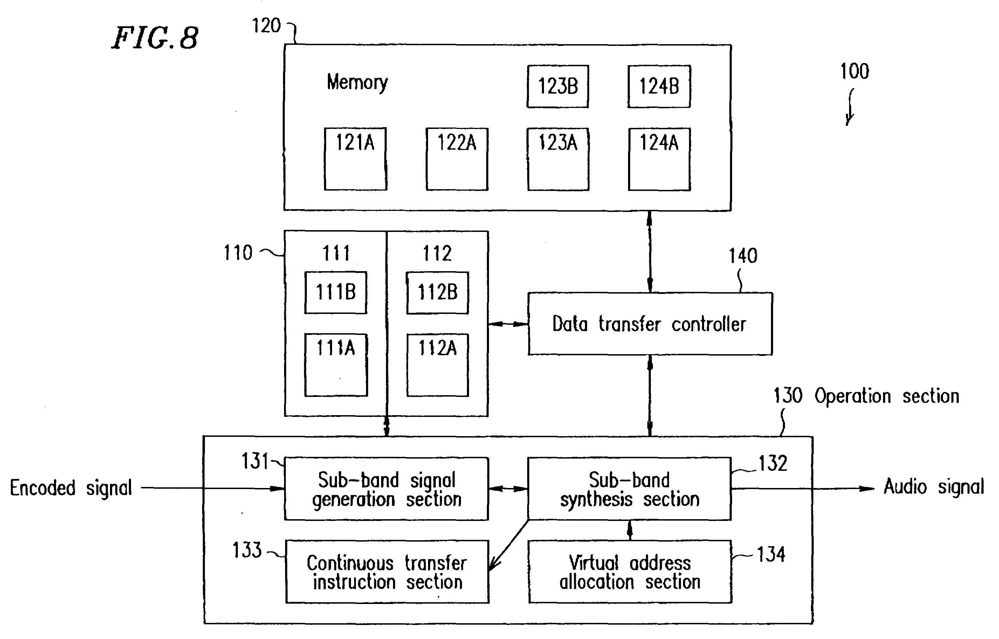

Figure **8** is a block diagram of the audio decoding device **100** according to Example 4 of the present invention. The audio decoding device **100** includes a first memory section **110**, a second memory section **120**, an operation section **130** and a data transfer controller **140**. The first memory section **110** includes an SRAM capable of high-speed access, and stores $M_A$ ($M_A < N_A$) channels of sub-band synthesis filter data and sub-band signals. In this example, $M_A=2$. The first memory section **110** is divided into a memory area **111** (first memory area) and a memory area **112** (second memory area). An important signal processing section of the audio decoding device **100** includes one-chip multimedia processor, which includes an internal memory. While the internal memory is used mainly for image data processing, the first memory section **110** is a memory area of the internal memory which is saved for processing audio data.

The first memory area **111** stores audio data for **X** channels, where **X** is an integer changing in the range of 1 through $N_A$, and includes two memory areas **111A** and **111B**. The memory area **111A** stores sub-band synthesis filter data for **X** channels (corresponding to "V" produced by the matrix processing for sub-band synthesis based on the MPEG standard), and the memory area **111B** stores subband signal data for **X** channels. The second memory area **112** stores audio data for **Y** channels, where **Y** is an integer changing in the range of 1 through $N_A$ and different from **X**, and includes two memory areas **112A** and **112B**. The memory area **112A** stores sub-band synthesis filter data for **Y** channels, and the memory area **112B** stores sub-band signal data for **Y** channels. In the following description, $N_A=4$.

The second memory section **120** is a memory including an inexpensive large capacity DRAM externally connected to the processor. The second memory section **120** includes memory areas **121A** through **124A**, **123B** and **124B**. The memory areas **121A** through **124A** each store sub-band synthesis filter data for one channel. For example, the sub-band synthesis filter data for a first channel is stored in the memory area **121A**, the sub-band synthesis filter data for a second channel is stored in the memory area **122A**, the sub-band synthesis filter data for a third channel is stored in the memory area **123A**, and the subband synthesis filter data for a fourth channel is stored in the memory area **124A**.

The sub-band signal data for the third channel is stored in the memory area **123B**, and sub-band signal data for the fourth channel is stored in the memory area **124B**.

The memory areas **111A** and **112A** in the first memory section **110** and the memory areas **121A** through **124A** in the second memory section **120** are all of identical size. For a more practical description, the area of each of these memory areas can include addresses 1 through 2048 (0x800 in hexadecimal).

The memory areas **111B** and **112B** in the first memory section **110** and the memory areas **123B** and **124B** in the second memory section **120** are all of identical size. For a more practical description, the area of each of these memory areas can include addresses 1 through 768 (0x300 in hexadecimal).

The operation section **130** includes a sub-band signal generation section **131**, a sub-band synthesis section **132**, a continuous transfer instruction section **133** and a virtual address allocation section **134**.

The sub-band signal generation section **131** decodes a coded signal input from an external device into a sub-band signal. The sub-band synthesis section **132** performs channel-by-channel sub-band synthesis filter operation using the sub-band synthesis filter data and the sub-band signals, so as to generate an audio signal. The continuous transfer instruction section **133** designates a specific memory area in each of the first memory section **110** and the second memory section **120** and instructs the data transfer controller **140** to perform one or more data transfers.

The virtual address allocation section **134** assumes a virtual address exists following the actual address at a termination point of each of the memory areas **111A** and **112A**, and allocates the start point of the virtual address to the actual address at the start of each of the memory areas **111A** and **112A**. The virtual address allocation section **134** further allocates virtual addresses to the subsequent actual addresses in this manner sequentially.

The data transfer controller **140** transfers data from the first memory section **110** to the second memory section **120** or from the second memory section **120** to the first memory section **110** by the instruction of the continuous transfer instruction section **133**.

The operation section **130** instructs data transfer between one of the memory areas **111** and **112** and the second memory section **120** externally connected to the processor. During the data transfer, the operation section performs sub-band synthesis filter operation for one channel using the other one of the memory areas **111** and **112**.

Thus, the generation of an audio signal and the transfer of the data are parallel-processed. For example, when the data transfer is performed between the first memory area **111** in the first memory section **110** and the second memory section **120**, the operation section **130** performs the operation using the data in the second memory area **112** in the first memory section **110**. When the data transfer is performed between the second memory area **112** and the second memory section **120**, the operation section **130** performs the operation using the data in the first memory area **111**.

As shown by the format described in ISO/IEC 11172-3:1993 and 13818-3:1996, the number of sub-band signals generated by the sub-band signal generation section **131** at one time is **32** for each channel. The sample number of the sub-band signal samples in one frame is 1152 per channel. The sample number Sn of the sub-band signals generated by the sub-band signal generation section **131** for each channel in one time is 32×N, where N is an integer of 1 through 36 inclusive.

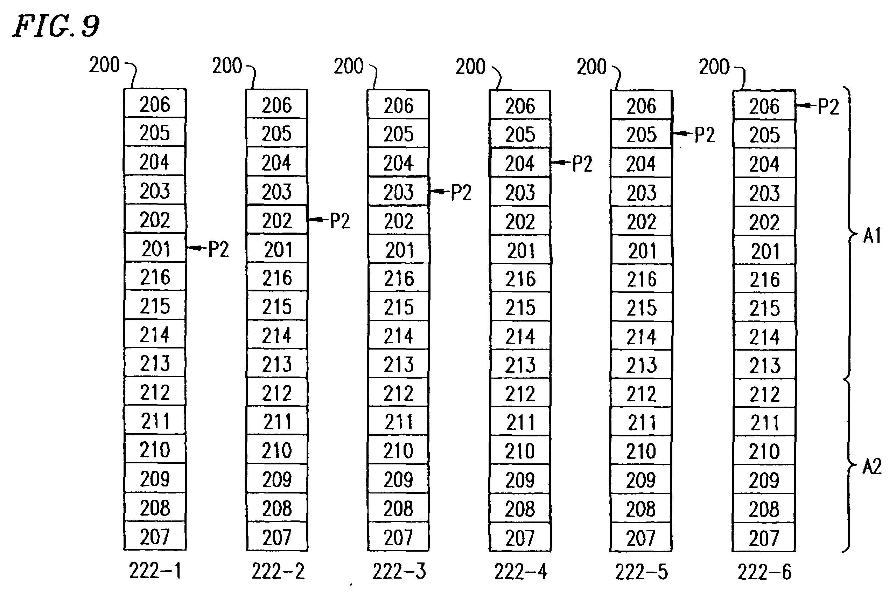

Furthermore, the minimum sample number of the sub-band signals required for one-time sub-band synthesis filter operation performed by the sub-band synthesis section **132** is 32 per channel. First, matrix processing is performed, based on the above expression (4), using the 32 samples of sub-band signal and the cosine coefficient to update 1/16 of the continuous sub-band synthesis filter data. Then, the multiply-accumulate operation is performed, as in the above expressions (6) and (7), using the updated sub-band synthesis filter data Ui and the window coefficient Di, to generate 32-sample audio signals. The 32-sample audio signals are each obtained by performing the multiply-accumulate operation 16 times. At this point, the sub-band synthesis filter data used in the operation is assigned sequentially sample by sample, starting from the newly updated sample. Specifically, one sample corresponding to 1/16 of the newly-updated sub-band synthesis filter data is first assigned, the next sample corresponding to 1/16 of the sub-band synthesis filter data updated by the immediately previous operation is then assigned, and so on. Thus, the process shown in Figures **9** to **11** is performed.

In this example, the value of N is assumed to be set to 6 for simplifying the description. Specifically, the sample number of the sub-band signals generated at one time by the sub-band signal generation section **131** is 192 (32×6). The sub-band synthesis section **132** performs the sub-band synthesis filter operation six times per channel using the sub-band signals. Thus, 192-sample (32×6) audio signals are generated. The sub-band synthesis filter data updated by the sub-band synthesis filter operation occupies 6/16 of the entire sub-band synthesis filter data.

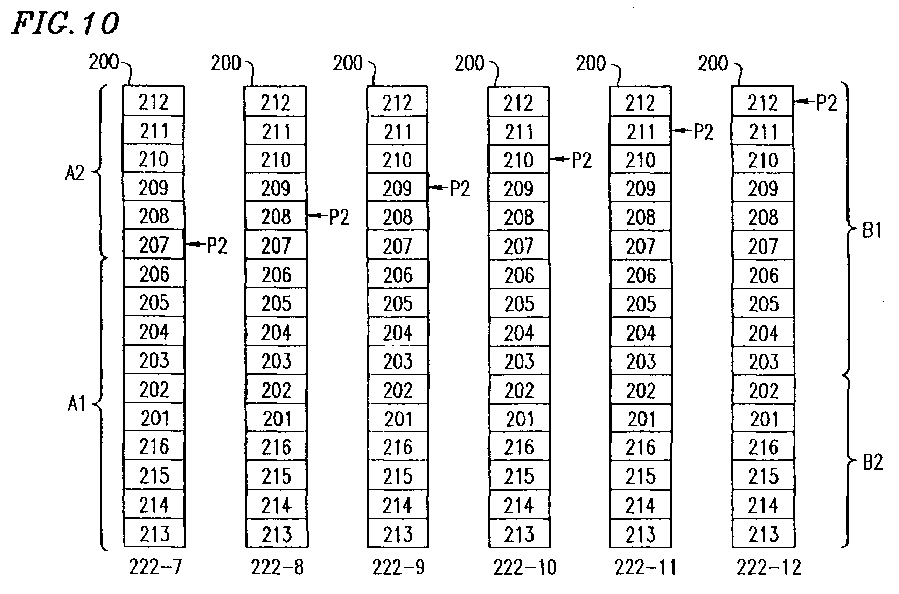

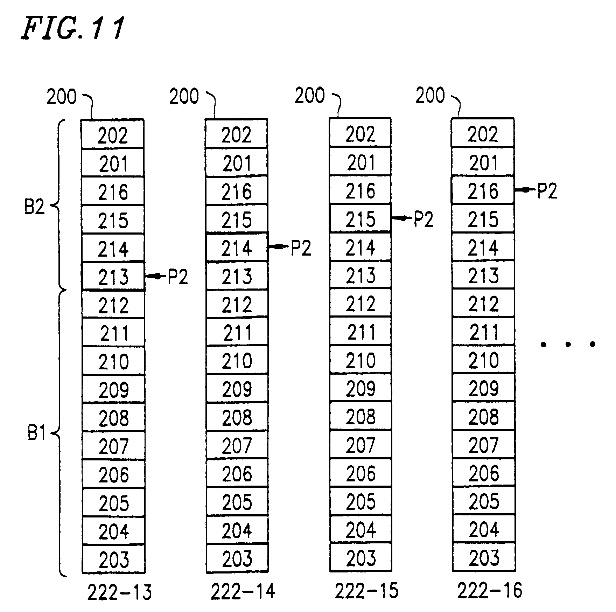

Figures **9** to **11** show the arrangement of the sub-band synthesis filter data generated per channel and the change over time. In Figures **9** to **11**, a number of rectangular areas **200** each represent the entire sub-band synthesis filter data. The sub-band synthesis filter data **200** is divided into 16 data areas **201** through **216**. Reference numerals **222-1** through **222-16** under the region **200** indicate the order of change over time. The time interval between two adjacent rectangular areas **200** corresponds to the time period required to perform the sub-band synthesis filter data once. The data changes over time with the data **222-1** being the oldest and the data **222-16** being the newest. In this example, Figure **9** shows the arrangement and the position of a pointer P2 of data **222-1** through **222-6**, Figure **10** shows the arrangement and the position of the pointer P2 of data **222-7** through **222-12**, and Figure **11** shows the arrangement and the position of the pointer P2 of data **222-13** through **222-16**.

The arrow shown to the right of each rectangular area **200** represents a pointer P2 showing the area in which the data is updated. As described above, the sample number of the sub-band signals for each channel generated at one time is 192 (32×6) and corresponds to the sub-band synthesis filter operation performed six times. Assuming that the data **222-1** is sub-band synthesis filter data updated by the first sub-band synthesis filter operation immediately after the sub-band signal generation, 192-sample sub-band signals are generated by the sub-band signal generation section **131** during the change from the data **222-6** to the data **222-7** and during the change from the data **222-12** to the data **222-13**. During the above time periods, data is transferred between the first memory section **110** and the second memory section **120** by the control by the data transfer controller **140**. When the sub-band synthesis filter data is in the state shown in the rectangular area **222-1**, the data in the data area **201** is updated. When the sub-band synthesis filter data is in the state shown in the rectangular area **222-2**, the data in the data area **202** is updated. In the same manner, when the sub-band synthesis filter data is in the state shown in the rectangular areas **222-3** through **222-16**, the data in the data area **203** through **216** is updated, respectively. Then, the data in the area **222-1** is again updated.

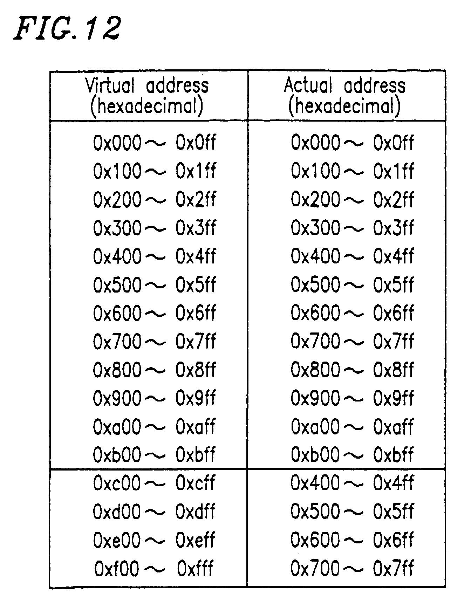

Figure **12** is a table showing the correspondence between the virtual addresses which are virtually allocated to the first memory section **110** by the virtual address allocation section **134** of Figure **8** and the actual addresses. As can be appreciated from Figure **12**, the addresses included in the memory areas **111** and **112** are respectively 0 through 3071 (0x000 through 0xbff in hexadecimal). The virtual addresses and the actual addresses have the same values where the virtual address-as are 0x000 through 0xbff. However, the virtual addresses 0xc00 through 0xfff indicate the actual addresses 0x000 through 0x7ff, respectively.

For example, the memory area **111B** in the first memory area **111** is allocated to the addresses 0x100 through 0x3ff, and the memory area **111A** is allocated to the addresses 0x400 through 0xbff. In the same manner, the memory area **112B** in the second memory area **112** is allocated to the addresses 0x100 through 0x3ff, and the memory area **112A** is allocated to the addresses 0x400 through 0xbff. Since the virtual address 0xc00 in each of the memory areas **111** and **112** is allocated to the actual address 0x400, the virtual address 0xc00 indicates the leading address of each of the memory areas **111A** and **112A**. The following virtual addresses indicate the actual addresses in the same manner.

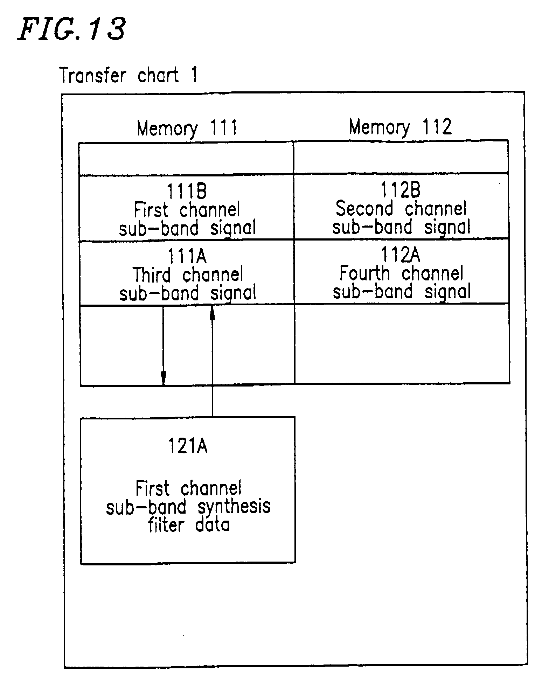

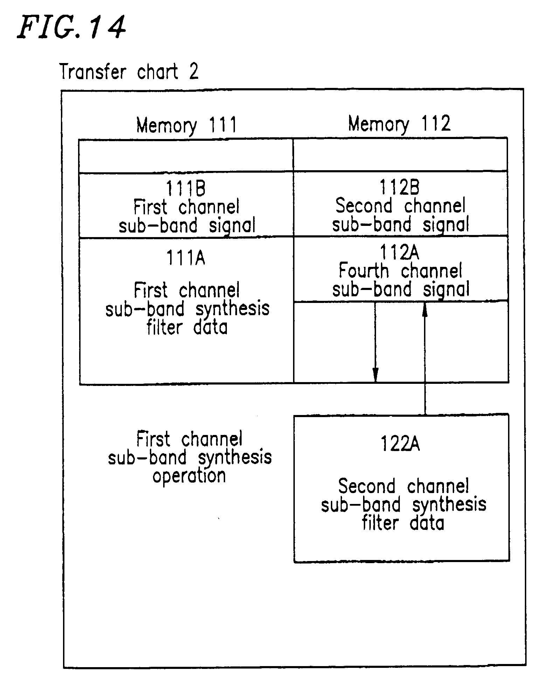

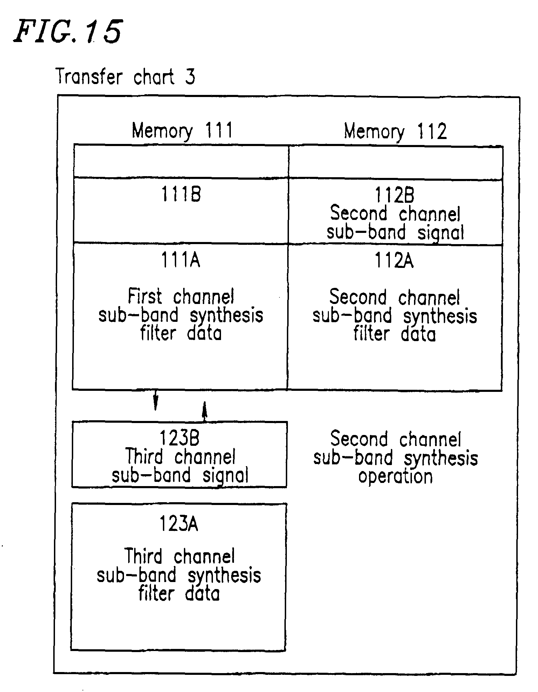

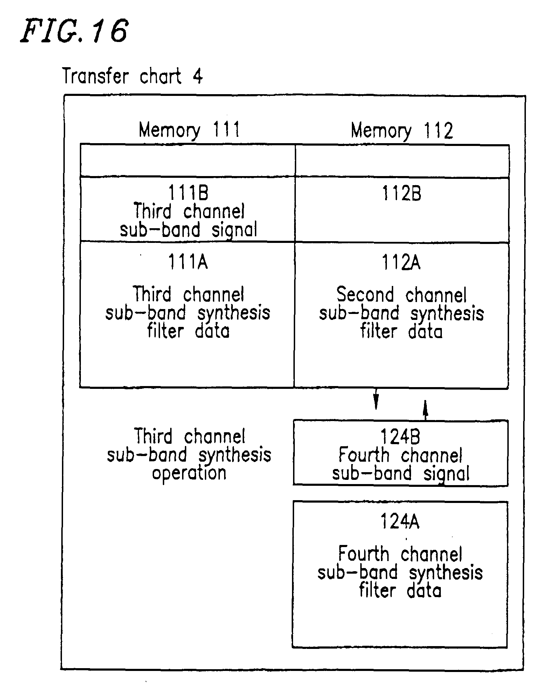

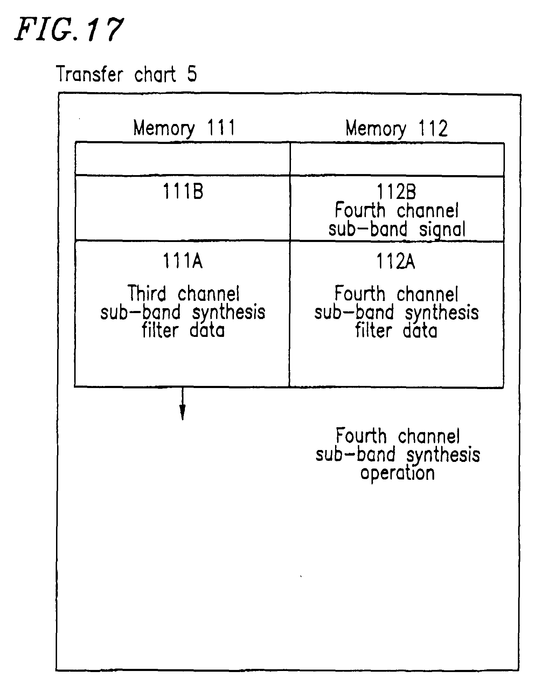

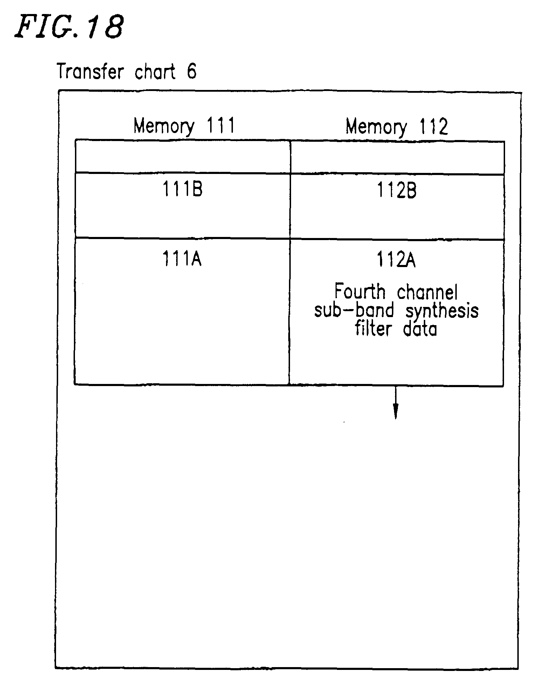

Figures **13** through **18** are timing charts of data transfer. Figures **13** through **18** respectively show transfer charts 1 through 6. Transfer chart 1 in Figure **13** shows data transfer before sub-band synthesis, and transfer chart 2 in Figure **14** shows data transfer during sub-band synthesis for the first channel. Transfer chart 3 in Figure **15** shows data transfer during sub-band synthesis for the second channel, and transfer chart 4 in Figure **16** shows data transfer during sub-band synthesis for the third channel. Transfer chart 5 in Figure **17** shows data transfer during sub-band synthesis for the fourth channel, and transfer chart 6 in Figure **18** shows data transfer after sub-band synthesis.

The audio decoding device **100** having the above-described structure operates in the following manner.

First, when a bit stream (including encoded audio signals) of multi-channels of MPEG2 (four channels) is input, the operation section **130** gives the bit stream to the sub-band signal generation section **131**, which decodes the bit stream into four-channel sub-band signals. Then, the sub-band signals for the i'th channel (i=1 in this example) are written into the memory area **111B**, and the sub-band signals for the j'th channel (j=2 in this example) are written into the memory area **112B**. The sub-band signals for the k'th channel (k=3 in this example) are written into a part of the memory area **111A**, and the sub-band signals for the l'th channel (l=4 in this example) are written into a part of the memory area **112A**.

Then, the continuous transfer instruction section **133** instructs the data transfer controller **140** to transfer data in the following manner based on a request from the operation section **130**. As shown in transfer chart 1 (Figure **13**), the sub-band signal data for the third channel stored in the memory area **111A** in the first memory section **110** is transferred to the memory area **123B** in the second memory section **120**. The sub-band synthesis filter data for the first channel stored in the memory area **121A** in the second memory section **120** is transferred to the memory area **111A** in the first memory section **110**.

Thus, the data transfer controller **140** transfers the sub-band signal data for the third channel from the memory area **111A** to the memory area **123B**, and immediately thereafter, transfers the sub-band synthesis filter data for the first channel from the memory area **121A** to the memory area **111A**. when the data transfer is completed, the data transfer controller **140** notifies the operation section **130** of the completion of the data transfer.

The operation section **130**, when to have been completed the data transfer is determined, requests the continuous transfer instruction section **133** to transfer data in the following manner.

As shown in transfer chart 2 (Figure **14**), the sub-band signal data for the fourth channel stored in the memory area **112A** in the first memory section **110** is transferred to the memory area **124B** in the second memory section **120**. The sub-band synthesis filter data for the second channel stored in the memory area **122A** in the second memory section **120** is transferred to the memory area **112A** in the first memory section **110**. In parallel with the above transfer operation, the operation section **130** starts the sub-band synthesis filter operation for the first channel by the sub-band synthesis section **132** using the data in the first memory area **111**.

At this point, the sub-band synthesis filter data in the data area **201** of the data **222-1** (Figure **9**) is updated. In other words, the data at addresses 0x680 through 0x6ff in the first memory area **111** is updated. After that, the 32-sample audio signals are obtained by performing the multiply-accumulate operation 16 times. In order to uniformize the order of assignment of the coefficient D, the sub-band synthesis filter data used in the operation is assigned sequentially sample by sample, starting from the newly updated sample. Specifically, one sample corresponding to 1/16 of the newly-updated sub-band synthesis filter data, i.e., the data in the data area **201**, is first assigned, the next sample corresponding to 1/16 of the sub-band synthesis filter data updated by the immediately previous operation, i.e., the data in the data area **216**, is then assigned, and so on, for the data in the data areas **215**, **214** ... to **203** and **202**.

When the sub-band synthesis filter data in the data area **206** and later (0x400 - ) is assigned after the sub-band synthesis filter data in the data area **207** (0xb80 through 0xbff) is assigned, circulating address processing is required on the actual addresses in order to set the addresses. The circulating address processing is performed by the following AND operation. Where the address before conversion is A, the address after the conversion B is:

$$B=\{(A-0x400)\times(0x7ff)\}+0x400$$

where $\times$ represents the AND operation.

However, the operation section **130** in this example includes the virtual address allocation section **134** and thus does not require the circulating address processing including the AND operation. The data up to sub-band synthesis filter data at the actual addresses 0x400 through 0x7ff, i.e., data areas **206** through **201**, **216** and **215** can be allocated using the virtual addresses 0xc00 through 0xfff.

In the subsequent sub-band synthesis filter operation also, as shown in the rectangular area **222-2** (Figure **9**), the data in the data area **202** is updated, and the multiply-accumulate operation is performed using the sub-band synthesis filter data in the data areas **201**, **216** through **207**, and **206** through **202**, thereby obtaining an audio signal.

Furthermore, also in the subsequent sub-band synthesis filter operation, as shown in the rectangular area **222-3** (Figure **9**), the data in the data area **203** is updated, and the multiply-accumulate operation is performed using the sub-band synthesis filter data in the data areas **202** and **201**, **216** through **207**, and **206** through **203**, thereby obtaining an audio signal.

Also in the sixth sub-band synthesis filter operation immediately before the transfer of the audio signal, as shown in the rectangular area **222-6** (Figure **9**), the data in the data area **206** is updated, and the multiply-accumulate operation is performed using the sub-band synthesis filter data in the data areas **205** through **201**, **216** through **207** and **206**, thereby obtaining an audio signal. As described above, the multiply-accumulate operation with the coefficient D can be performed without circulating address processing in any of the sub-band synthesis filter operation performed six times.

The data transfer controller **140** performs data transfer while the operation section **130** performs the sub-band synthesis filter operation. When the transfer is completed, the data transfer controller **140** notifies the operation section **130** of the completion of the data transfer. When both the data transfer and the sub-band synthesis filter operation for the first channel are completed, the continuous transfer instruction section **133** instructs the data transfer controller **140** to transfer an audio signal in the following manner, based on a request of the operation section **130**.

As shown in transfer chart 3 (Figure **15**), continuous transfer instruction section **133** instructs to transfer the sub-band synthesis filter data for the first channel stored in the memory area **111A** in the first memory section **110** to the memory area **121A** in the second memory section **120**. The continuous transfer instruction section **133** further instructs to transfer the sub-band synthesis filter data for the third channel stored in the memory area **123A** in the second memory section **120** to the memory area **111A** in the first memory section **110**. The continuous transfer instruction section **133** also instructs to transfer the sub-band signal data for the third channel stored in the memory area **123B** in the second memory section **120** to the memory area **111B** in the first memory section **110**. The sub-band synthesis section **132** starts the sub-band synthesis filter operation for the second channel using the data in the second memory area **112**.

The transfer of the sub-band synthesis filter data for the first channel and the third channel is performed between the rectangular areas **222-6** (Figure **9**) and the rectangular areas **222-7** (Figure **10**). The transfer of the sub-band synthesis filter data for the first channel is performed as follows. The area **200** is divided into A1 including the data areas **206** through **201** and **216** through **213** and A2 including the data areas **212** through **207**, and the data in one of them is first transferred and the data in the other is then transferred. By such an operation, the order of assigning the addresses of the sub-band synthesis filter data for the subsequent transfer of the data for the first channel is exactly the same as that of the previous transfer.

In this stage, the sub-band synthesis filter operation for the second channel is performed in the same manner as that for the first channel using the second memory area **112**. The data transfer controller **140** performs data transfer while the sub-band synthesis section **132** performs the sub-band synthesis filter operation. When the transfer is completed, the data transfer controller **140** notifies the operation section **130** of the completion of the data transfer.

When both the data transfer and the sub-band synthesis filter operation for the second channel are completed, the operation section **130** requests the continuous transfer instruction section **133** to transfer data in the following manner.

As shown in transfer chart 4 (Figure **16**), the continuous transfer instruction section **133** instructs transfer of the sub-band synthesis filter data for the second channel stored in the memory area **112A** in the first memory section **110** to the memory area **122A** in the second memory section **120**. The continuous transfer instruction section **133** further instructs transfer of the sub-band synthesis filter data for the fourth channel stored in the memory area **124A** in the second memory section **120** to the memory area **112A** in the first memory section **110**. Then, the continuous transfer instruction section **133** instructs to transfer the sub-band signal data for the fourth channel stored in the memory area **124B** in the second memory section **120** to the memory area **112B** in the first memory section **110**. The sub-band synthesis section **132** starts the sub-band synthesis filter operation for the third channel using the data in the first memory area **111** in parallel with the above-described transfer operation.

The transfer of the sub-band synthesis filter data for the second channel and the fourth channel is performed between the rectangular areas **222-6** (Figure **9**) and the rectangular areas **222-7** (Figure **10**) in the same manner as that between the first channel and the third channel. The area **200** is divided into A1 (Figure **9**) including the data areas **206** through **201** and **216** through **213** and A2 including the data areas **212** through **207**, and the data in one of them is first transferred and the data in the other is then transferred.

When both the data transfer and the sub-band synthesis filter operation for the third channel are completed, the operation section **130** requests the continuous transfer instruction section **133** to transfer data in the following manner.

As shown in transfer chart 5 (Figure **17**), the sub-band synthesis filter data for the third channel stored in the memory area **111A** in the first memory section **110** is transferred to the memory area **123A** in the second memory section **120**. The sub-band synthesis section **132** starts the sub-band synthesis filter operation for the fourth channel using the data in the second memory area **112**.

When both the data transfer and the sub-band synthesis filter operation for the fourth channel are completed, the operation section **130** requests the continuous transfer instruction section **133** to transfer data in the following manner.

As shown in transfer chart 6 (Figure **18**), the continuous transfer instruction section **133** instructs to transfer the sub-band synthesis filter data for the fourth channel stored in the memory area **112A** in the first memory section **110** to the memory area **124A** in the second memory section **120**.

Then, in the next step, 192-sample sub-band signals are generated for each channel by the sub-band signal generation section **131**. Next, sub-band synthesis operation and data transfer are performed in parallel. The transfer of the sub-band synthesis filter data for any of the channels from the first memory section **110** to the second memory section **120** is performed between the rectangular areas **222-12** (Figure **10**) and the rectangular areas **222-13** (Figure **11**). The area **200** is divided into B1 (Figure **10**) including the data areas **212** through **203** and B2 including the data areas **202**, **201** and **216** through **213**, and the data in one of them is first transferred and the data in the other is then transferred.

As can be appreciated from the above description, the audio decoding device **100** in this example uses a DRAM, which costs less than an SRAM, for the second memory section **120** for storing the data corresponding to all the channels in the second memory section **120**. The data in the second memory section **120** is transferred to the first memory section **110** using the data transfer controller **140** only when necessary. Accordingly, the multi-channel audio signals can be reproduced at a high speed without increasing the capacity of the internal memory in the processor. Since the SRAM does not need to be connected externally, the cost of the entire device can be reduced.

In the audio decoding device **100** in this example, the sub-band synthesis filter operation and the data transfer can be performed in parallel, and thus the time period required for the operation processing can be shortened by the time period required for the data transfer. Since an amount of data corresponding to a plurality of transfer operations can be transferred by a single transfer operation, the circulating address processing and the shift processing of the sub-band synthesis filter data are not required in the sub-band synthesis operation, where a virtual address allocation section is used. Further, since the data transfer can be performed a plurality of times, the data transfer is easier to schedule in accordance with the time period required for data transfer and for generation of the audio signal. Thus, the time loss caused by the data transfer can be reduced and the processing time can be shortened.

In this example, for simplicity of the description, the number of channels for input signals is assumed to be four. However, the number of channels is not limited to four.

In this example, any possible method is usable for the processing performed in parallel with the data transfer before the sub-band synthesis for the first channel or the processing in parallel with the transfer of the sub-band synthesis filter data for the final channel. For example, after the sub-band synthesis filter data for the final channel is transferred, a signal can be input to generate a sub-band signal. In such a case, loss caused by the data transfer can be reduced.

Example 5

An audio decoding device of Example 5 receives coded signals for multi-channels (five channels) of the layer 2 of MPEG2 and decodes the coded signals into an audio signal. The layer 2 of MPEG2 is described in detail in ISO/IEC 11172-3:1993 and 13818-3:1996.

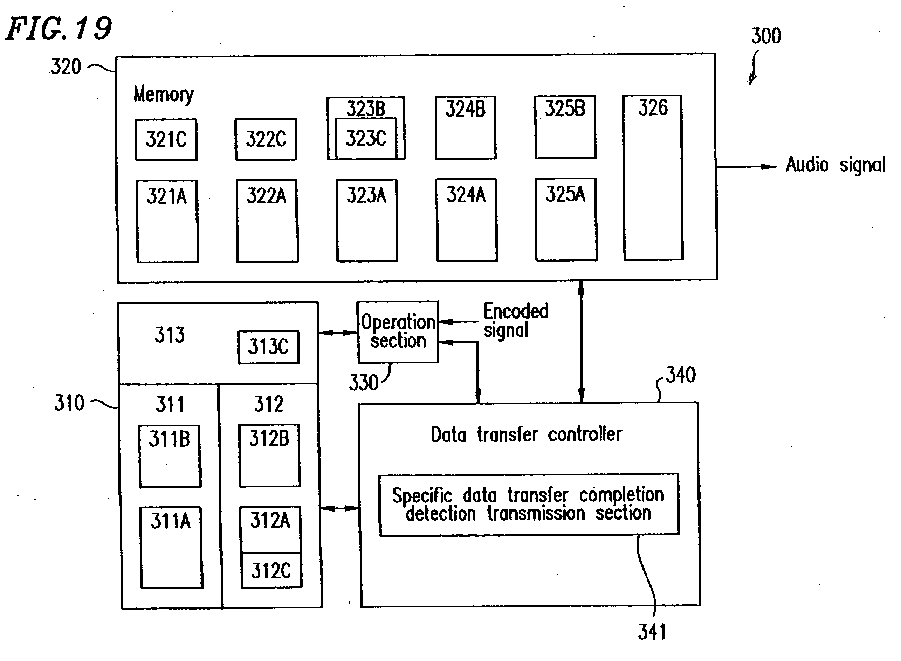

Figure **19** is a block diagram of the audio decoding device **300** according to Example 5 of the present invention. The audio decoding device **300** includes a first memory section **310**, a second memory section **320**, an operation section **330** and a data transfer controller **340**. The first memory section **310** includes an SRAM capable of high-speed access, and is divided into a memory area **311** (first memory area), a memory area **312** (second memory area) and a memory area **313** (third memory area). An important signal processing section of the audio decoding device **300** includes one-chip multimedia processor, which includes an internal memory. While the internal memory is used mainly for image data processing, the first memory section **310** is a memory area of the internal memory which is saved for processing audio data.

The first memory area **311** stores audio data for **X** channels, where **X** is an integer changing in the range of 1 through $N_A$, and includes two memory areas **311A** and **311B**. The memory area **311B** primarily stores sub-band signals for **X** channels and the memory area **311A** primarily stores sub-band synthesis filter data for **X** channels.

The second memory area **312** stores coded audio data for **Y** channels, where **Y** is an integer changing in the range of 1 through $N_A$ and different from **X**, and includes two memory areas **312A** and **312B**. A memory area **312C** is provided inside the memory area **312A**.

The memory area **312B** primarily stores sub-band signals for **Y** channels, and the memory area **312A** primarily stores sub-band synthesis filter data for **Y** channels. The memory area **312C** is an area in which the operation section **330** temporarily (at least from the time when the sub-band signals have been generated to the time when the first sub-band synthesis for one of the channels is completed) stores some of the sub-band signals generated in the third sub-band synthesis for another one of the channels.

The memory area **313** is an area for storing data such as header information of the input signal. The memory area

313 is provided with a memory area 313C in which the operation section 330 temporarily (at least from the time when the sub-band signals have been generated to the time when sub-band synthesis for one of the channels is completed) stores sub-band signals of the other channels. In the following description, $N_A$=5.

The second memory section 320 is a memory including a large capacity DRAM externally connected to the processor. The second memory section 320 is divided into memory areas 321A through 325A, 323B through 325B, 321C through 323C, and 326.

The memory areas 321A through 325A each store sub-band synthesis filter data for one channel. For example, the sub-band synthesis filter data for a first channel is scored in the memory area 321A, the sub-band synthesis filter data for a second channel is stored in the memory area 322A, the sub-band synthesis filter data for a third channel is stored in the memory area 323A, the sub-band synthesis filter data for a fourth channel is stored in the memory area 324A, and the sub-band synthesis filter data for a fifth channel is stored in the memory area 325A.

Part of the sub-band signal data for the third channel is stored in the memory area 323B, the sub-band signal data for the fourth channel is stored in the memory area 324B, and the sub-band signal data for the fifth channel is stored in the memory area 325B.

The memory area 321C stores the PCM data for the first channel, the memory area 322C stores the sub-band signals for the second channel, and the memory area 323C stores the sub-band signals for the third channel.

The memory area 326 is used as an audio signal buffer and stores interleaved data in which the PCM data of the first to fifth channels is arranged in a data format comparable to that of the audio signal.

The memory areas 311A and 312A in the first memory section 310 and the memory areas 321A through 325A in the second memory section 320 are all of identical size. For a more practical description, the area of each of these memory areas can include addresses 1 through 2048 (0x800 in hexadecimal).

Similarly, the memory area 311B in the first memory section 310, the memory area 312B in the first memory section 310, the total of the memory areas 312C and 313C, and the total of the memory areas 324B and 325B are all of identical size. For a more practical description, the area of each of these memory areas can include addresses 1 through 768 (0x300 in hexadecimal).

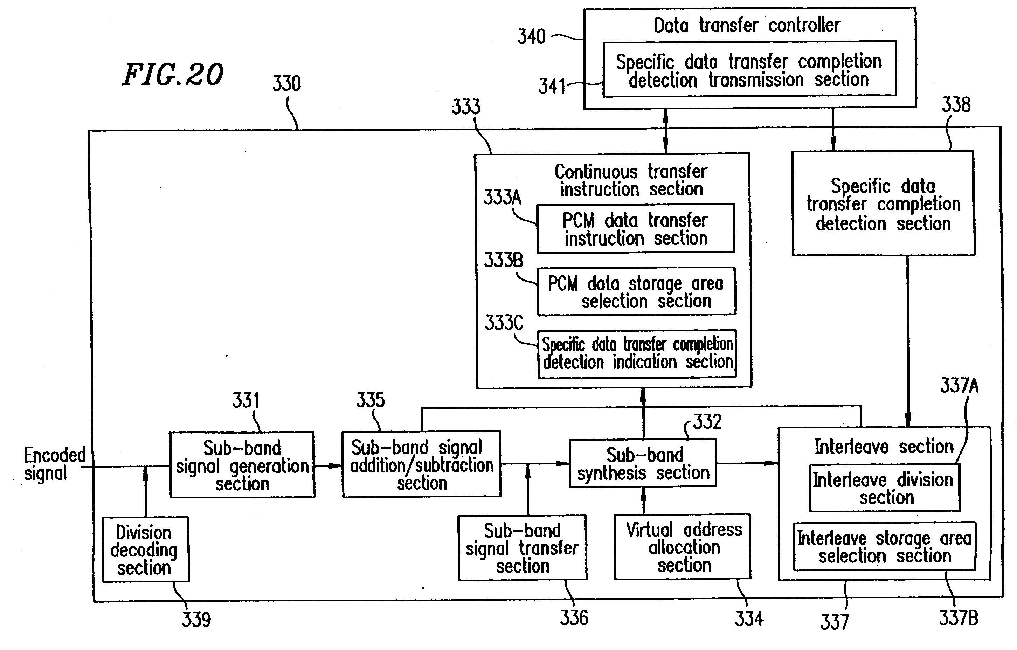

Figure 20 illustrates a configuration of the operation section 330. As illustrated in Figure 20, the operation section 330 includes a sub-band signal generation section 331, a sub-band synthesis section 332, a continuous transfer instruction section 333, a virtual address allocation section 334, a sub-band signal addition/subtraction section 335, a sub-band signal transfer section 336, an interleave section 337, a specific data transfer completion detection section 338 and a division decoding section 339.

The sub-band signal generation section 331 decodes an externally input signal into a sub-band signal. The sub-band signal addition/subtraction section 335 performs a preparatory process for the sub-band signal prior to the sub-band synthesis operation in order to reduce the amount of calculation required for the sub-band synthesis (see Konstantinos Konstantinides, "Fast Subband Filtering in MPEG Audio Coding", IEEE 1994).

The sub-band synthesis section 332 performs a channel-by-channel sub-band synthesis filter operation using the sub-band synthesis filter data and the sub-band signals to generate an audio signal. The interleave section 337 takes samples of PCM data from the respective channels and rearranges them in a predetermined order. The interleave section 337 includes an interleave division section 337A and an interleave storage area selection section 337B. The interleave division section 337A divides the process into r steps, where r≥2.

In the present example, the interleave process is assumed to be performed in two steps (i.e., the first and second halves) as equally divided by the interleave division section 337A. The interleave storage area selection section 337B is for selectively using storage areas in the first memory section 310 for the interleave process depending upon whether the number of channels of the input audio coded signals to be decoded by the sub-band synthesis operation is even or odd. Specifically, when the number of channels to be decoded by the sub-band synthesis operation is even, the first memory area 311 is selected as the data storage area for the first half of the interleave process while the second memory area 312 is selected as the data storage area for the second half of the interleave process. When the number of channels to be decoded is odd, the second memory area 312 is selected as the data storage area for the first half of the interleave process while the first memory area 311 is selected as the data storage area for the second half of the interleave process.

The continuous transfer instruction section 333 specifies specific memory areas respectively in the first memory section 310 and the second memory section 320, and instructs the data transfer controller 340 to perform one or more data transfer operations. The continuous transfer instruction section 333 includes a PCM data transfer instruction section 333A, a PCM data transfer/storage area selection section 333B and a specific data transfer completion detection indication section 333C.

The PCM data transfer instruction section 333A instructs to transfer, between the first memory section 310 and the second memory section 320, t-2 channels of PCM data, out of the t channels of PCM data, which are decoded respectively in the first to (t-2)th sub-band synthesis operations, where the number of channels of the input audio signals to be decoded by the sub-band synthesis operation is t (t≥3). More specifically, the PCM data transfer instruction section

333A instructs to transfer the PCM data decoded respectively in the first to (t-2)th sub-band synthesis operations, along with the sub-band synthesis filter data of the respective channels, from the first memory section 310 to the second memory section 320. Moreover, the PCM data transfer instruction section 333A instructs to transfer, in parallel with the sub-band synthesis operation for the final channel, the PCM data decoded respectively in the first to (t-2)th sub-band synthesis operations from the second memory section 320 to the first memory section 310.

The PCM data storage area selection section 333B is for selectively using storage areas in the first memory section 310, to which PCM data is transferred, depending upon whether the number of channels of the audio coded signals to be decoded by the sub-band synthesis operation is even or odd, where the PCM data is transferred from the second memory section 320 to the first memory section 310 in parallel with the sub-band synthesis operation for the final channel at the PCM data transfer instruction section 333A. In the present example, the first memory area 311 is selected when the number of channels to be decoded is even, while the second memory area 312 is selected when the number of channels to be decoded is odd.

The specific data transfer completion detection indication section 333C notifies the data transfer controller 340 of the detected completion of the p'th $(1 \geq p < q)$ transfer, where q (q>1) data transfer operations are performed between the first memory section 310 and the second memory section 320. In the present example, when it is instructed to transfer the sub-band synthesis filter data of the sub-band synthesis for the final channel from the first memory section 310 to the second memory section 320, the first transferred portion (corresponding to A2 in Figure 10) of the sub-band synthesis filter data for the final channel is assumed to be the p'th transfer operation.

The sub-band signal transfer section 336 transfers some or all of the sub-band signals for a specific channel in the first memory section 310 to a specific area in the first memory section 310, only when the number of sub-band synthesis channels for the input audio coded data is 3 or more.

The specific data transfer completion detection section 338 receives, from the data transfer controller 340, a signal indicating the detected completion of the p'th $(1 \geq p < q)$ transfer out of the q (q>1) data transfer operations between the first memory section 310 and the second memory section 320.

The virtual address allocation section 334 assumes a virtual address exists following the actual address at a termination point of each of the memory areas 311A and 312A, and allocates the start point of the virtual address to the actual address at the start of each of the memory areas 311A and 312A. The virtual address allocation section 334 further allocates virtual addresses to the subsequent actual addresses in this manner sequentially.

For the sub-band signal generation process, the sub-band synthesis process and the interleave process performed for decoding one frame of audio signals for each channel, the division decoding section 339 equally divides the processing unit, i.e., one frame, into y processing blocks $(y \leq 2)$, and performs the sub-band synthesis process. When b denotes the number of sub-bands while c denotes the number of samples generated in one processing block, the number a of samples of PCM data generated for each channel in one frame is $b \times c \times y$. In this example, for simplicity of the description, y=6, and the processing unit in the divided processes is a block.

For example, as shown by the format described in ISO/IEC 11172-3:1993 and 13818-3:1996, the number of sub-bands for sub-band signals generated by the sub-band signal generation section 331 is 32 for each channel. The sample number of the sub-band signal samples in one frame is 1152 per channel. In the present example, since the sub-band signal generation process, the sub-band synthesis process and the interleave process performed for one frame for each channel are each divided into six processing blocks, the number of samples of sub-band signals and PCM data generated in one block is 192 (32×6) for each channel.

The data transfer controller 340 illustrated in Figure 19 transfers data from the first memory section 310 to the second memory section 320 or from the second memory section 320 to the first memory section 310 based on the instructions from the continuous transfer instruction section 333. The data transfer controller 340 includes a specific data transfer completion detection transmission section 341 provided therein.

The specific data transfer completion detection transmission section 341, based on the instruction from the continuous transfer instruction section 333 detects completion of the p'th $(1 \geq p < q)$ transfer out of the q (q>1) data transfer operations between the first memory section 310 and the second memory section 320.

The operation section 330 instructs data transfer between one of the memory areas 311 and 312 and the second memory section 320 externally connected to the processor. In parallel with the subsequent data transfer, the operation section performs operation processes. When the operation section 330 performs the sub-band synthesis process, the sub-band synthesis filter operation for one channel is performed using the other one of the memory areas. Moreover, for the operation processes, any of the memory areas 311, 312 and 313 may be used as long as the data transfer area in the first memory section 310 and the storage area for the calculated values do not overlap each other.

Thus, the generation of an audio signal and the transfer of the data are parallel-processed. For example, when the data transfer is performed between the first memory area 311 in the first memory section 310 and the second memory section 320, the operation section 330 performs the sub-band synthesis operation using the data in the second memory area 312 in the first memory section 310. When the data transfer is performed between the second memory area 312 and the second memory section 320, the operation section 330 performs the sub-band synthesis operation using the data in the first memory area **311**.

In Example 5, the arrangement of the sub-band synthesis filter data generated per channel and the change over time are similar to those in Example 4 (Figures **9** to **11**). The correspondence of the virtual addresses allocated to the first memory section **310** by the virtual address allocation section **334** in Figure **20** with respect to the actual addresses is also similar to that in Example 4 (Figure **12**). Moreover, the operation described with reference to Figures **9** to **12** is the same as that illustrated in Example 4, and therefore will not be further described in the present example.

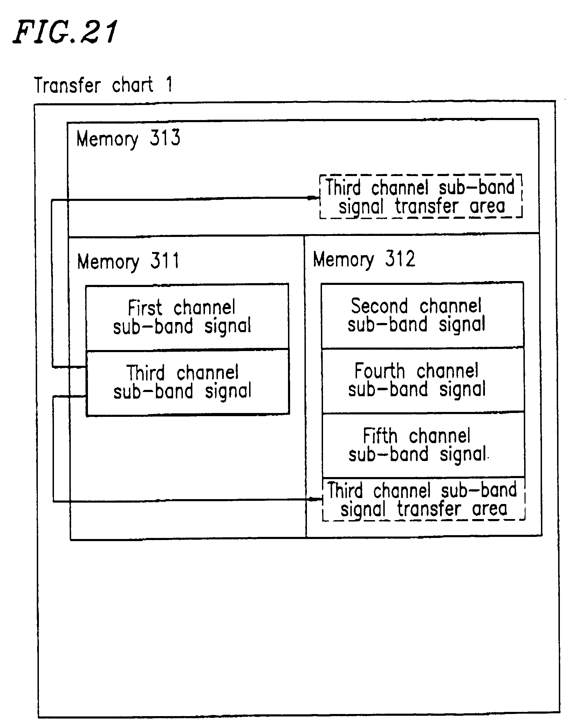

Figures **21** to **32** illustrate data transfer charts in accordance with the present example. Twelve transfer charts 1 to 12 are illustrated in detail.

The audio decoding device **300** having the above-described structure operates in the following manner.

First, when a bit stream (including encoded audio signals) of multi-channels of MPEG2 (five channels) is input, the operation section **330** gives the audio coded signals to the sub-band signal generation section **331**, which decodes the signals into five-channel sub-band signals.

Transfer chart 1 of Figure **21** illustrates data transfer within the first memory section **310**. Then, the operation section **330** writes the sub-band signals for the i'th channel (i=1 in this example) into the memory area **311B**, the sub-band signals for the j'th channel (j=2 in this example) into the memory area **312B**, the sub-band signals for the k'th channel (k=3 in this example) into a part of the memory area **311A**, and the sub-band signals for the l'th channel (l=4 in this example) and the sub-band signals for the m'th channel (m=5 in this example) respectively into parts of the memory area **312A**.

Then, the operation section **330** requests the sub-band signal addition/subtraction section **335** to perform the addition/subtraction operation of the sub-band signals for the third channel. After the addition/subtraction operation of the sub-band signals for the third channel, the operation section **330** instructs the sub-band signal transfer section **336** to transfer the first half of the sub-band signals for the third channel, for which the addition/subtraction operation has been performed, to the memory area **312C** and the second half thereof to the memory area **313C**.

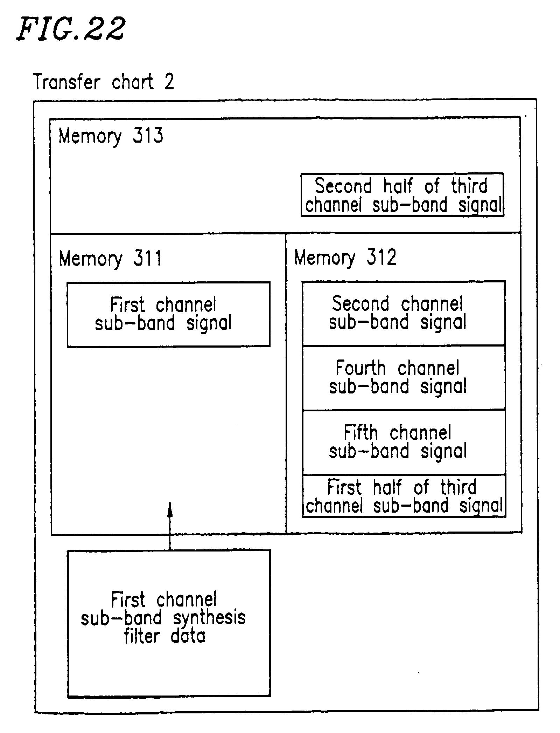

Transfer chart 2 of Figure **22** illustrates data transfer in the addition/subtraction operation for the first, second, fourth and fifth channels of sub-band signals. The continuous transfer instruction section **333**, based on the request from the operation section **330**, instructs the data transfer controller **340** to transfer data in the following manner.

As illustrated in Figure **22**, the continuous transfer instruction section **333** instructs to transfer the sub-band synthesis filter data for the first channel stored in the memory area **321A** in the second memory section **320** to the memory area **311A** in the first memory section **310**.

Thus, the data transfer controller **340** transfers the sub-band signal data for the first channel from the memory area **321A** to the memory area **311A**. When the data transfer is completed, the data transfer controller **340** notifies the operation section **330** of the completion of the transfer, via the specific data transfer completion detection transmission section **341**.

Next, the operation section **330** requests the continuous transfer instruction section **333** to perform data transfer, while making the sub-band signal addition/subtraction section **335** start the addition/subtraction operation of the first, second, fourth and fifth channels of sub-band signals. Thus, the operation section **330** transfers the sub-band synthesis filter data for the first channel from the memory area **321A** to the memory area **311A** while the addition/subtraction operation of the first, second, fourth and fifth channels of sub-band signals is performed in parallel.

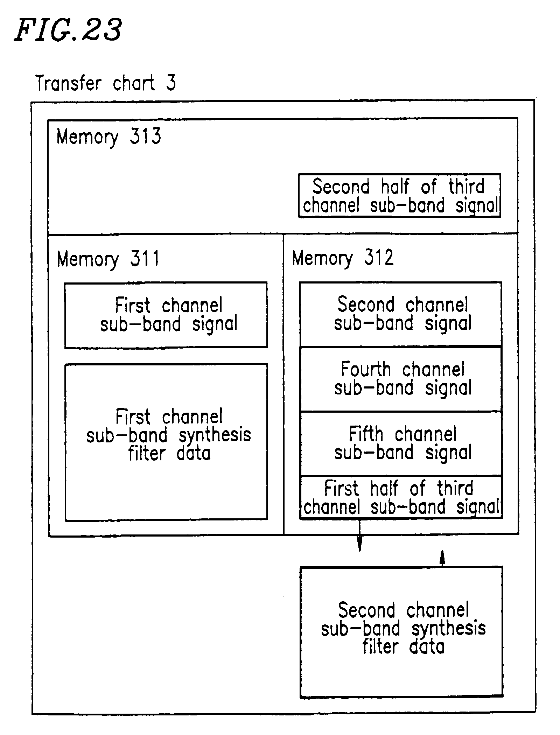

Transfer chart 3 of Figure **23** illustrates data transfer in the synthesis operation for the first channel of sub-band signals. When the operation section **330** is notified of the completion of transfer after the completion of the addition/subtraction operation of the first, second, fourth and fifth channels of sub-band signals, the operation section **330** requests the continuous transfer instruction section **333** to transfer data in the following manner.

As illustrated in Figure **23**, the operation section **330** instructs to transfer the sub-band signals for the fourth and fifth channels and the first half of the sub-band signals for the third channel stored in the memory area **321A** respectively to the memory areas **324B**, **325B** and **323B** in the second memory section **320**. Then, the operation section **330** instructs to transfer the sub-band synthesis filter data for the second channel stored in the memory area **322A** to the memory area **312A**.

In parallel with this, the operation section **330** starts the sub-band synthesis filter operation of the first channel by the sub-band synthesis section **332** using the data in the first memory area **311**. At this point, as in Example 4, the sub-band synthesis filter data in the data area **222-1** (Figure **9**) is updated. In other words, the data at addresses 0x680 through 0x6ff in the first memory area **311** is updated. After that, the 32-sample audio signals are obtained by performing the multiply-accumulate operation, as in the expressions (6) and (7), 16 times.

In order to uniformize the order of assignment of the window coefficient, the sub-band synthesis data used in the operation is assigned sequentially sample by sample, starting from the newly updated sample. Specifically, one sample corresponding to 1/16 of the newly-updated sub-band synthesis filter data, i.e., the data in the data area **201**, is first assigned, and next one sample corresponding to 1/16 of the sub-band synthesis filter data updated by the immediately previous operation, i.e., the data in the data area **216**, is then assigned, and so on, for the data in the data area **215**, **214** ... to **203** and **202**.

When the sub-band synthesis filter data in the data area **206** and later (0x400 - ) is assigned after the sub-band synthesis filter data in the data area **207** (0xb80 through 0xbff) is assigned, circulating address processing is required on the actual addresses in order to set the addresses. The circulating address processing is performed by the following AND operation. Where the address before conversion is A, the address after the conversion B is:

$$B=\{(A\text{-}0x400)\times(0x7ff)\}+0x400$$

where × represents the AND operation.

However, the operation section **330** in this example includes the virtual address allocation section **334** and thus does not require the circulating address processing including the AND operation. The data up to sub-band synthesis filter data at the actual addresses 0x400 through 0x7ff, i.e., data areas **206** through **201**, **216** and **215** can be allocated using the virtual addresses 0xc00 through 0xfff.

In the subsequent sub-band synthesis filter operation also, as shown in the rectangular area **222-2** (Figure **9**), the data in the data area **202** is updated, and the multiply-accumulate operation is performed using the sub-band synthesis filter data in the data areas **201**, **216** through **207**, and **206** through **202**, thereby obtaining an audio signal.

Furthermore, also in the subsequent sub-band synthesis filter operation, as shown in the rectangular area **222-3** (Figure **9**), the data in the data area **203** is updated, and the multiply-accumulate operation is performed using the sub-band synthesis filter data in the data areas **202** and **201**, **216** through **207**, and **206** through **203**, thereby obtaining an audio signal.

Also in the sixth sub-band synthesis filter operation immediately before the transfer of the audio signal, as shown in the rectangular area **222-6** (Figure **9**), the data in the data area **206** is updated, and the multiply-accumulate operation is performed using the sub-band synthesis filter data in the data areas **205** through **201**, **216** through **207** and **206**, thereby obtaining an audio signal. As described above, the multiply-accumulate operation with the window coefficient can be performed without circulating address processing in any of the sub-band synthesis filter operation performed six times.

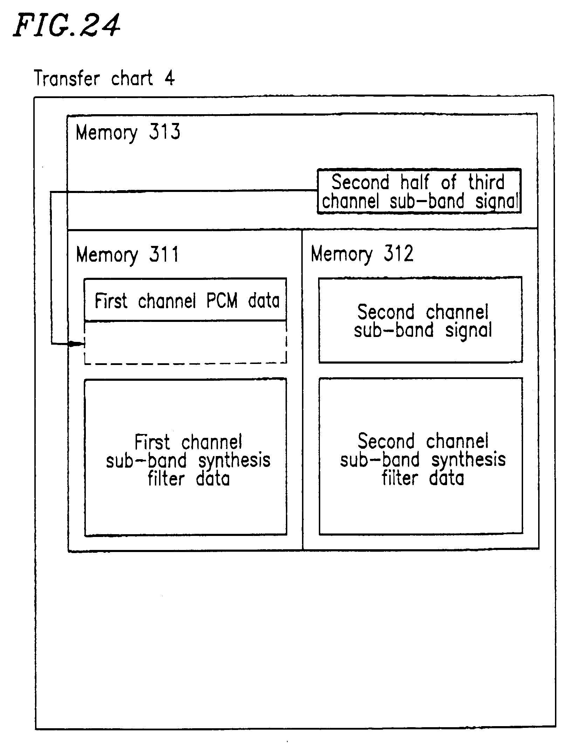

Transfer chart 4 of Figure **24** illustrates data transfer of the second half of the sub-band signals for the third channel within the first memory section **310**. After the completion of the sub-band synthesis operation for the first channel, the operation section **330** instructs the sub-band signal transfer section **336** to transfer the second half data of the sub-band signals for the third channel stored in the memory area **313C** in the first memory section **310** to the second half of the memory area **311B**. The first channel PCM data decoded in the sub-band synthesis operation for the first channel in the data area **311B** and the second half of the third channel sub-band signals are located so as not to overlap each other.

On the other hand, the data transfer controller **340** performs data transfer while the operation section **330** performs the sub-band synthesis filter operation and, when the transfer is completed, notifies the operation section **330** of the completion of the transfer.

When both the data transfer and the sub-band synthesis filter operation for the first channel are completed, the continuous transfer instruction section **333** instructs the data transfer controller **340** to transfer data in the following manner based on the request from the operation section **330**.

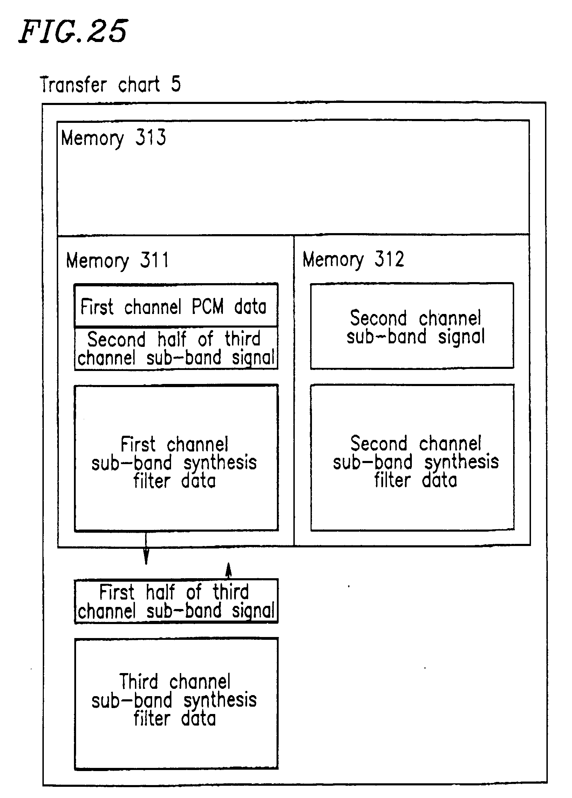

Transfer chart 5 of Figure **25** illustrates data transfer in the sub-band synthesis operation for the second channel. As illustrated in Figure **25**, the continuous transfer instruction section **333** instructs to transfer the sub-band synthesis filter data for the first channel stored in the memory area **311A** in the first memory section **310** to the memory area **312A** in the second memory section **320**.

Then, the continuous transfer instruction section **333** instructs the PCM data transfer instruction section **333A** to transfer the PCM data for the first channel stored in the memory area **311B** in the first memory section **310** to the memory area **321C** in the second memory section **320**.

Moreover, the continuous transfer instruction section **333** instructs to transfer the sub-band synthesis filter data for the third channel stored in the memory area **323A** in the second memory section **320** to the memory area **311A** in the first memory section **310**. The continuous transfer instruction section **333** also instructs to transfer the first half of the sub-band signals for the third channel stored in the memory area **323B** in the second memory section **320** to the first half of the memory area **311B** in the first memory section **310**.

The first half of the sub-band signals for the third channel which is transferred to the memory area **311B** is located to be consecutive and not to overlap with the second half of the sub-band signals for the third channel, which have already been transferred and located. Then, the sub-band synthesis section **332** starts the sub-band synthesis filter operation for the second channel using the data in the second memory area **312**.

The data transfer of the sub-band synthesis filter data for the first channel is performed between **222-6** (Figure **9**) and **222-7** (Figure **10**). The area **200** is divided into A1 including the data areas **206** through **201** and **216** through **213** and A2 including the data areas **212** through **207**, and the data in one of them is first transferred and the data in the other is then transferred. By such an operation, the order of assigning the addresses of the sub-band synthesis filter data for the subsequent transfer of the data for the first channel is exactly the same as that of the previous transfer.

At this stage, the sub-band synthesis filter operation for the second channel is performed in the same manner as that for the first channel using the second memory area **312**. The data transfer controller **340** performs data transfer while the sub-band synthesis section **332** performs the sub-band synthesis filter operation. When the transfer is completed, the data transfer controller **340** notifies the operation section **330** of the completion of the data transfer.

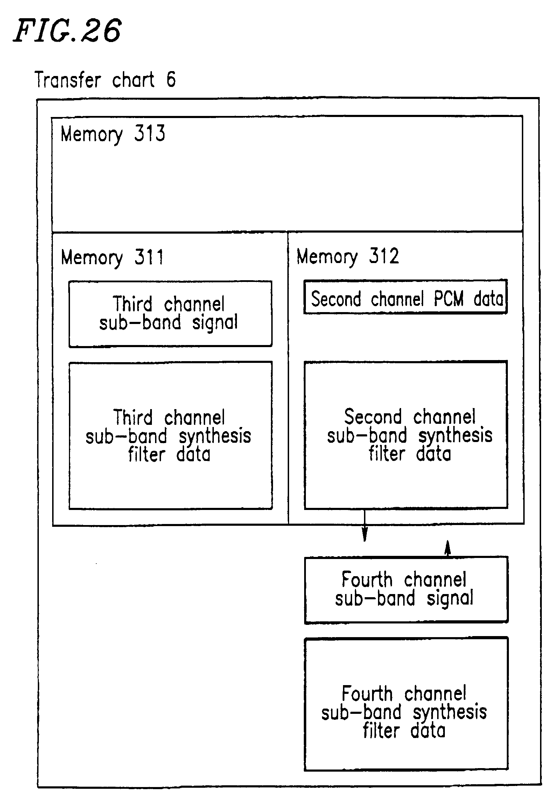

Transfer chart 6 of Figure **26** illustrates data transfer in the sub-band synthesis operation for the third channel. When both the data transfer and the sub-band synthesis filter operation for the second channel are completed, the operation section **330** requests the continuous transfer instruction section **333** to transfer data in the following manner.

As shown in transfer chart 6 (Figure **26**), the continuous transfer instruction section **333** instructs to transfer the sub-band synthesis filter data for the second channel stored in the memory area **312A** in the first memory section **310** to the memory area **322A** in the second memory section **320**.

Next, the continuous transfer instruction section **333** instructs the PCM data transfer instruction section **333A** to transfer the PCM data for the second channel stored in the memory area **312B** in the first memory section **310** to the memory area **322C** in the second memory section **320**.

Moreover, the continuous transfer instruction section **333** instructs to transfer the sub-band synthesis filter data for the fourth channel stored in the memory area **324A** in the second memory section **320** to the memory area **312A** in the first memory section **310**.

Then, the continuous transfer instruction section **333** instructs to transfer the sub-band signals for the fourth channel stored in the memory areas **324B** to the memory area **312B** in the first memory section **310**.

In parallel with the above transfer operation, the sub-band synthesis section **332** starts the sub-band synthesis filter operation for the third channel using the data in the memory area **311**.

The data transfer of the sub-band synthesis filter data for the second channel is performed between **222-6** (Figure **9**) and **222-7** (Figure **10**) in the same manner as that for the first channel. The area **200** is divided into A1 including the data areas **206** through **201** and **216** through **213** and A2 including the data areas **212** through **207**, and the data in one of them is first transferred and the data in the other is then transferred.

At this stage, the sub-band synthesis filter operation for the third channel is performed in the same manner as that for the first or second channel using the memory area **311**. The data transfer controller **340** performs data transfer while the sub-band synthesis section **332** performs the sub-band synthesis filter operation. When the transfer is completed, the data transfer controller **340** notifies the operation section **330** of the completion of the data transfer.

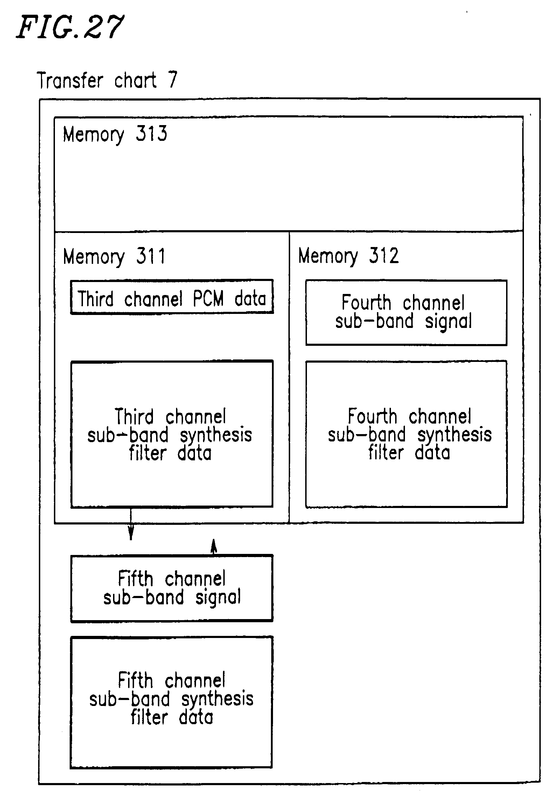

Transfer chart 7 of Figure **27** illustrates data transfer in the sub-band synthesis operation for the fourth channel. When both the data transfer and the sub-band synthesis filter operation for the third channel are completed, the operation section **330** requests the continuous transfer instruction section **333** to transfer data in the following manner.

As shown in transfer chart 7 (Figure **27**), the continuous transfer instruction section **333** instructs to transfer the sub-band synthesis filter data for the third channel stored in the memory area **311A** in the first memory section **310** to the memory area **323A** in the second memory section **320**.

Next, the continuous transfer instruction section **333** instructs the PCM data transfer instruction section **333A** to transfer the PCM data for the third channel stored in the memory area **311B** in the first memory section **310** to the memory area **323C** in the second memory section **320**.

Moreover, the continuous transfer instruction section **333** instructs to transfer the sub-band synthesis filter data for the fifth channel stored in the memory area **325A** in the second memory section **320** to the memory area **311A** in the first memory section **310**.

Then, the continuous transfer instruction section **333** instructs to transfer the sub-band signals for the fifth channel stored in the memory areas **325B** to the memory area **311B** in the first memory section **310**.

In parallel with the above transfer operation, the sub-band synthesis section **332** starts the sub-band synthesis filter operation for the fourth channel using the data in the memory area **312**.

The data transfer of the sub-band synthesis filter data for the third channel is performed between **222-6** (Figure **9**) and **222-7** (Figure **10**) in the same manner as that for the first or second channel. The area **200** is divided into A1 including the data areas **206** through **201** and **216** through **213** and A2 including the data areas **212** through **207**, and the data in one of them is first transferred and the data in the other is then transferred.

At this stage, the sub-band synthesis filter operation for the fourth channel is performed in the same manner as that for the first, second or third channel using the memory area **312**. The data transfer controller **340** performs data transfer while the sub-band synthesis section **332** performs the sub-band synthesis filter operation. When the transfer is completed, the data transfer controller 340 notifies the operation section 330 of the completion of the data transfer.

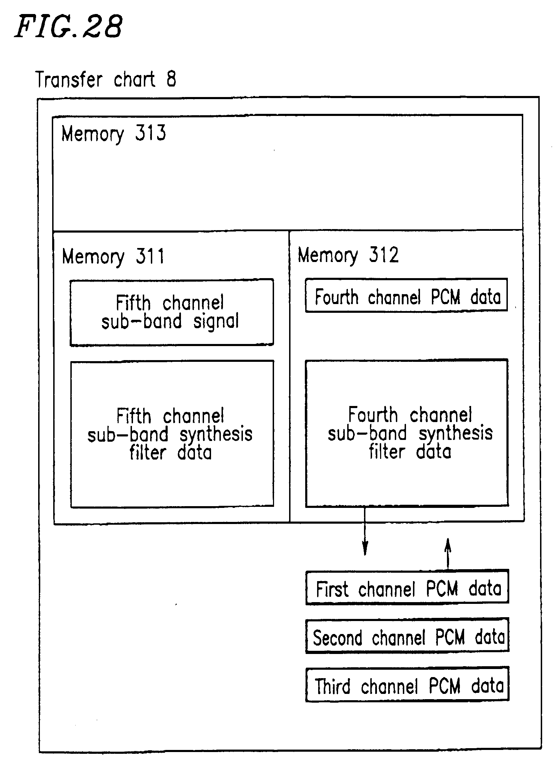

Transfer chart 8 of Figure 28 illustrates data transfer in the sub-band synthesis operation for the fifth channel. When both the data transfer and the sub-band synthesis filter operation for the fourth channel are completed, the operation section **330** requests the continuous transfer instruction section **333** to transfer data in the following manner.

As shown in transfer chart 8 (Figure **28**), the continuous transfer instruction section **333** instructs to transfer the sub-band synthesis filter data for the fourth channel stored in the memory area **312A** in the first memory section **310** to the memory area **324A** in the second memory section **320**.

Next, the continuous transfer instruction section **333** instructs a data transform operation, by the PCM data transfer instruction section **333A** and the PCM data storage area selection section **333B**, of the PCM data for the first, second and third channels from the memory areas **321C**, **322C** and **323C** in the second memory section **320** to the first memory section **310**.

In the present example, since the number of channels to be decoded by the sub-band synthesis operation is odd, the PCM data storage area selection section **333B** selects an area in the memory area **312** subsequent to the storage area for the fourth channel PCM data as the storage area for the PCM data.

In parallel with the above transfer operation, the sub-band synthesis section **332** starts the sub-band synthesis filter operation for the fifth channel using the data in the memory area **311**.

The data transfer of the sub-band synthesis filter data for the fourth channel is performed between **222-6** (Figure **9**) and **222-7** (Figure **10**) in the same manner as that for the first, second or third channel. The area **200** is divided into A1 including the data areas **206** through **201** and **216** through **213** and A2 including the data areas **212** through **207**, and the data in one of them is first transferred and the data in the other is then transferred.

At this stage, the sub-band synthesis filter operation for the fifth channel is performed in the same manner as that for the first, second, third or fourth channel using the memory area **311**. The data transfer controller **340** performs data transfer while the sub-band synthesis section **332** performs the sub-band synthesis filter operation. When the transfer is completed, the data transfer controller **340** notifies the operation section **330** of the completion of the data transfer.

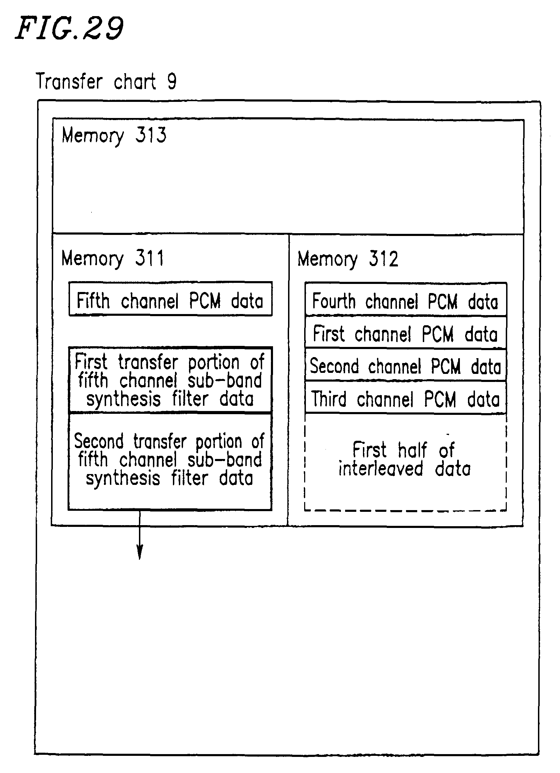

Transfer chart 9 of Figure **29** illustrates data transfer in the first half of the interleave operation. When both the data transfer and the sub-band synthesis filter operation for the fifth channel are completed, the operation section **330** requests the continuous transfer instruction section **333** to transfer data in the following manner.

As shown in transfer chart 9 (Figure **29**), the continuous transfer instruction section **333** instructs to transfer the sub-band synthesis filter data for the fifth channel stored in the memory area **311A** in the first memory section **310** to the memory area **325A** in the second memory section **320**.

The data transfer of the sub-band synthesis filter data for the fifth channel is performed between **222-6** (Figure **9**) and **222-7** (Figure **10**) in the same manner as that for the first, second, third or fourth channel. The area **200** is divided into A1 including the data areas **206** through **201** and **216** through **213** and A2 including the data areas **212** through **207**, and the data in one of them is first transferred and the data in the other is then transferred.

The fifth channel is the final channel for the sub-band synthesis operation, and the sub-band synthesis filter data for the final channel is transferred in two steps. The completion of the transfer of the first transfer portion illustrated in Figure **29** is detected by the specific data transfer completion detection indication section **333C**, and the data transfer controller **340** is requested to perform a data transfer operation.

In parallel with the above transfer operation, the interleave section **337** starts an interleave operation with the PCM data for the first, second, third and fourth channels stored in the memory area **312** and the PCM data for the fifth channel stored in the memory area **311**.

The interleave operation by the interleave section **337** is performed in two steps as divided by the interleave division section **337A**. In particular, the first half of the interleave operation is performed with the first 96 samples (i.e., the first half) of the 192 samples of the PCM data for each channel, and then the second half of the interleave operation is performed with the latter 96 samples (i.e., the second half) thereof.

The interleave operation illustrated in transfer chart 9 (Figure **29**) corresponds to the first half of the divided interleave operation. Since the number of channels to be decoded by the sub-band synthesis operation is odd in the present example, the interleave storage area selection section **337B** selects an area in the memory area **312** subsequent to the PCM data storage area as the storage area for the first half of the interleaved data.

The data transfer controller **340** performs data transfer while the interleave section **337** performs the first half of the interleave operation. When the first transfer portion of the sub-band synthesis filter data for the fifth channel has been transferred, the specific data transfer completion detection transmission section **341** detects the completion of the transfer of the first transfer portion of the sub-band synthesis filter data for the fifth channel. Then, after the section **341** transmits a signal indicating the detection of the completion to the operation section **330**, a data transfer operation for the second transfer portion of the sub-band synthesis filter data for the fifth channel is started.

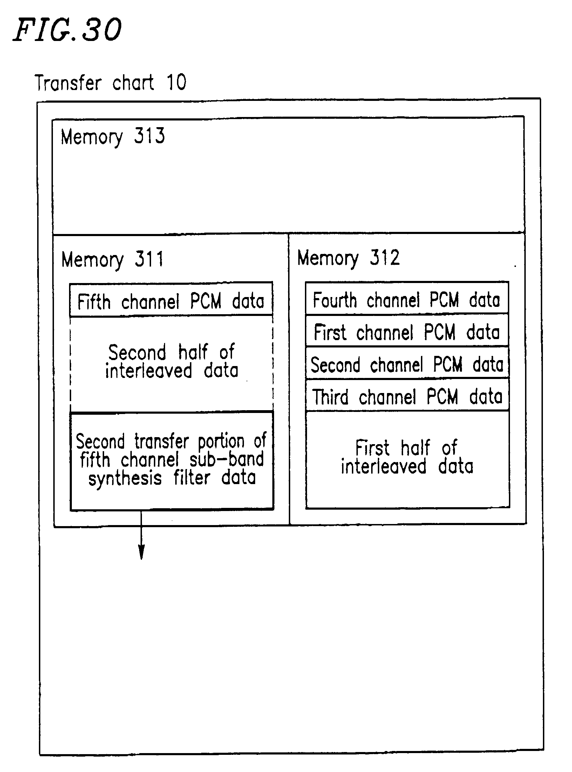

Transfer chart 10 of Figure **30** illustrates data transfer in the second half of the interleave operation. The operation section **330** detects completion of the first half of the interleave operation by the interleave section **337** and the completion of the transfer of the first transfer portion of the sub-band synthesis filter data for the fifth channel by the specific data transfer completion detection section **338**. Then, the operation section **330** resumes the interleave operation by the interleave section **337**.

The interleave operation illustrated in transfer chart 10 (Figure **30**) corresponds to the second half of the divided interleave operation. Since the number of channels to be decoded by the sub-band synthesis operation is odd in the present example, the interleave storage area selection section **337B** selects an area in the memory area **311** subsequent to the fifth channel PCM data storage area as the storage area for the second half of the interleaved data.

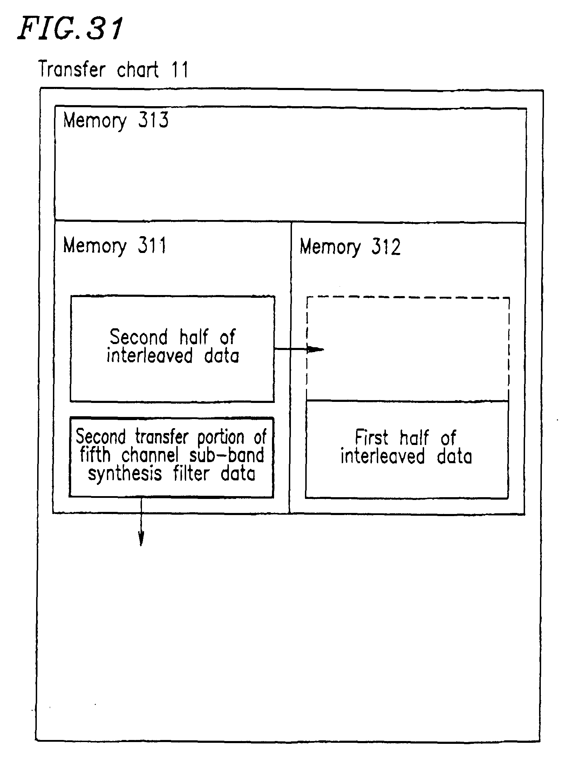

Transfer chart 11 of Figure 31 illustrates data transfer in the first memory section **310**. When the second half of the interleave operation by the interleave section **337** is completed, the operation section **330** transfers the second half of the interleaved data stored in the memory area **311** in the first memory section **310** to the memory area **312**, as illustrated in Figure **31**.

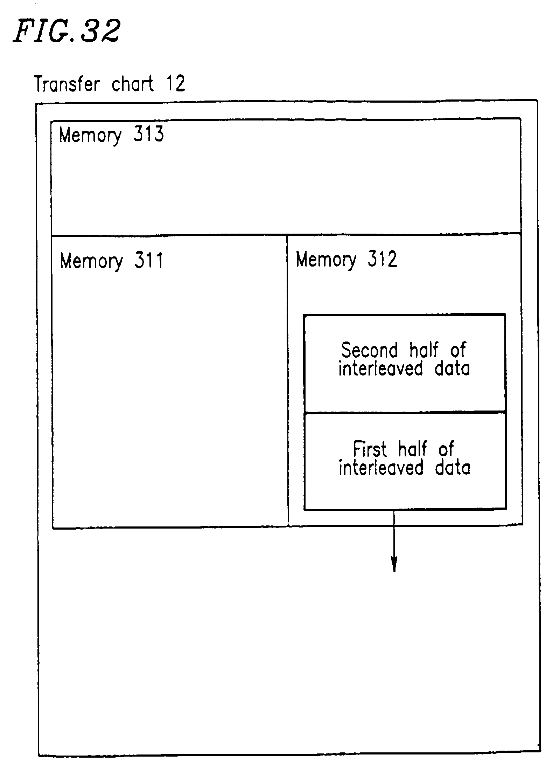

Transfer chart 12 of Figure **32** illustrates data transfer of the interleaved data. When the second half of the interleaved data has been transferred to the memory area **312**, the operation section **330** requests the continuous transfer instruction section **333** to transfer data in the following manner.

As illustrated in Figure **32**, the continuous transfer instruction section **333** instructs to transfer the interleaved data stored in the memory area **312** in the first memory section **310** to the memory area **326** in the second memory section **320**.

The data transfer of the interleaved data is performed in two steps (i.e., the first and second halves). One of the first and second halves of the interleaved data is first transferred and the other half thereof is then transferred. The first half of the interleaved data is stored in the first half of the memory area **326** in the second memory section **320** while the second half of the interleaved data is stored in the second half of the memory area **326** in the second memory section **320**.

Example 6

An audio decoding device of Example 6 receives coded signals for multi-channels (four channels) of the layer 2 of MPEG2 and decodes the coded signals into an audio signal. The layer 2 of MPEG2 is described in detail in ISO/IEC 11172-3:1993 and 13818-3:1996.

The configuration of the decoding device of Example 6 is similar to that of Example 5 illustrated in Figures **19** and **20**, and the only difference therebetween is the number of channels. Therefore, the configuration of the decoding device of Example 6 will not be described below.

In Example 6, the arrangement of the sub-band synthesis filter data generated per channel and the change over time are similar to those in Example 4 (Figures **9** to **11**). The correspondence of the virtual addresses allocated to the first memory section **310** by the virtual address allocation section **334** in Figure **20** with respect to the actual addresses is also similar to that in Example 4 (Figure **12**).

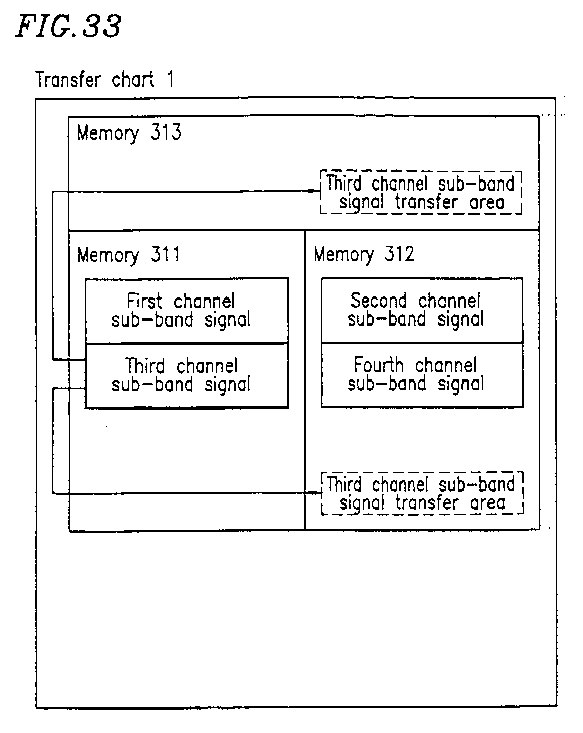

The operation of the decoding device of Example 6 will be described with reference to data transfer charts illustrated in Figures **33** to **43**.

First, when a bit stream (including encoded audio signals) of multi-channels of MPEG2 (four channels) is input, the operation section **330** gives the encoded audio signals to the sub-band signal generation section **331**, which decodes the encoded audio signals into four-channel sub-band signals. Then, the sub-band signals for the i'th channel (i=1 in this example) are written into the memory area **311B**, and the sub-band signals for the j'th channel (j=2 in this example) are written into the memory area **312B**. The sub-band signals for the k'th channel (k=3 in this example) are written into a part of the memory area **311A**, and the sub-band signals for the l'th channel (l=4 in this example) are written into a part of the memory area **312A**.

Transfer chart 1 of Figure **33** illustrates data transfer within the first memory section **310** in the addition/subtraction operation of the sub-band signals for the third channel. The operation section **330** requests the sub-band signal addition/subtraction section **335** to perform an addition/subtraction of the sub-band signals for the third channel. Then, after the addition/subtraction operation of the sub-band signals for the third channel has been performed, the operation section **330** instructs the first half of the third channel sub-band signals, for which the addition/subtraction operation has been performed, to the memory area **312C** and the second half thereof to the memory area **313C**.

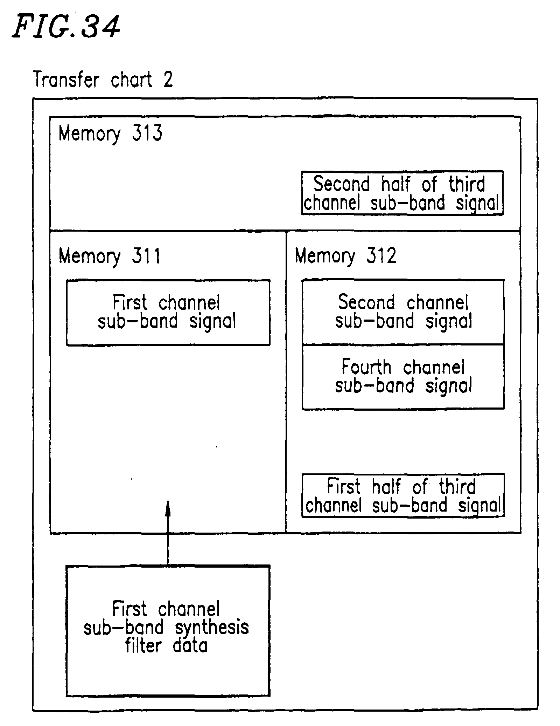

Transfer chart 2 of Figure **34** illustrates data transfer in the addition/subtraction operation for the first, second and fourth channels of sub-band signals. The continuous transfer instruction section **333**, based on the request from the operation section **330**, instructs the data transfer controller **340** to transfer data in the following manner.

As illustrated in Figure **34**, the continuous transfer instruction section **333** instructs to transfer the sub-band synthesis filter data for the first channel stored in the memory area **321A** in the second memory section **320** to the memory area **311A** in the first memory section **310**.

Thus, the data transfer controller **340** transfers the sub-band signal data for the first channel from the memory area **321A** to the memory area **311A**. When the data transfer is completed, the data transfer controller **340** notifies the operation section **330** of the completion of the transfer.

The operation section **330** further requests the continuous transfer instruction section **333** to perform data transfer, while making the sub-band signal addition/subtraction section **335** start the addition/subtraction operation of the first, second and fourth channels of sub-band signals. Thus, the sub-band synthesis filter data for the first channel is transferred from the memory area **321A** to the memory area **311A** while the addition/subtraction operation of the first, second and fourth channels of sub-band signals is performed in parallel.

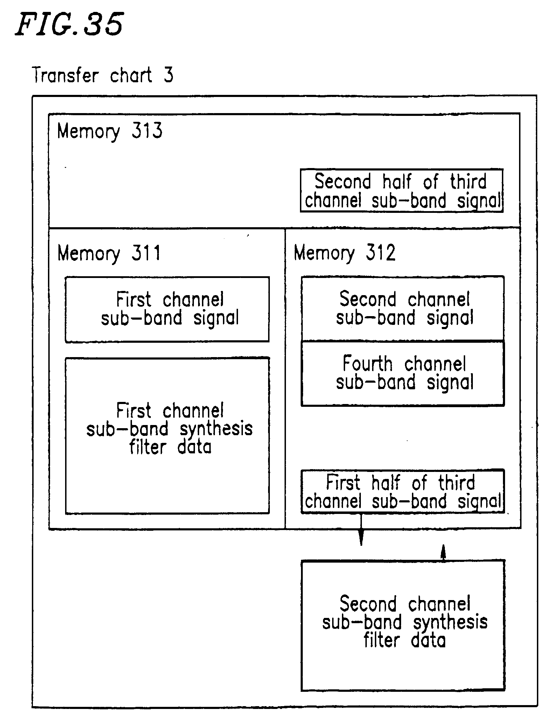

Transfer chart 3 of Figure **35** illustrates data transfer in the synthesis operation for the first channel of sub-band signals. When the operation section **330** is notified of the completion of transfer after the completion of the addition/subtraction operation of the first, second and fourth channels of sub-band signals, the operation section **330** requests the continuous transfer instruction section **333** to transfer data in the following manner.

As illustrated in Figure **35**, operation section **330** instructs to transfer the sub-band signals for the second and fourth channels and the first half of the sub-band signals for the third channel stored in the memory area **321A** respectively to the memory areas **323B**, **324B** and **325B** in the second memory section **320**. Then, operation section **330** instructs to transfer the sub-band synthesis filter data for the second channel stored in the memory area **322A** to the memory area **312A**.

In parallel with this, the operation section **330** starts the sub-band synthesis filter operation of the first channel by the sub-band synthesis section **332** using the data in the first memory area **311**.

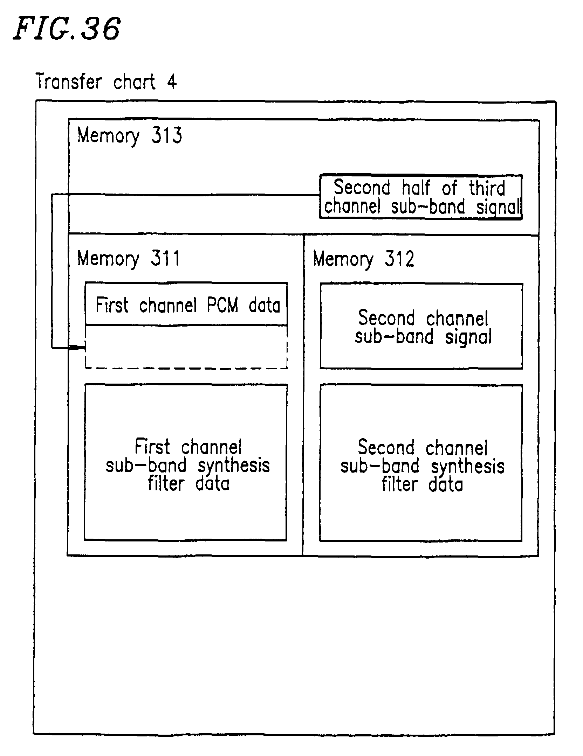

Transfer chart 4 of Figure **36** illustrates data transfer of the second half of the sub-band signals for the third channel within the first memory section **310**. After the completion of the sub-band synthesis operation for the first channel, the operation section **330** instructs the sub-band signal transfer section **336** to transfer the second half data of the sub-band signals for the third channel stored in the memory area **313C** in the first memory section **310** to the second half of the memory area **311B**. The first channel PCM data decoded in the sub-band synthesis operation for the first channel in the data area **311B** and the second half of the third channel sub-band signals are located so as not to overlap each other.

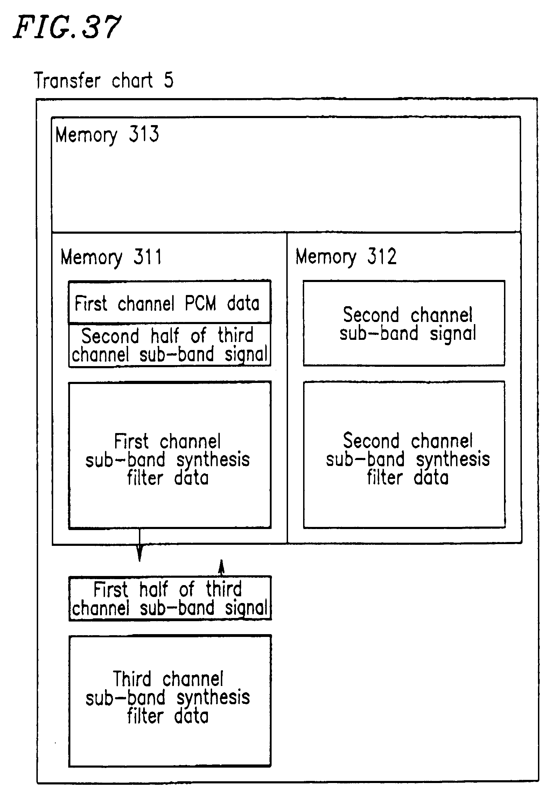

Transfer chart 5 of Figure **37** illustrates data transfer in the sub-band synthesis operation for the second channel. The data transfer controller **340** performs data transfer while the operation section **330** performs the sub-band synthesis filter operation and, when the transfer is completed, notifies the operation section **330** of the completion of the transfer.

When both the data transfer and the sub-band synthesis filter operation for the first channel are completed, the continuous transfer instruction section **333** instructs the data transfer controller **340** to transfer data in the following manner based on the request from the operation section **330**.

As illustrated in Figure **37**, the continuous transfer instruction section **333** instructs to transfer the sub-band synthesis filter data for the first channel stored in the memory area **311A** in the first memory section **310** to the memory area **321A** in the second memory section **320**.

Next, the continuous transfer instruction section **333** instructs the PCM data transfer instruction section **333A** to transfer the PCM data for the first channel stored in the memory area **311B** in the first memory section **310** to the memory area **321C** in the second memory section **320**.

Moreover, the continuous transfer instruction section **333** instructs to transfer the sub-band synthesis filter data for the third channel stored in the memory area **323A** in the second memory section **320** to the memory area **311A** in the first memory section **310**. The continuous transfer instruction section **333** also instructs to transfer the first half of the sub-band signals for the third channel stored in the memory area **323B** in the second memory section **320** to the first half of the memory area **311B** in the first memory section **310**.

The first half of the sub-band signals for the third channel which is transferred to the memory area **311B** is located to be consecutive and not to overlap with the second half of the sub-band signals for the third channel, which have already been transferred and located. Then, the sub-band synthesis section **332** starts the sub-band synthesis filter operation for the second channel using the data in the second memory area **312**.

At this stage, the sub-band synthesis filter operation for the second channel is performed in the same manner as that for the first channel using the second memory area **312**. The data transfer controller **340** performs data transfer while the sub-band synthesis section **332** performs the sub-band synthesis filter operation. When the transfer is completed, the data transfer controller **340** notifies the operation section **330** of the completion of the data transfer.

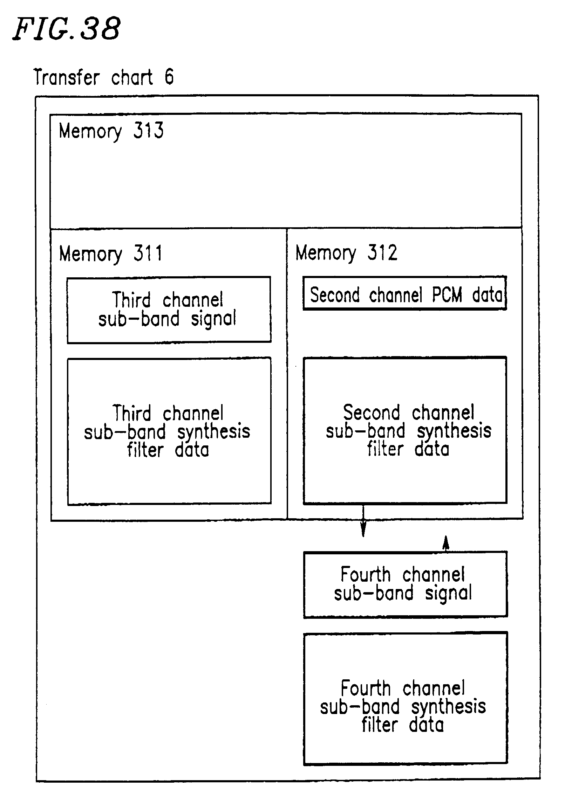

Transfer chart 6 of Figure **38** illustrates data transfer in the sub-band synthesis operation for the third channel. When both the data transfer and the sub-band synthesis filter operation for the second channel are completed, the operation section **330** requests the continuous transfer Instruction section **333** to transfer data in the following manner.

As shown in transfer chart 6 (Figure **38**), the continuous transfer instruction section **333** instructs to transfer the sub-band synthesis filter data for the second channel stored in the memory area **312A** in the first memory section **310** to the memory area **322A** in the second memory section **320**.

Next, the continuous transfer instruction section **333** instructs the PCM data transfer instruction section **333A** to transfer the PCM data for the second channel stored in the memory area **312B** in the first memory section **310** to the memory area **322C** in the second memory section **320**.

Moreover, the continuous transfer instruction section **333** instructs to transfer the sub-band synthesis filter data for the fourth channel stored in the memory area **324A** in the second memory section **320** to the memory area **312A** in the first memory section **310**.

Then, the continuous transfer instruction section **333** instructs to transfer the sub-band signals for the fourth channel stored in the memory areas **324B** to the memory area **312B** in the first memory section **310**.

In parallel with the above transfer operation, the sub-band synthesis section **332** starts the sub-band synthesis filter operation for the third channel using the data in the memory area **311**.

At this stage, the sub-band synthesis filter operation for the third channel is performed in the same manner as that for the first or second channel using the memory area **311**. The data transfer controller **340** performs data transfer while the sub-band synthesis section **332** performs the sub-band synthesis filter operation. When the transfer is completed, the data transfer controller **340** notifies the operation section **330** of the completion of the data transfer.

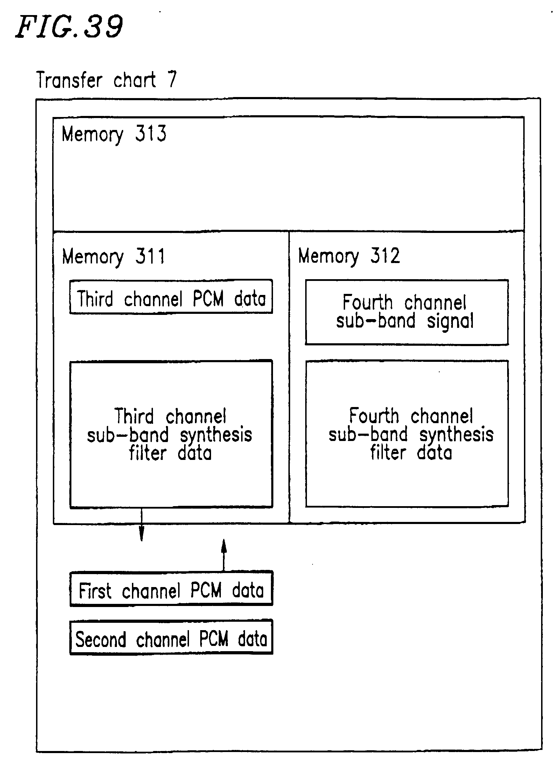

Transfer chart 7 of Figure **39** illustrates data transfer in the sub-band synthesis operation for the fourth channel. When both the data transfer and the sub-band synthesis filter operation for the third channel are completed, the operation section **330** requests the continuous transfer instruction section **333** to transfer data in the following manner.

As shown in transfer chart 7 (Figure **39**), the continuous transfer instruction section **333** instructs to transfer the sub-band synthesis filter data for the third channel stored in the memory area **311A** in the first memory section **310** to the memory area **323A** in the second memory section **320**.

Next, the continuous transfer instruction section **333** instructs a data transform operation, by the PCM data transfer instruction section **333A** and the PCM data storage area selection section **333B**, of the PCM data for the first and second channels from the memory areas **321C** and **322C** in the second memory section **320** to the first memory section **310**.

In the present example, since the number of channels to be decoded by the sub-band synthesis operation is even, the PCM data storage area selection section **333B** selects an area in the memory area **311** subsequent to the storage area for the third channel PCM data.

In parallel with the above transfer operation, the sub-band synthesis section **332** starts the sub-band synthesis filter operation for the fourth channel using the data in the memory area **312**.

At this stage, the sub-band synthesis filter operation for the fourth channel is performed in the same manner as that for the first, second, or third channel using the memory area **311**. The data transfer controller **340** performs data transfer while the sub-band synthesis section **332** performs the sub-band synthesis filter operation. When the transfer is completed, the data transfer controller **340** notifies the operation section **330** of the completion of the data transfer.

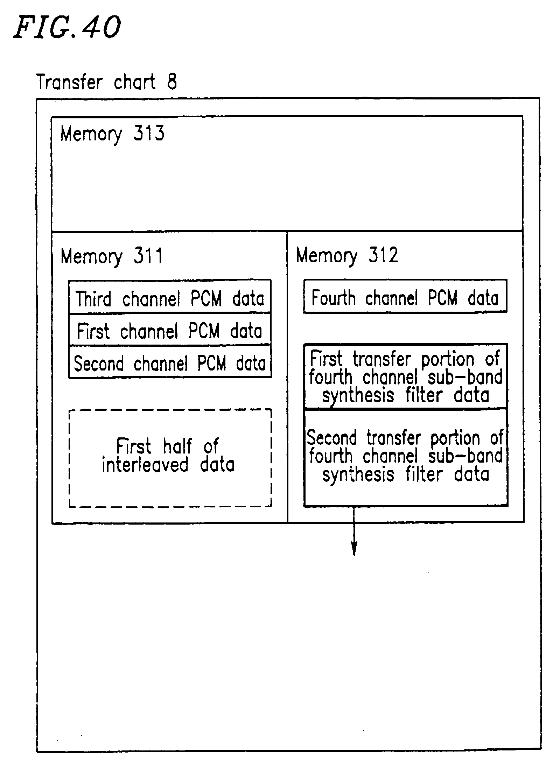

Transfer chart 8 of Figure **40** illustrates data transfer in the first half of the interleave operation. When both the data transfer and the sub-band synthesis filter operation for the fourth channel are completed, the operation section **330** requests the continuous transfer instruction section **333** to transfer data in the following manner.

As shown in transfer chart 8 (Figure **40**), the continuous transfer instruction section **333** instructs to transfer the sub-band synthesis filter data for the fourth channel stored in the memory area **312A** in the first memory section **310** to the memory area **324A** in the second memory section **320**.

The data transfer of the sub-band synthesis filter data for the fourth channel is performed, as that for the first, second or third channel, while dividing the data area indicated by **222-6** (Figure **9**) into A1 including the data areas **206** through **201** and **216** through **213** and A2 including the data areas **212** through **207**, and the data in one of them is first transferred and the data in the other is then transferred.

The fourth channel is the final channel for the sub-band synthesis operation, and the sub-band synthesis filter data for the final channel is transferred in two steps. The completion of the transfer of the first transfer portion illustrated in Figure **29** is detected by the specific data transfer completion detection indication section **333C**, and the data transfer controller **340** is requested to perform a data transfer operation.

In parallel with the above transfer operation, the interleave section **337** starts an interleave operation with the PCM data for the first, second and third channels stored in the memory area **311** and the PCM data for the fourth channel stored in the memory area **312**.

In the present example, the interleave operation by the interleave section **337** is divided into two steps by the interleave division section **337A**. In particular, the first half of the interleave operation is performed with the first 96 samples (i.e., the first half) of the 192 samples of the PCM data for each channel, and then the second half of the interleave operation is performed with the latter 96 samples (i.e., the second half) thereof.

The interleave operation illustrated in transfer chart 8 (Figure **40**) corresponds to the first half of the divided interleave operation. Since the number of channels to be decoded by the sub-band synthesis operation is even in the present example, the interleave storage area selection section **337B** selects an area in the memory area **311** subsequent to the PCM data storage area as the storage area for the first half of the interleaved data.

The data transfer controller **340** performs data transfer while the interleave section **337** performs the first half of the interleave operation. When the first transfer portion of the sub-band synthesis filter data for the fourth channel has been transferred, the specific data transfer completion detection transmission section **341** detects the completion of the transfer of the first transfer portion of the sub-band synthesis filter data for the fourth channel. Then, after the section **341** transmits a signal indicating the detection of the completion to the operation section **330**, a data transfer operation for the second transfer portion of the sub-band synthesis filter data for the fourth channel is started.

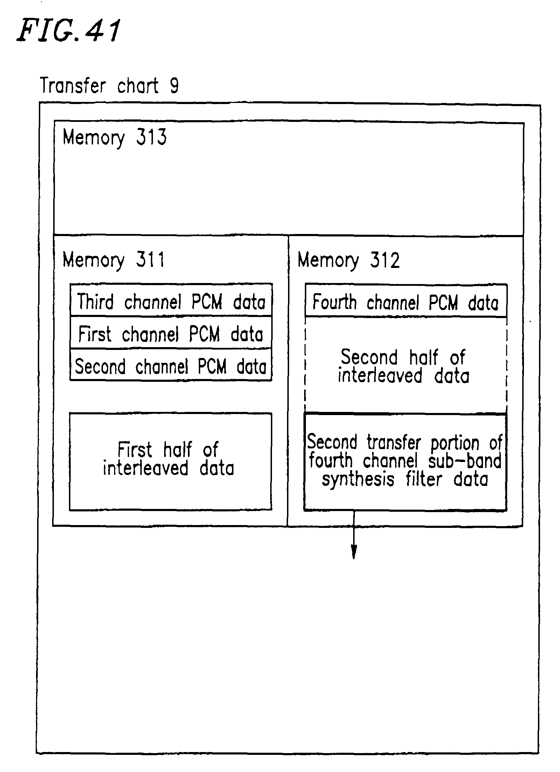

Transfer chart 9 of Figure **41** illustrates data transfer in the second half of the interleave operation. The operation section **330** detects completion of the first half of the interleave operation by the interleave section **337** and the completion of the transfer of the first transfer portion of the sub-band synthesis filter data for the fourth channel by the specific data transfer completion detection section **338**. Then, the operation section **330** resumes the interleave operation by the interleave section **337**.

The interleave operation illustrated in transfer chart 9 (Figure **41**) corresponds to the second half of the divided interleave operation. Since the number of channels to be decoded by the sub-band synthesis operation is even in the present example, the interleave storage area selection section **337B** selects an area in the memory area **312** subsequent to the fourth channel PCM data storage area as the storage area for the second half of the interleaved data.

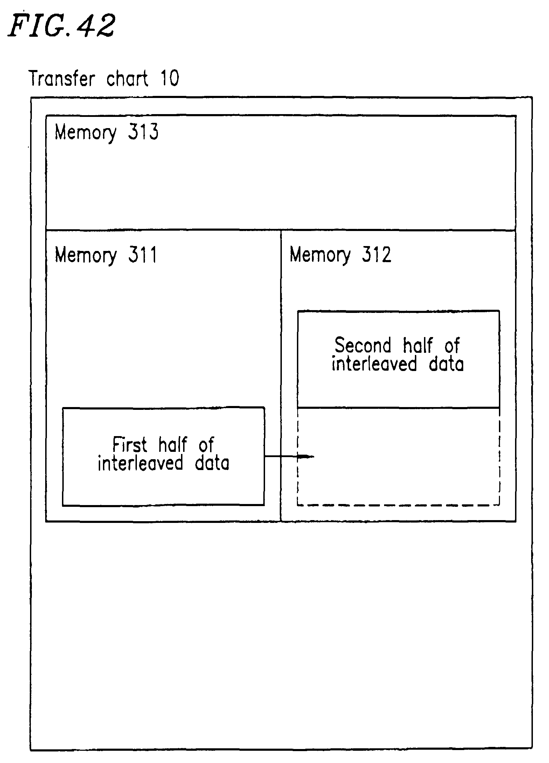

Transfer chart 10 of Figure **42** illustrates data transfer for finishing the second half of the interleave operation. When the data transfer and the second half of the interleave operation by the interleave section **337** are completed, the operation section **330** transfers the first half of the interleaved data stored in the memory area **311** in the first memory section **310** to the memory area **312**, as illustrated in Figure **42**.

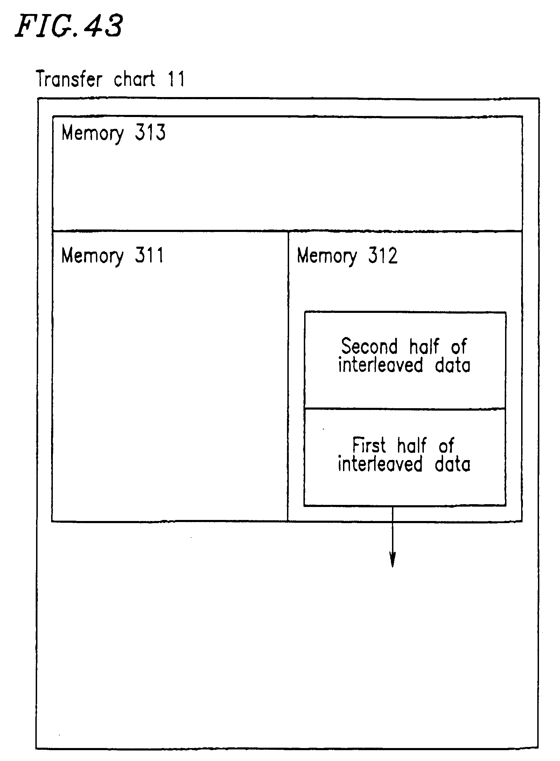

Transfer chart 11 of Figure **43** illustrates data transfer of the interleaved data within the first memory section **310**. When the second half of the interleaved data has been transferred to the memory area **312**, the operation section **330** requests the continuous transfer instruction section **333** to transfer data in the following manner.

As illustrated in Figure **43**, the continuous transfer instruction section **333** instructs to transfer the interleaved data stored in the memory area **312** in the first memory section **310** to the memory area **326** in the second memory section **320**.

The data transfer of the interleaved data is performed in two steps (i.e., the first and second halves). One of the first and second halves of the interleaved data is first transferred and the other half thereof is then transferred. The first half of the interleaved data is stored in the first half of the memory area **326** in the second memory section **320** while the second half of the interleaved data is stored in the second half of the memory area **326** in the second memory section **320**.

Thereafter, the four channels of decoded PCM audio signals are simultaneously output.

The decoding devices of Examples 5 and 6 each use a DRAM, which is less expensive than an SRAM, as the second memory section **320**. Data for all of the channels is stored in the second memory section **320**, and the data therein can be transferred to the first memory section **310** using the data transfer controller **340** as necessary. Thus, it is possible to reproduce multiple channels of encoded audio signals at a high speed without increasing the size of the internal memory provided in the processor. Moreover, an externally-provided SRAM can be eliminated, thereby reducing the cost of the device.

Moreover, each of the decoding devices of Examples 5 and 6 allows for the sub-band synthesis filter operation to be performed in parallel with the data transfer, and thus the time period required for the operation processing can be shortened by the time period required for the data transfer. Since an amount of data corresponding to a plurality of transfer operations can be transferred by a single transfer operation, the circulating address processing and the shift processing of the sub-band synthesis filter data are not required in the sub-band synthesis operation, where a virtual address allocation section is used.

Furthermore, in each of the decoding devices of Examples 5 and 6, the k'th channel of sub-band signals is temporarily transferred to the first memory section **310**, whereby the time period required for the data transfer is reduced.

Furthermore, in each of the decoding devices of Examples 5 and 6, the addition/subtraction operation of the sub-band signals is performed in parallel with the data transfer of the sub-band synthesis filter data for the i'th channel from the second memory section **320** to the first memory section **310**, thereby reducing the waiting time for the data transfer.

Furthermore, in each of the decoding devices of Examples 5 and 6, the addition/subtraction operations of the sub-band signals for the i'th, j'th, l'th and m'th channels are performed in parallel with the data transfer of the sub-band synthesis filter data for the i'th channel from the second memory section **320** to the first memory section **310**, thereby reducing the waiting time for the data transfer.

Furthermore, in each of the decoding devices of Examples 5 and 6, after the sub-band synthesis operation for the final channel has been completed, the interleave operation is performed by the interleave section in parallel with the transfer of the sub-band synthesis filter data from the first memory section to the second memory section, thereby reducing the waiting time for the data transfer.

Furthermore, each of the decoding devices of Examples 5 and 6 includes the interleave division section for dividing the interleave operation into r steps (r=2 in the above examples). Therefore, since the interleave operation can be divided into a plurality of steps, it is not necessary to provide successive memory areas for storing the interleaved data. The required memory size of the first memory section is accordingly reduced, thereby reducing the cost of the device. Moreover, such division of the interleave operation reduces the consecutive amount of time required for one operation step, thereby facilitating the scheduling of operations to be performed in parallel with the data transfer operations.

Furthermore, in each of the decoding devices of Examples 5 and 6, a particular data transfer operation in a series of data transfer operations can be detected, thereby, with the use of the divided interleave operation, allowing for highly-efficient signal process scheduling.

Furthermore, each of the decoding devices of Examples 5 and 6 includes the PCM data transfer instruction section for temporarily moving the PCM data to the second memory section in parallel with the sub-band synthesis operation. Thus, it is only necessary to ensure a storage area for storing PCM data for all channels, which is needed for an interleave operation, from a time in the sub-band synthesis operation for the final channel to the time of interleave operation. After the sub-band synthesis filter data for the previous channel has been transferred to the second memory section, the areas in the first memory section, in which some of the sub-band signals and the sub-band synthesis filter data for the previous channel have been stored, may be assigned for the PCM data which has been transferred to and temporarily stored in the second memory section. Therefore, it is not necessary to provide a special memory area for PCM data in the first memory section, thereby accordingly reducing the size of the first memory section.

Furthermore, each of the decoding devices of Examples 5 and 6 includes the PCM data storage area selection section. Therefore, when the PCM data necessary for the interleave operation is transferred from the second memory section 320 to the first memory section 310, the data transfer can be performed in parallel with the sub-band synthesis operation for the final channel, regardless of whether the number of channels to be decoded by the sub-band synthesis operation is odd or even. Thus, the amount of calculation required can be accordingly reduced.

Furthermore, each of the decoding devices of Examples 5 and 6 includes the interleave storage area selection section, which makes it possible to start the interleave operation using a memory area which does not overlap with the data transfer area used for the sub-band synthesis operation for the final channel, regardless of whether the number of channels to be decoded by the sub-band synthesis operation is odd or even. Thus, the interleave operation can be performed in parallel with a data transfer operation.

Furthermore, each of the decoding devices of Examples 5 and 6 includes the division decoding section for dividing one frame into six portions for a decoding operation, whereby only a memory area corresponding `to 1/6 frame is required for the sub-band signals for each channel. Thus, the memory size of the first memory section is accordingly reduced.

In Examples 5 and 6, for simplicity of the description, the number of channels for input signals is assumed to be five and four, respectively. However, the number of channels is not limited to any specific value.

Moreover, in each of the decoding devices of Examples 5 and 6, for simplicity of the description, the number of steps into which the interleave operation is divided by the interleave division section is assumed to be 2. However, the interleave operation can be divided into three or more steps, or it does not necessarily have to be equally divided.

Furthermore, in each of the decoding devices of Examples 5 and 6, for simplicity of the description, the memory areas 312 and 313 are assumedly used as the destination to which the sub-band signals are transferred by the sub-band signal transfer section. However, the destination is not limited to the above. Moreover, the number and data size of divisions of the sub-band signals for transfer operations are not limited to the above.

In each of the decoding devices of Examples 5 and 6, when the number of channels to be decoded by the sub-band synthesis operation is even, the first memory area 311 is selected for storing the first half of the interleaved data while the second memory area 312 is selected for storing the second half of the interleaved data. When the number of channels to be decoded by the sub-band synthesis operation is odd, the second memory area 312 is selected for storing the first half of the interleaved data while the first memory area 311 is selected for storing the second half of the interleaved data. However, such a selection is not limited thereto and can be changed depending upon the operation and data transfer schedules.

Furthermore, in each of the decoding devices of Examples 5 and 6, for simplicity of the description, it is assumed that the PCM data storage area selection section 333B selects the first memory area 311 when the number of channels to be decoded by the sub-band synthesis operation is even, while it selects the second memory area 312 when the number of channels to be decoded is odd. However, such a selection is not limited thereto and can be changed depending upon the operation and data transfer schedules.

The above-described compressed code decoding devices of Examples 4 to 6 provide the following effects.

It is possible to reduce the required capacity of the high-speed access memory. Thus, the cost of the decoding device can be accordingly reduced from that of the conventional device.

The sub-band synthesis filter operation can be performed in parallel with a data transfer operation. Thus, the amount of time required for data transfer operations is substantially eliminated, thereby considerably reducing the processing time.

A plurality of data transfer operations can be instructed with a single issuance of instruction, whereby it is possible to divide the data to be transferred using a predetermined address and then to transfer the divided data one after another. Thus, it is possible to reduce the amount of time required for the circulating address processing. Moreover, since it is possible to perform a multiple data transfer operations, it is easier to schedule data transfer operations in accordance with the amount of time required for generating output data. For example, while a plurality of data transfer operations are performed in parallel with the sub-band synthesis operation, it is not necessary to discontinue the sub-band synthesis operation, to wait for or confirm completion of the data transfer, or to issue a transfer instruction. Thus, time loss caused by the data transfer can be reduced, thereby also the entire processing time.

Since the virtual address allocation section is provided, the operations required for circulating address processing are eliminated, thereby reducing the entire processing time.

The sub-band signal transfer section is provided for temporarily transferring the sub-band signals for the third channel to the first memory section, thereby reducing the amount of data transfer required. Accordingly, the amount of time required for data transfer is reduced, thus reducing the amount of calculation required.

The sub-band signal transfer section is provided independently of the sub-band synthesis section. Therefore, the sub-band signal addition/subtraction operation is performed in parallel with the first data transfer operation conducted for the sub-band synthesis filter data from the second memory section to the first memory section after the input encoded audio data is encoded into sub-band signals for different sub-bands. Thus, the waiting time for data transfer is reduced, thereby accordingly reducing the amount of computation required.

The interleave section is provided for performing the interleave operation in parallel with the transfer operation conducted for the sub-band synthesis filter data from the first memory section to the second memory section after the sub-band synthesis operation for the final channel has been completed. Thus, the waiting time for data transfer is reduced, thereby accordingly reducing the amount of computation required.

Since the interleave division section is provided for dividing the interleave operation, it is not necessary to provide successive memory areas for storing the interleaved data. Thus, the required memory size of the first memory section is accordingly reduced, thereby reducing the cost of the device. Moreover, such division of the interleave operation reduces the consecutive amount of time required for one operation step, thereby facilitating the scheduling of operations to be performed in parallel with the data transfer operations.

A particular data transfer operation in a series of data transfer operations can be detected, thereby, with the use of the divided interleave operation, allowing for highly-efficient signal process scheduling.

Since the interleave storage area selection section is provided, it is possible to start the interleave operation using a memory area which does not overlap with the data transfer area used for the sub-band synthesis operation for the final channel, regardless of whether the number of channels to be decoded by the sub-band synthesis operation is odd or even. Thus, the interleave operation can be performed in parallel with a data transfer operation, thereby accordingly reducing the amount of calculation required.

The PCM data transfer instruction section for temporarily moving the PCM data to the second memory section in parallel with the sub-band synthesis operation. Thus, it is only necessary to ensure a storage area for storing PCM data for all channels, which is needed for an interleave operation, from a time in the sub-band synthesis operation for the final channel to the time of interleave operation. After the sub-band synthesis filter data for the previous channel has been transferred to the second memory section, the areas in the first memory section, in which some of the sub-band signals and the sub-band synthesis filter data for the previous channel have been stored, may be assigned for the PCM data which has been transferred to and temporarily stored in the second memory section. Therefore, it is not necessary to provide a special memory area for PCM data in the first memory section, thereby accordingly reducing the size of the first memory section.

Since the PCM data storage area selection section is provided, when the PCM data necessary for the interleave operation is transferred from the second memory section to the first memory section, the data transfer can be performed in parallel with the sub-band synthesis operation for the final channel, regardless of whether the number of channels to be decoded by the sub-band synthesis operation is odd or even. Thus, the amount of calculation required can be accordingly reduced.

Since the division decoding section is provided, the memory areas required for the sub-band signals for the respective channels can be reduced, thereby accordingly reducing the memory size of the first memory section.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A compressed code decoding device, comprising:

a decoding section for receiving a plurality of groups of blocks of compressed codes and decoding each of the blocks of compressed codes;

a buffer section for storing decoded signals decoded by the decoding section;

a reproduction time acquisition section for acquiring a reproduction time at which to reproduce a predetermined one of the blocks;

an output section for externally outputting the decoded signals stored in the buffer section;

a detection section for detecting that the predetermined block of compressed codes has been decoded and output via the output section;

an addition section for, at a time when the detection section detects that the predetermined block has been output, adding a time required for reproducing the predetermined block to the reproduction time acquired by the reproduction time acquisition section so as to produce a synchronization time;

a synchronization section for comparing the synchronization time produced by the addition section and a current time so as to determine whether the synchronization time is ahead of or behind the current time;

a code discarding section for, if the synchronization section determines that the synchronization time is ahead of the current time, discarding either compressed codes of one of the blocks next to the predetermined block or compressed codes of one of the groups next to the group including the predetermined block; and

a reproduction delay section for, if the synchronization section determines that the synchronization time is behind the current time, delaying output of either decoded signals of the compressed codes of one of the blocks next to the predetermined block or decoded signals of the compressed codes of one of the groups next to the group including the predetermined block.

2. A compressed code decoding device according to claim 1, wherein the synchronization section comprises a timer for timing a clock and compares the synchronization time with an output from the timer as the current time.

3. A compressed code decoding device according to claim 1, wherein the synchronization section compares the synchronisation time with a video reproduction time as the current time, the video reproduction time being provided to a video signal which is reproduced in synchronization with the decoded signal.

4. A compressed code decoding device according to claim 1, wherein the synchronization section compares the synchronization time with a reference reproduction time as the current time, the reference reproduction time being provided to a code other than the decoded signal.

5. A compressed code decoding device according to claim 1, wherein, the synchronization section compares the synchronisation time with the current time by determining whether the synchronization time is ahead of or behind the current time based on whether a value obtained by subtracting the current time from the synchronization time is greater than a predetermined threshold value.

6. A compressed code decoding device, comprising:

a decoding section for receiving a plurality of groups of blocks of compressed codes and decoding each of the blocks of compressed codes;

a buffer section for storing decoded signals decoded by the decoding section;

a reproduction time acquisition section for acquiring a reproduction time at which to reproduce a predetermined one of the blocks;

an output section for externally outputting the decoded signals stored in the buffer section;

a detection section for detecting that the predetermined block of compressed codes has been decoded and output via the output section;

a time setting section for externally setting a start time and a finish time of a gap provided between two outputs of decoded signals;

an addition section for, at a time when the detection section detects that the predetermined block has been output, adding a time required for reproducing the predetermined block to the reproduction time acquired by the reproduction time acquisition section so as to produce a first synchronization time;

a time detection section for determining whether the start time set by the time setting section is between the first synchronization time produced by the addition section and a second synchronization time, the second synchronization time being obtained by adding a time required for reproducing one block of compressed codes to the first synchronization time;

a gap-based reproduction delay section for delaying, if the start time is between the first synchronization time and the second synchronization time, until the finish time of the gap, output of either the compressed codes of the predetermined block or the compressed codes of one of the groups including the predetermined block.

7. A compressed code decoding device, comprising:

a decoding section for receiving a plurality of groups of blocks of compressed codes and decoding each of the blocks of compressed codes;

first and second memory sections for alternately storing blocks of the decoded signals from the decoding section;

an output section for externally outputting the decoded signals stored in the first and second memory sections;

a block detection section for detecting that each of the blocks of compressed codes has been decoded and externally output via the output section;

a state section for indicating whether a decoded signal being currently output by the output section is from the first memory section or from the second memory section;

a write control section for, at a time when the output of each of the blocks is detected by the block detection section, controlling a write operation of the block so that the block is written to one of the first memory section and the second memory section which is not indicated by the state section and alternately switching between read and write operations of the first and second memory sections.

8.  A compressed code decoding device according to claim 7, wherein the write control section controls the write operation so that the decoded signals from a first and second ones of the blocks are respectively written to the first and second memory sections, while the decoded signals from a third one of the blocks are written to one of the first memory section and the second memory section which is not indicated by the state section.

9.  An audio decoding device for decoding $N_A$ (where $N_A > 1$) channels of audio signals by a sub-band synthesis operation using sub-band synthesis filter data and sub-band signal data, the device comprising:

a first memory section for storing $M_A$ (where $M_A < N_A$) channels of the sub-band synthesis filter data and the sub-band signal data used for the sub-band synthesis operation;

a second memory section for storing at least some of $N_A$ channels of sub-band signal data and $N_A$ channels of sub-band synthesis filter data;

an operation section for receiving encoded audio data and decoding the encoded audio data into sub-band signal data, performing a sub-band synthesis filter operation using the data stored in the first memory section so as to output $M_A$ channels of decoded audio data, and requesting to switch positions of new sub-band synthesis filter data calculated by the sub-band synthesis filter operation and next sub-band synthesis filter data required; and

a data transfer section for, based on the request from the operation section, switching, by $M_A$ channels, the sub-band synthesis filter data and the sub-band signal data in the first memory section and the second memory section.

10.  An audio decoding device according to claim 9, wherein:

the first memory section includes a first memory area for storing a channel of sub-band synthesis filter data and sub-band signal data and a second memory area for storing another channel of sub-band synthesis filter data and sub-band signal data; and

the operation section transfers a j'th channel of data stored in the second memory section to the second memory area in the first memory section when performing a sub-band synthesis filter operation for an i'th channel (where: $i=1$ to $N_A$; $j=1$ to $N_A$; and $j \neq i$) using the data stored in the first memory area in the first memory section, while transferring a k'th channel of data stored in the second memory section to the first memory area in the first memory section when performing a sub-band synthesis filter operation for a j'th channel (where: $k=1$ to $N_A$; $k \neq i$; and $k \neq j$) using the data stored in the second memory area in the first memory section, thereby performing in parallel a data transfer operation and a sub-band synthesis filter operation.

11.  An audio decoding device according to claim 9, the operation section comprising a continuous transfer instruction section for instructing, when instructing a data transfer operation between the first memory section and the second memory section, a plurality of data transfer operations with a single issuance of instruction.

12.  An audio decoding device according to claim 11, the operation section comprising a virtual address allocation section for providing virtual addresses following an actual address at a termination point of the memory area in the first memory section which stores the sub-band synthesis filter data, allocating a start point of the virtual addresses to a predetermined actual address in the memory area, and sequentially allocating other ones of the virtual addresses to actual addresses.

13.  An audio decoding device according to claim 9, wherein:

the first memory section comprises, in addition to the first memory area and the second memory area, a third memory area for storing data not limited to use with the sub-band synthesis operation; and

the operation section comprises a sub-band signal transfer section for, when a number of channels of input encoded audio data is three or greater, copying or transferring at least some of the sub-band signals for a particular channel stored in the first memory section to a particular area in the first memory section

14. An audio decoding device according to claim 9, the operation section comprising a sub-band signal addition/subtraction section for performing addition and subtraction of the sub-band signals, in parallel with a transfer operation for the sub-band synthesis filter data from the second memory section to the first memory section after the encoded audio data has been input and decoded into sub-band signal data.

15. An audio decoding device according to claim 9, the operation section comprising an interleave section for taking samples of decoded data decoded by the sub-band synthesis operation, one sample from each of the channels, and rearranging the samples in a predetermined order, in parallel with a transfer operation for the sub-band synthesis filter data from the first memory section to the second memory section after a sub-band synthesis operation for a final channel has been completed.

16. An audio decoding device according to claim 15, the interleave section comprising an interleave division section for dividing an interleave operation into r steps (where r≥2).

17. An audio decoding device according to claim 15, the interleave section comprising an interleave storage area selection section for selecting a data storage area in the first memory section to be used for an interleave operation depending on whether a number of channels to be decoded by the sub-band synthesis operation is even or odd.

18. An audio decoding device according to claim 11, the continuous transfer instruction section comprising a specific data transfer completion detection indication section for indicating detected completion of a p'th transfer operation out of q (where: q>1; and 1≤p<q) data transfer operations performed between the first memory section and the second memory section.

19. An audio decoding device according to claim 18, the data transfer section comprising a specific data transfer completion detection transmission section for detecting completion of a p'th transfer operation out of q data transfer operations performed between the first memory section and the second memory section as instructed by the continuous transfer instruction section and for transmitting to the operation section the detected completion of the p'th transfer operation.

20. An audio decoding device according to claim 11, wherein:

the operation section comprises a specific data transfer completion detection section for detecting completion of a p'th transfer operation out of q data transfer operations performed between the first memory section and the second memory section as instructed by the continuous transfer instruction section; and
the operation section performs an s'th one of the r (where: r≥2; and 2≤s≤r) steps of the interleave operation after the specific data transfer completion detection section detects completion of a data transfer operation for a specific area.

21. An audio decoding device according to claim 11, wherein:

the continuous transfer instruction section comprises a PCM data transfer instruction section for instructing a transfer operation of at least one channel of decoded PCM data between the first memory section and the second memory section when a number of channels of input decoded data decoded by the sub-band synthesis operation is t (where t≥3); and
the PCM data transfer instruction section temporarily transfers PCM data, for which the sub-band synthesis operation has been performed, from the first memory section to the second memory section and retransfers PCM data which has been transferred to the second memory section to the first memory section in parallel with a sub-band synthesis operation for a final channel.

22. An audio decoding device according to claim 11, the continuous transfer instruction section comprising a PCM data storage area selection section for selecting a storage area in the first memory section to be used for a transfer operation of PCM data from the second memory section to the first memory section performed in parallel with a sub-band synthesis operation for a final channel depending on whether a number of channels of input decoded data decoded by the sub-band synthesis operation is even or odd.

23. An audio decoding device according to claim 9, wherein:

the operation section comprises a division decoding section for dividing decoding processes from sub-band signal generation to output signal generation, or decoding processes from sub-band synthesis to output signal generation, so as to equally divide a number of audio output signal samples per frame into y blocks; and

$a=b \times c \times y$, where a denotes the number of audio output signal samples per frame for each channel of encoded audio signals, b denotes a number of sub-bands of the encoded audio signals, and c denotes a number of samples to be generated while processing one block.

24. An audio decoding device for decoding $N_A$ (where $N_A>1$) channels of audio signals by a sub-band synthesis operation using sub-band synthesis filter data and sub-band signal data, the device comprising:

a first memory section for storing at least one channel of the sub-band synthesis filter data and the sub-band signal data used for the sub-band synthesis operation;
a second memory section for storing sub-band signal data and $N_A$ channels of sub-band synthesis filter data;
an operation section for receiving encoded audio data and decoding the encoded audio data into sub-band signal data, performing a sub-band synthesis filter operation using the data stored in the first memory section so as to output one channel of decoded audio data, and requesting to switch positions of new sub-band synthesis filter data calculated by the sub-band synthesis filter operation and next sub-band synthesis filter data required; and
a data transfer section for, based on the request from the operation section, switching, by one channel, the sub-band synthesis filter data and the sub-band signal data in the first memory section and the second memory section.

25. An audio decoding device according to claim 24, the operation section comprising a continuous transfer instruction section for, when instructing a data transfer operation between the first memory section and the second memory section, instructing a plurality of data transfer operations with a single issuance of instruction.

26. An audio decoding device according to claim 25, the operation section comprising a virtual address allocation section for providing virtual addresses following an actual address at a termination point of the memory area in the first memory section which stores the sub-band synthesis filter data, allocating a start point of the virtual addresses to a predetermined actual address in the memory area, and sequentially allocating other ones of the virtual addresses to actual addresses.

27. An audio decoding device according to claim 24, wherein:

the first memory section comprises, in addition to the first memory area and the second memory area, a third memory area for storing data not limited to use with the sub-band synthesis operation; and
the operation section comprises a sub-band signal transfer section for, when a number of channels of input encoded audio data is three or greater, copying or transferring at least some of the sub-band signals for a particular channel stored in the first memory section to a particular area in the first memory section.

28. An audio decoding device according to claim 24, the operation section comprising a sub-band signal addition/subtraction section for performing addition and subtraction of the sub-band signals, in parallel with a transfer operation for the sub-band synthesis filter data from the second memory section to the first memory section after the encoded audio data has been input and decoded into sub-band signal data.

29. An audio decoding device according to claim 24, the operation section comprising an interleave section for taking samples of decoded data decoded by the sub-band synthesis operation, one sample from each of the channels, and rearranging the samples in a predetermined order, in parallel with a transfer operation for the sub-band synthesis filter data from the first memory section to the second memory section after a sub-band synthesis operation for a final channel has been completed.

30. An audio decoding device according to claim 29, the interleave section comprising an interleave division section for dividing an interleave operation into r steps (where $r \geq 2$).

31. An audio decoding device according to claim 29, the interleave section comprising an interleave storage area selection section for selecting a data storage area in the first memory section to be used for an interleave operation depending on whether a number of channels to be decoded by the sub-band synthesis operation is even or odd.

32. An audio decoding device according to claim 25, the continuous transfer instruction section comprising a specific data transfer completion detection indication section for indicating detected completion of a p'th transfer operation out of q (where: q>1; and 1≤p<q) data transfer operations performed between the first memory section and the second memory section.

33. An audio decoding device according to claim 32, the data transfer section comprising a specific data transfer completion detection transmission section for detecting completion of a p'th transfer operation out of q data transfer operations performed between the first memory section and the second memory section as instructed by the continuous transfer instruction section and for transmitting to the operation section the detected completion of the p'th transfer operation.

34. An audio decoding device according to claim 25, wherein:

the operation section comprises a specific data transfer completion detection section for detecting completion of a p'th transfer operation out of q data transfer operations performed between the first memory section and the second memory section as instructed by the continuous transfer instruction section; and
the operation section performs an s'th one of the r (where: r≥2; and 2≤s≤r) steps of the interleave operation after the specific data transfer completion detection section detects completion of a data transfer operation for a specific area.

35. An audio decoding device according to claim 25, wherein:

the continuous transfer instruction section comprises a PCM data transfer instruction section for instructing a transfer operation of at least one channel of decoded PCM data between the first memory section and the second memory section when a number of channels of input decoded data decoded by the sub-band synthesis operation is t (where t≥3); and
the PCM data transfer instruction section temporarily transfers PCM data, for which the sub-band synthesis operation has been performed, from the first memory section to the second memory section and retransfers PCM data which has been transferred to the second memory section to the first memory section in parallel with a sub-band synthesis operation for a final channel.

36. An audio decoding device according to claim 25, the continuous transfer instruction section comprising a PCM data storage area selection section for selecting a storage area in the first memory section to be used for a transfer operation of PCM data from the second memory section to the first memory section performed in parallel with a sub-band synthesis operation for a final channel depending on whether a number of channels of input decoded data decoded by the sub-band synthesis operation is even or odd.

37. An audio decoding device according to claim 24, wherein:

the operation section comprises a division decoding section for dividing decoding processes from sub-band signal generation to output signal generation, or decoding processes from sub-band synthesis to output signal generation, so as to equally divide a number of audio output signal samples per frame into y blocks; and
$a = b \times c \times y$, where a denotes the number of audio output signal samples per frame for each channel of encoded audio signals, b denotes a number of sub-bands of the encoded audio signals, and c denotes a number of samples to be generated while processing one block.

FIG. 1

FIG.2

Time stamp T          Time stamp T          Time stamp T

| Block | Block | Block | Block | Block | Block | Block | Block | Block | Block | Block | Block | Block | Block | Block | • • • • •

Frame A                Frame B                Frame C

EP 0 880 246 A2

**FIG.3**

EP 0 880 246 A2

## FIG. 4

Time stamp T

Time stamp T

Time stamp T

| | Compressed video code | | Compressed video code | | Compressed video code |

Frame a    Frame b    Frame c · · · · ·

Time stamp T

Time stamp T

Time stamp T

| Block | Block | Block | Block | Block | Block | Block | Block | Block | Block | Block | Block | Block | Block | Block | · · · · · |

Frame A    Frame B    Frame C

EP 0 880 246 A2

# FIG.5

## FIG.6

Frame A      Frame B      X      Frame C

Consecutive compressed
audio codes

Data gap
(no data)

Consecutive compressed
audio codes

| Decoded reproduction signals | Decoded reproduction signals | | Decoded reproduction signals |

x

Actual
time gap

EP 0 880 246 A2

## FIG.7

*FIG.8*

100

120 Memory
  121A
  122A
  123B  124B
  123A  124A

140 Data transfer controller

110
  111
    111B
    111A
  112
    112B
    112A

130 Operation section
  131 Sub-band signal generation section
  132 Sub-band synthesis section
  133 Continuous transfer instruction section
  134 Virtual address allocation section

Encoded signal

Audio signal

# FIG.9

EP 0 880 246 A2

| 200 | 200 | 200 | 200 | 200 | 200 | |
|---|---|---|---|---|---|---|
| 206 | 206 | 206 | 206 | 206 | 206 ←P2 | |
| 205 | 205 | 205 | 205 | 205 ←P2 | 205 | |
| 204 | 204 | 204 | 204 ←P2 | 204 | 204 | |
| 203 | 203 | 203 ←P2 | 203 | 203 | 203 | A1 |
| 202 | 202 ←P2 | 202 | 202 | 202 | 202 | |
| 201 ←P2 | 201 | 201 | 201 | 201 | 201 | |
| 216 | 216 | 216 | 216 | 216 | 216 | |
| 215 | 215 | 215 | 215 | 215 | 215 | |
| 214 | 214 | 214 | 214 | 214 | 214 | |
| 213 | 213 | 213 | 213 | 213 | 213 | |
| 212 | 212 | 212 | 212 | 212 | 212 | |
| 211 | 211 | 211 | 211 | 211 | 211 | |
| 210 | 210 | 210 | 210 | 210 | 210 | |
| 209 | 209 | 209 | 209 | 209 | 209 | A2 |
| 208 | 208 | 208 | 208 | 208 | 208 | |
| 207 | 207 | 207 | 207 | 207 | 207 | |
| 222-1 | 222-2 | 222-3 | 222-4 | 222-5 | 222-6 | |

# FIG.10

## FIG.11

| B2 | B1 |
|----|----|

200
| 202 |
| 201 |
| 216 |
| 215 |
| 214 |
| 213 | ←P2 |
| 212 |
| 211 |
| 210 |
| 209 |
| 208 |
| 207 |
| 206 |
| 205 |
| 204 |
| 203 |

222-13

200
| 202 |
| 201 |
| 216 |
| 215 |
| 214 | ←P2 |
| 213 |
| 212 |
| 211 |
| 210 |
| 209 |
| 208 |
| 207 |
| 206 |
| 205 |
| 204 |
| 203 |

222-14

200
| 202 |
| 201 |
| 216 |
| 215 | ←P2 |
| 214 |
| 213 |
| 212 |
| 211 |
| 210 |
| 209 |
| 208 |
| 207 |
| 206 |
| 205 |
| 204 |
| 203 |

222-15

200
| 202 |
| 201 |
| 216 | ←P2 |
| 215 |
| 214 |
| 213 |
| 212 |
| 211 |
| 210 |
| 209 |
| 208 |
| 207 |
| 206 |
| 205 |
| 204 |
| 203 |

222-16

· · ·

## FIG.12

| Virtual address (hexadecimal) | Actual address (hexadecimal) |
|---|---|
| 0x000 ∼ 0x0ff | 0x000 ∼ 0x0ff |
| 0x100 ∼ 0x1ff | 0x100 ∼ 0x1ff |
| 0x200 ∼ 0x2ff | 0x200 ∼ 0x2ff |
| 0x300 ∼ 0x3ff | 0x300 ∼ 0x3ff |
| 0x400 ∼ 0x4ff | 0x400 ∼ 0x4ff |
| 0x500 ∼ 0x5ff | 0x500 ∼ 0x5ff |
| 0x600 ∼ 0x6ff | 0x600 ∼ 0x6ff |
| 0x700 ∼ 0x7ff | 0x700 ∼ 0x7ff |
| 0x800 ∼ 0x8ff | 0x800 ∼ 0x8ff |
| 0x900 ∼ 0x9ff | 0x900 ∼ 0x9ff |
| 0xa00 ∼ 0xaff | 0xa00 ∼ 0xaff |
| 0xb00 ∼ 0xbff | 0xb00 ∼ 0xbff |
| 0xc00 ∼ 0xcff | 0x400 ∼ 0x4ff |
| 0xd00 ∼ 0xdff | 0x500 ∼ 0x5ff |
| 0xe00 ∼ 0xeff | 0x600 ∼ 0x6ff |
| 0xf00 ∼ 0xfff | 0x700 ∼ 0x7ff |

## FIG.13

Transfer chart 1

| Memory 111 | Memory 112 |
|---|---|
| | |
| 111B<br>First channel<br>sub-band signal | 112B<br>Second channel<br>sub-band signal |
| 111A<br>Third channel<br>sub-band signal | 112A<br>Fourth channel<br>sub-band signal |
| | |

121A

First channel
sub-band synthesis
filter data

# FIG.14

Transfer chart 2

| Memory 111 | Memory 112 |
|---|---|
| | |
| 111B<br>First channel<br>sub-band signal | 112B<br>Second channel<br>sub-band signal |
| 111A<br><br>First channel<br>sub-band synthesis<br>filter data | 112A<br>Fourth channel<br>sub-band signal |

First channel
sub-band synthesis
operation

122A

Second channel
sub-band synthesis
filter data

# FIG.15

Transfer chart 3

| Memory 111 | Memory 112 |
|---|---|
| | |
| 111B | 112B<br>Second channel<br>sub-band signal |
| 111A<br><br>First channel<br>sub-band synthesis<br>filter data | 112A<br><br>Second channel<br>sub-band synthesis<br>filter data |
| 123B<br>Third channel<br>sub-band signal | Second channel<br>sub-band synthesis<br>operation |
| 123A<br><br>Third channel<br>sub-band synthesis<br>filter data | |

# FIG.16

Transfer chart 4

| Memory 111 | Memory 112 |
|---|---|
| | |
| 111B<br>Third channel<br>sub-band signal | 112B |
| 111A<br><br>Third channel<br>sub-band synthesis<br>filter data | 112A<br><br>Second channel<br>sub-band synthesis<br>filter data |

| Third channel<br>sub-band synthesis<br>operation | 124B<br>Fourth channel<br>sub-band signal |
|---|---|
| | 124A<br><br>Fourth channel<br>sub-band synthesis<br>filter data |

## FIG.17

Transfer chart 5

| Memory 111 | Memory 112 |
|---|---|
| | |
| 111B | 112B<br>Fourth channel<br>sub-band signal |
| 111A<br><br>Third channel<br>sub-band synthesis<br>filter data | 112A<br><br>Fourth channel<br>sub-band synthesis<br>filter data |

Fourth channel
sub-band synthesis
operation

# FIG.18

Transfer chart 6

| Memory 111 | Memory 112 |
|------------|------------|
|            |            |
| 111B | 112B |
| 111A | 112A<br><br>Fourth channel<br>sub-band synthesis<br>filter data |

# FIG.19

EP 0 880 246 A2

FIG.20

Data transfer controller — 340

341 — Specific data transfer completion detection transmission section

333 — Continuous transfer instruction section

333A — PCM data transfer instruction section

333B — PCM data storage area selection section

333C — Specific data transfer completion detection indication section

338 — Specific data transfer completion detection section

Encoded signal

331 — Sub-band signal generation section

335 — Sub-band signal addition/subtraction section

332 — Sub-band synthesis section

337A — Interleave section / Interleave division section

Division decoding section — 339

336 — Sub-band signal transfer section

334 — Virtual address allocation section

337 — Interleave storage area selection section

337B

EP 0 880 246 A2

## FIG.21

Transfer chart 1

Memory 313

┌─────────────────────────────┐
┆ Third channel sub-band ┆
┆ signal transfer area ┆
└─────────────────────────────┘

Memory 311

| First channel sub-band signal |
| Third channel sub-band signal |

Memory 312

| Second channel sub-band signal |
| Fourth channel sub-band signal |
| Fifth channel sub-band signal. |

┌─────────────────────────────┐
┆ Third channel sub-band ┆
┆ signal transfer area ┆
└─────────────────────────────┘

## FIG.22

Transfer chart 2

```
┌─────────────────────────────────────────────────────────┐
│  ┌───────────────────────────────────────────────────┐   │
│  │ Memory 313                                        │   │
│  │                        ┌─────────────────────────┐ │   │
│  │                        │  Second half of third   │ │   │
│  │                        │ channel sub-band signal │ │   │
│  │                        └─────────────────────────┘ │   │
│  ├─────────────────────────┬─────────────────────────┤   │
│  │ Memory 311              │ Memory 312              │   │
│  │  ┌──────────────────┐   │  ┌───────────────────┐  │   │
│  │  │   First channel  │   │  │  Second channel   │  │   │
│  │  │  sub-band signal │   │  │  sub-band signal  │  │   │
│  │  └──────────────────┘   │  ├───────────────────┤  │   │
│  │                         │  │  Fourth channel   │  │   │
│  │                         │  │  sub-band signal  │  │   │
│  │                         │  ├───────────────────┤  │   │
│  │                         │  │   Fifth channel   │  │   │
│  │                         │  │  sub-band signal  │  │   │
│  │                         │  ├───────────────────┤  │   │
│  │                         │  │  First half of third │ │ │
│  │                  ▲      │  │ channel sub-band signal│ │ │
│  └──────────────────│──────┴─────────────────────────┘   │
│     ┌───────────────│──────┐                             │
│     │   First channel      │                             │
│     │ sub-band synthesis   │                             │
│     │    filter data       │                             │
│     └──────────────────────┘                             │
└─────────────────────────────────────────────────────────┘
```

# FIG.23

Transfer chart 3

**Memory 313**

| Second half of third channel sub-band signal |

**Memory 311**

| First channel sub-band signal |

| First channel sub-band synthesis filter data |

**Memory 312**

| Second channel sub-band signal |

| Fourth channel sub-band signal |

| Fifth channel sub-band signal |

| First half of third channel sub-band signal |

| Second channel sub-band synthesis filter data |

## FIG.24

Transfer chart 4

Memory 313

Second half of third channel sub-band signal

Memory 311

First channel PCM data

First channel sub-band synthesis filter data

Memory 312

Second channel sub-band signal

Second channel sub-band synthesis filter data

## FIG.25

Transfer chart 5

```
┌─────────────────────────────────────────────────┐
│  ┌───────────────────────────────────────────┐  │
│  │ Memory 313                                │  │
│  │                                           │  │
│  │                                           │  │
│  ├──────────────────────┬────────────────────┤  │
│  │ Memory 311           │ Memory 312         │  │
│  │ ┌──────────────────┐ │ ┌────────────────┐ │  │
│  │ │First channel PCM │ │ │                │ │  │
│  │ │     data         │ │ │ Second channel │ │  │
│  │ ├──────────────────┤ │ │ sub-band signal│ │  │
│  │ │ Second half of   │ │ │                │ │  │
│  │ │ third channel    │ │ └────────────────┘ │  │
│  │ │ sub-band signal  │ │                    │  │
│  │ └──────────────────┘ │                    │  │
│  │ ┌──────────────────┐ │ ┌────────────────┐ │  │
│  │ │                  │ │ │                │ │  │
│  │ │  First channel   │ │ │ Second channel │ │  │
│  │ │  sub-band        │ │ │ sub-band       │ │  │
│  │ │  synthesis       │ │ │ synthesis      │ │  │
│  │ │  filter data     │ │ │ filter data    │ │  │
│  │ │                  │ │ │                │ │  │
│  │ └────────┬─────────┘ │ └────────────────┘ │  │
│  └──────────┼───────────┴──────────▲─────────┘  │
│             │                      │            │
│  ┌──────────▼──────────────────────┐            │
│  │ First half of third             │            │
│  │ channel sub-band signal         │            │
│  └─────────────────────────────────┘            │
│  ┌─────────────────────────────────┐            │
│  │                                 │            │
│  │  Third channel                  │            │
│  │  sub-band synthesis             │            │
│  │  filter data                    │            │
│  │                                 │            │
│  └─────────────────────────────────┘            │
└─────────────────────────────────────────────────┘
```

# FIG.26

Transfer chart 6

Memory 313

Memory 311

Third channel
sub–band signal

Third channel
sub–band synthesis
filter data

Memory 312

Second channel PCM data

Second channel
sub–band synthesis
filter data

Fourth channel
sub–band signal

Fourth channel
sub–band synthesis
filter data

## FIG.27

Transfer chart 7

Memory 313

Memory 311

Third channel PCM data

Third channel
sub-band synthesis
filter data

Memory 312

Fourth channel
sub-band signal

Fourth channel
sub-band synthesis
filter data

Fifth channel
sub-band signal

Fifth channel
sub-band synthesis
filter data

## FIG.28

Transfer chart 8

| Memory 313 |
| --- |

| Memory 311 | Memory 312 |
| --- | --- |
| Fifth channel sub-band signal | Fourth channel PCM data |
| Fifth channel sub-band synthesis filter data | Fourth channel sub-band synthesis filter data |

First channel PCM data

Second channel PCM data

Third channel PCM data

## FIG.29

Transfer chart 9

```
Memory 313




  ┌─────────────────────────┬───────────────────────────┐
  │ Memory 311              │ Memory 312                │
  │                         │                           │
  │  ┌───────────────────┐  │  ┌─────────────────────┐  │
  │  │ Fifth channel PCM data │ │ Fourth channel PCM data │
  │  └───────────────────┘  │  ├─────────────────────┤  │
  │                         │  │ First channel PCM data │
  │  ┌───────────────────┐  │  ├─────────────────────┤  │
  │  │ First transfer portion of │ Second channel PCM data │
  │  │ fifth channel sub-band │ ├─────────────────────┤  │
  │  │ synthesis filter data │ │ Third channel PCM data │
  │  ├───────────────────┤  │  ┌─ ─ ─ ─ ─ ─ ─ ─ ─ ─┐  │
  │  │ Second transfer portion of │   First half of      │
  │  │ fifth channel sub-band │  │  interleaved data    │  │
  │  │ synthesis filter data │  └ ─ ─ ─ ─ ─ ─ ─ ─ ─ ┘  │
  │  └───────────────────┘  │                           │
  └─────────────────────────┴───────────────────────────┘
```

# FIG.30

Transfer chart 10

| Memory 313 |
|---|

| Memory 311 | Memory 312 |
|---|---|
| Fifth channel PCM data | Fourth channel PCM data |
| Second half of interleaved data | First channel PCM data |
| | Second channel PCM data |
| | Third channel PCM data |
| Second transfer portion of fifth channel sub-band synthesis filter data | First half of interleaved data |

## FIG.31

Transfer chart 11

Memory 313

Memory 311

Memory 312

Second half of
interleaved data

Second transfer portion of
fifth channel sub-band
synthesis filter data

First half of
interleaved data

## FIG.32

Transfer chart 12

| Memory 313 |  |
| Memory 311 | Memory 312 |
| | Second half of interleaved data |
| | First half of interleaved data |

## FIG.33

Transfer chart 1

Memory 313

Third channel sub-band
signal transfer area

Memory 311

First channel
sub-band signal

Third channel
sub-band signal

Memory 312

Second channel
sub-band signal

Fourth channel
sub-band signal

Third channel sub-band
signal transfer area

# FIG.34

Transfer chart 2

Memory 313

Second half of third
channel sub-band signal

Memory 311

First channel
sub-band signal

Memory 312

Second channel
sub-band signal

Fourth channel
sub-band signal

First half of third
channel sub-band signal

First channel
sub-band synthesis
filter data

## FIG.35

Transfer chart 3

Memory 313

Second half of third channel sub-band signal

Memory 311

First channel sub-band signal

First channel sub-band synthesis filter data

Memory 312

Second channel sub-band signal

Fourth channel sub-band signal

First half of third channel sub-band signal

Second channel sub-band synthesis filter data

## FIG.36

Transfer chart 4

Memory 313

Second half of third channel sub-band signal

Memory 311

First channel PCM data

First channel sub-band synthesis filter data

Memory 312

Second channel sub-band signal

Second channel sub-band synthesis filter data

# FIG.37

Transfer chart 5

Memory 313

Memory 311

First channel PCM data

Second half of third channel sub-band signal

First channel sub-band synthesis filter data

Memory 312

Second channel sub-band signal

Second channel sub-band synthesis filter data

First half of third channel sub-band signal

Third channel sub-band synthesis filter data

*FIG.38*

Transfer chart 6

| Memory 313 | |
| --- | --- |
| **Memory 311** | **Memory 312** |
| Third channel sub-band signal | Second channel PCM data |
| Third channel sub-band synthesis filter data | Second channel sub-band synthesis filter data |

Fourth channel sub-band signal

Fourth channel sub-band synthesis filter data

# FIG.39

Transfer chart 7

Memory 313

Memory 311

Third channel PCM data

Third channel
sub-band synthesis
filter data

Memory 312

Fourth channel
sub-band signal

Fourth channel
sub-band synthesis
filter data

First channel PCM data

Second channel PCM data

## FIG.40

Transfer chart 8

```
┌─────────────────────────────────────────────────────────────┐
│ ┌─────────────────────────────────────────────────────────┐ │
│ │ Memory 313                                              │ │
│ │                                                         │ │
│ │                                                         │ │
│ ├──────────────────────────┬──────────────────────────────┤ │
│ │ Memory 311               │ Memory 312                   │ │
│ │ ┌──────────────────────┐ │ ┌────────────────────────┐   │ │
│ │ │ Third channel PCM data│ │ │ Fourth channel PCM data│   │ │
│ │ ├──────────────────────┤ │ └────────────────────────┘   │ │
│ │ │ First channel PCM data│ │                              │ │
│ │ ├──────────────────────┤ │ ┌────────────────────────┐   │ │
│ │ │Second channel PCM data│ │ │First transfer portion of│  │ │
│ │ └──────────────────────┘ │ │fourth channel sub-band  │  │ │
│ │                          │ │synthesis filter data    │  │ │
│ │ ┌ ─ ─ ─ ─ ─ ─ ─ ─ ─ ─┐ │ ├────────────────────────┤   │ │
│ │ │                      │ │ │Second transfer portion of│ │ │
│ │ │  First half of       │ │ │fourth channel sub-band  │  │ │
│ │ │  interleaved data    │ │ │synthesis filter data    │  │ │
│ │ └ ─ ─ ─ ─ ─ ─ ─ ─ ─ ─┘ │ └───────────┬────────────┘   │ │
│ └──────────────────────────┴─────────────┼────────────────┘ │
│                                           ▼                  │
│                                                              │
└──────────────────────────────────────────────────────────────┘
```

## FIG.41

Transfer chart 9

Memory 313

Memory 311

| Third channel PCM data |
| First channel PCM data |
| Second channel PCM data |

First half of
interleaved data

Memory 312

| Fourth channel PCM data |

Second half of
interleaved data

Second transfer portion of
fourth channel sub-band
synthesis filter data

## FIG.42

Transfer chart 10

Memory 313

Memory 311

Memory 312

Second half of
interleaved data

First half of
interleaved data

# FIG.43

Transfer chart 11

Memory 313

Memory 311

Memory 312

Second half of
interleaved data

First half of
interleaved data

*FIG.44*

Decoding circuit

Output buffer

Output circuit

*PRIOR ART*

*FIG.45*

EP 0 880 246 A2

*PRIOR ART*